(19) Europäisches Patentamt
European Patent Office
Office européen des brevets

(11) EP 4 661 499 A1

(12) EUROPEAN PATENT APPLICATION
published in accordance with Art. 153(4) EPC

(43) Date of publication:
10.12.2025 Bulletin 2025/50

(51) International Patent Classification (IPC):
*H04W 36/08* (2009.01)

(21) Application number: 23918997.0

(52) Cooperative Patent Classification (CPC):
H04W 36/08

(22) Date of filing: 31.01.2023

(86) International application number:
PCT/CN2023/074022

(87) International publication number:
WO 2024/159417 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: GUANGDONG OPPO MOBILE
TELECOMMUNICATIONS
CORP., LTD.
Dongguan, Guangdong 523860 (CN)

(72) Inventors:
• FU, Zhe
  Dongguan, Guangdong 523860 (CN)
• HU, Yi
  Dongguan, Guangdong 523860 (CN)

(74) Representative: Taor, Simon Edward William
Venner Shipley LLP
200 Aldersgate
London EC1A 4HD (GB)

(54) **WIRELESS COMMUNICATION METHOD AND APPARATUS, AND TERMINAL DEVICE AND BASE STATION**

(57)    Provided in the embodiments of the present application are a wireless communication method and apparatus, and a terminal device and a base station. The method comprises: a terminal device receiving handover configuration information, which comprises a handover configuration and/or a condition that the terminal device needs to satisfy to perform cell handover.

Operations 110 and 120: HO configuration information, including an HO configuration and/or a condition that the terminal device is required to meet to perform cell HO

**FIG. 3**

**Description**

TECHNICAL FIELD

Embodiments of the disclosure relate to the technical field of mobile communications, and in particular to, a method and apparatus for wireless communication, a terminal device, and a base station.

BACKGROUND

In a communication system, a network maintains continuity of a communication service of a terminal device through a handover (HO) process, that is, a communication message of the terminal device is handed over from a source base station to a target base station as smooth as possible. During cell HO, the terminal device immediately executes an HO command after receiving the HO command, and only sends a response message to the target base station after the HO is completed. Furthermore, the network may send paging to a terminal device in an idle or inactive state, to notify the terminal device to receive a paging message. How the terminal device flexibly performs the cell HO, access control, and paging monitoring has been a problem that has caused concern all along.

SUMMARY

Embodiments of the disclosure provide a method and apparatus for wireless communication, a terminal device, and a base station.

According to a first aspect, there is provided a method for wireless communication, the method includes the following operations.

A terminal device receives HO configuration information, where the HO configuration information includes an HO configuration and/or a condition that the terminal device is required to meet to perform cell HO.

According to a second aspect, there is provided a method for wireless communication, the method includes the following operations.

A terminal device performs at least one of cell access, access permission, cell selection, or cell reselection according to fifth indication information.

According to a third aspect, there is provided a method for wireless communication, the method includes the following operations.

A terminal device receives first paging configuration information, where the first paging configuration information is used by a first terminal device to determine a first paging position.

According to a fourth aspect, there is provided a method for wireless communication, the method includes the following operations.

A source base station or a source cell sends HO configuration information, where the HO configuration information includes an HO configuration and/or a condition that a terminal device is required to meet to perform cell HO.

According to a fifth aspect, there is provided a method for wireless communication, the method includes the following operations.

A base station sends fifth indication information to a terminal device, where the fifth indication information is used by the terminal device to perform at least one of cell access, access permission, cell selection, or cell reselection.

According to a sixth aspect, there is provided a method for wireless communication, the method includes the following operations.

A base station sends first paging configuration information, where the first paging configuration information is used by a first terminal device to determine a first paging position.

According to a seventh aspect, there is provided an apparatus for wireless communication, the apparatus is applied to a terminal device, and includes a receiving unit.

The receiving unit is configured to receive HO configuration information, where the HO configuration information includes an HO configuration and/or a condition that the terminal device is required to meet to perform cell HO.

According to an eighth aspect, there is provided an apparatus for wireless communication, the apparatus is applied to a terminal device, and includes a processing unit.

The processing unit is configured to perform at least one of cell access, access permission, cell selection, or cell reselection according to fifth indication information.

According to a ninth aspect, there is provided an apparatus for wireless communication, the apparatus is applied to a terminal device, and includes a receiving unit.

The receiving unit is configured to receive first paging configuration information, where the first paging configuration information is used by a first terminal device to determine a first paging position.

According to a tenth aspect, there is provided an apparatus for wireless communication, the apparatus is applied to a base station, and includes a sending unit.

The sending unit is configured to send HO configuration information, where the HO configuration information includes an HO configuration and/or a condition that a terminal device is required to meet to perform cell HO.

According to an eleventh aspect, there is provided an apparatus for wireless communication, the apparatus is applied to a base station, and includes a sending unit.

The sending unit is configured to send fifth indication information to a terminal device, where the fifth indication information is used by the terminal device to perform at least one of cell access, access permission, cell selection, or cell reselection.

According to a twelfth aspect, there is provided an apparatus for wireless communication, the apparatus is applied to a base station, and includes a sending unit.

The sending unit is configured to send first paging configuration information, where the first paging configuration information is used by a first terminal device to determine a first paging position.

According to a thirteenth aspect, an embodiment of the disclosure provides a terminal device, the terminal device includes a processor and a memory. The memory is configured to store a computer program, and the processor is configured to call and run the computer program stored in the memory, to perform the method for wireless communication described in the above first aspect, the above second aspect or the above third aspect.

According to a fourteenth aspect, an embodiment of the disclosure provides a base station, the base station includes a processor and a memory. The memory is configured to store a computer program, and the processor is configured to call and run the computer program stored in the memory, to perform the method for wireless communication described in the above tenth aspect, the above fifth aspect or the above sixth aspect.

An embodiment of the disclosure provides a chip, which is configured to implement the above method for information processing.

Specifically, the chip includes a processor, the processor is configured to call and run a computer program from a memory, to enable a device mounted with the chip to perform the above method for wireless communication.

An embodiment of the disclosure provides a computer-readable storage medium, which is configured to store a computer program that enables a computer to perform the above method for wireless communication.

An embodiment of the disclosure provides a computer program product, which includes computer program instructions that enable a computer to perform the above method for wireless communication.

An embodiment of the disclosure provides a computer program, which enables a computer to perform the above method for wireless communication when it is run on the computer.

BRIEF DESCRIPTION OF THE DRAWINGS

The drawings described here are intended to provide further understanding of the disclosure, and constitute a part of the disclosure. Exemplary embodiments of the disclosure and descriptions thereof are intended to explain the disclosure, and do not constitute undue limitation on the disclosure. In the drawings:

FIG. 1 is a schematic architecture diagram of a communication network provided in an embodiment of the disclosure;
FIG. 2 is a schematic flowchart of Conditional Handover (CHO) provided in an embodiment of the disclosure;
FIG. 3 is a schematic flowchart of a method for wireless communication provided in an embodiment of the disclosure;
FIG. 4 is a first schematic diagram of an application scenario provided in an embodiment of the disclosure;
FIG. 5 is a second schematic diagram of an application scenario provided in an embodiment of the disclosure;
FIG. 6 is a third schematic diagram of an application scenario provided in an embodiment of the disclosure;
FIG. 7 is a first schematic diagram of a first cycle provided in an embodiment of the disclosure;
FIG. 8 is a second schematic diagram of a first cycle provided in an embodiment of the disclosure;
FIG. 9 is a first schematic structural diagram of an apparatus for wireless communication provided in an embodiment of the disclosure;
FIG. 10 is a second schematic structural diagram of an apparatus for wireless communication provided in an embodiment of the disclosure;
FIG. 11 is a schematic structural diagram of a communication device according to an embodiment of the disclosure;
FIG. 12 is a schematic structural diagram of a chip according to an embodiment of the disclosure; and
FIG. 13 is a schematic block diagram of a communication system provided in an embodiment of the disclosure.

DETAILED DESCRIPTION

Technical solutions in the embodiments of the disclosure will be described below with reference to the drawings in the embodiments of the disclosure. It is apparent that the described embodiments are part of the embodiments of the disclosure, rather than all of the embodiments. Based on the embodiments in the disclosure, all other embodiments obtained by those of ordinary skill in the art without paying any creative work belong to the scope of protection of the disclosure.

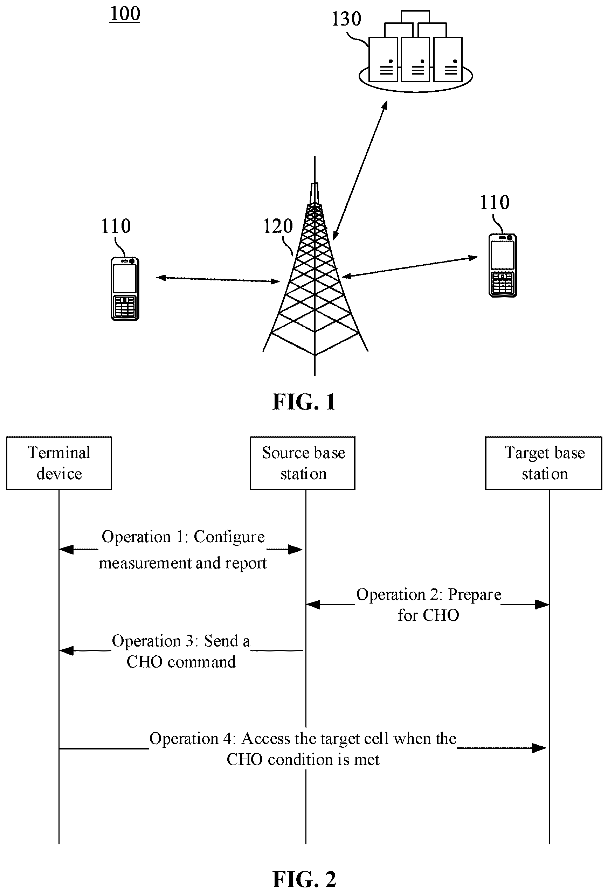

FIG. 1 is a schematic diagram of an application scenario according to an embodiment of the disclosure.

As shown in FIG. 1, a communication system 100 may include terminal devices 110 and a network device 120. The network device 120 may communicate with the terminal devices 110 through air interfaces. The terminal devices 110 and the network device 120 support multi-service transmission there-between.

It should be understood that the embodiments of the disclosure are only exemplified by the communication system 100, however, the embodiments of the disclosure are not limited thereto. That is, the technical solutions in the embodiments of the disclosure may be applied to various communication systems, such as a Long Term Evolution (LTE) system, an LTE Time Division Duplex (TDD) system, a Universal Mobile Telecommunication System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), or a future communication system, etc.

In the communication system 100 shown in FIG. 1, the network device 120 may be an access network device that communicates with the terminal devices 110. The access network device may provide communication coverage for a specific geographical area, and may communicate with the terminal devices 110 (such as User Equipment (UE)) located in the coverage area.

The network device 120 may be an Evolutional Node B (eNB or eNodeB) in an LTE system, or a Next Generation Radio Access Network (NG RAN) device, or a base station (a next generation NodeB (gNB)) in an NR system, or a wireless controller in a Cloud Radio Access Network (CRAN); or, the network device 120 may be a relay station, an access point, a vehicle device, a wearable device, a hub, a switch, a network bridge, a router, or a network device in a future evolved Public Land Mobile Network (PLMN), etc.

The terminal device 110 may be any terminal device, including but not limited to a terminal device connected to the network device 120 or other terminal devices through a wired or wireless connection.

For example, the terminal device 110 may refer to an access terminal, UE, a user unit, a user station, a mobile station, a mobile radio station, a remote station, a remote terminal, a mobile device, a user terminal, a terminal, a wireless communication device, a user agent or a user device. The access terminal may be a cellphone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device, another processing device connected to a wireless modem, a vehicle device, a wearable device, a terminal in a 5G network, or a terminal device in a future evolved network, etc.

The terminal device 110 may be used for Device to Device (D2D) communication.

The wireless communication system 100 may further include a core network device 130 that communicates with the network device 120, the core network device 130 may be a 5G Core (5GC) device, for example, an Access and Mobility Management Function (AMF), and for another example, an Authentication Server Function (AUSF), and for another example, a User Plane Function (UPF), and for another example, a Session Management Function (SMF). Optionally, the core network device 130 may also be an Evolved Packet Core (EPC) device of an LTE network, such as a Session Management Function + Core Packet Gateway (SMF + PGW-C) device. It should be understood that SMF + PGW-C may simultaneously implement functions that SMF and PGW-C may implement. In a process of network evolution, the above core network device may also be referred by other names, or a new network entity may be formed by dividing functions of the core network, which is not limited in the embodiments of the disclosure.

Various functional units in the communication system 100 may also establish connections there-between through a next generation (NG) network interface, to implement communication.

For example, the terminal device establishes an air interface connection with the access network device through an NR interface, to transmit user plane data and control plane signaling; the terminal device may establish a control plane signaling connection with the AMF through an NG interface 1 (abbreviated as N1); the access network device, such as an NG wireless access base station (gNB), may establish a user plane data connection with the UPF through an NG interface 3 (abbreviated as N3); the access network device may establish a control plane signaling connection with the AMF through an NG interface 2 (abbreviated as N2); the UPF may establish a control plane signaling connection with the SMF through an NG interface 4 (abbreviated as N4); the UPF may exchange user plane data with a data network through an NG interface 6 (abbreviated as N6); the AMF may establish a control plane signaling connection with the SMF through an NG interface 11 (abbreviated as N11); the SMF may establish a control plane signaling connection with a Packet Control Function (PCF) through an NG interface 7 (abbreviated as N7).

One base station, one core network device and two terminal devices are exemplarily shown in FIG. 1. Optionally, the wireless communication system 100 may include multiple base stations, and another number of terminal devices may be included in the coverage of each base station, which is not limited in the embodiments of the disclosure.

It should be noted that FIG. 1 only shows the system to which the disclosure is applicable by way of example. Of course, methods shown in the embodiments of the disclosure may also be applicable to other systems. Furthermore, terms "system" and "network" in the disclosure may usually be used interchangeably. In the disclosure, term "and/or" is only an association relationship describing associated objects, and represents that three relationships may exist. For example, A and/or B may represent three conditions: i.e., independent existence of A, existence of both A and B, and independent existence of B. Furthermore, character "/" in the disclosure usually represents that anterior and posterior associated objects form an "or" relationship. It should also be understood that "indicate" mentioned in the embodiments of the disclosure may be a direct indication or an indirect indication, or may represent existence of an association relationship. For example, A indicates B, which may represent that A directly indicates B, for example, B may be obtained through A; or may represent that A indirectly indicates B, for example, A indicates C, B may be obtained through C; or may represent that A and B have an association relationship there-between. It should also be understood that "correspond" mentioned in the embodiments of the disclosure may represent that there is a direct or indirect correspondence between two objects, or may represent that there is an association relationship between two objects, or may represent an indicating and indicated relationship, a configuring and configured relationship, etc. It should also be understood that "predefined" or "predefined rule" mentioned in the embodiments of the disclosure may be implemented by pre-saving corresponding codes, tables or other modes that may be configured to indicate relevant information, in a device (for example, including the terminal device and the network device), and specific implementation thereof is not limited in the disclosure. For example, "predefined" may refer to "defined" in a protocol. It should also be understood that in the embodiments of the disclosure, the "protocol" may refer to a standard protocol in the field of communications, for example, may include an LTE protocol, an NR protocol, and relevant protocols applied to future communication systems, which is not limited in the disclosure. It should also be understood that in descriptions of the disclosure, "multiple" means two or more, unless otherwise defined clearly and specifically.

In order to facilitate understanding the technical solutions in the embodiments of the disclosure, relevant technologies of the embodiments of the disclosure will be described below. The following relevant technologies may be arbitrarily combined with the technical solutions in the embodiments of the disclosure as optional solutions, and all of them belong to the scope of protection of the embodiments of the disclosure.

1. Radio Resource Control (RRC) state in NR

In a 5G network environment, for the purpose of reducing air interface signaling and quickly restoring wireless connections and data services, a new RRC state, i.e., a RRC inactive (RRC_INACTIVE) state is defined. This state is different from a RRC idle (RRC_IDLE) state and a RRC connected (RRC_CONNECTED) state.

RRC_IDLE state: mobility is based on cell selection and reselection of the terminal device, paging is initiated by the core network, and a paging area is configured by the core network. There is no Access Stratum (AS) context of the terminal device in the access network, and there is no RRC connection.

RRC_CONNECTED state: an RRC connection is present between the terminal device and the access network, and an AS context is present between the terminal device and the access network. The core network knows that position of the terminal device is at a specific cell level. Unicast data may be transmitted between the terminal device and the access network.

RRC_INACTIVE: mobility is based on cell selection and reselection of the terminal device, the AS context of the terminal device is present on a certain base station, paging is triggered by the access network (a Radio Access Network (RAN)), a RAN-based paging area is managed by the RAN, and the network side knows that position of the terminal device is at a RAN-based paging area level.

2. Conditional Handover (CHO) process

As to a problem that handover (HO) is performed frequently and the HO easily fails in a high-speed mobility scenario and a high-frequency deployment scenario, the 3rd Generation Partnership Project (3GPP) introduced a CHO process for LTE and NR systems in a standardization process Release-16 (Rel-16).

With reference to FIG. 2, the CHO process includes the following operations 1 to 4.

Operation 1: configure measurement and report.

A source base station configures the terminal device to perform measurement, and the terminal device measures surrounding cells and reports a measurement report.

Operation 2: prepare for CHO.

If the source base station determines to use the CHO, the source base station sends a CHO request to a candidate target cell that meets a condition according to the measurement report, and if the candidate target cell agrees on HO, the candidate target cell feeds back a confirmation message to the source base station.

Operation 3: the source base station sends a CHO command to the terminal device.

Multiple candidate target cells may be configured in the CHO command, and a CHO execution condition may be configured for each candidate target cell respectively.

It should be noted that the CHO execution condition for each candidate target cell may include one or two triggering events. The triggering events that may be used for the CHO execution condition in Rel-16 may include an event A3 and an event A5. Release-17 (Rel-17) has agreed that an event A4 may also be used as a triggering event in the CHO execution condition, in a Non-terrestrial Network (NTN) system. The terminal device determines to access which target cell based on the configured CHO execution condition.

At present, measurement events supported in NR may include the following events A1 to A6 and B1 to B2.

Event A1: signal quality of a serving cell is higher than a threshold.

Event A2: the signal quality of the serving cell is lower than a threshold.

Event A3: signal quality of an adjacent cell is higher than signal quality of a Special Cell (SpCell) by a threshold, where the SpCell includes a Primary Cell (PCell) and a Primary Secondary Cell (PSCell).

Event A4: the signal quality of the adjacent cell is higher than a threshold.

Event A5: the signal quality of the SpCell is lower than a threshold 1, and the signal quality of the adjacent cell is higher than a threshold 2.

Event A6: the signal quality of the adjacent cell is higher than signal quality of a Secondary Cell (SCell) by a threshold.

Event B1: signal quality of an adjacent cell with a dissimilar technology is higher than a threshold.

Event B2: signal quality of the PCell is lower than a threshold 1, and the signal quality of the adjacent cell with dissimilar technology is higher than a threshold 2.

Operation 4: access the target cell when the CHO condition is met.

The terminal device may evaluate HO execution conditions related to the candidate target cells. When the HO execution condition for a certain candidate target cell is met, handing over to the target cell is performed (that is, a random access process is triggered, and an HO completion message is sent), to avoid a problem that there is not enough time or it is unable to send measurement reports and receive an HO command due to moving into a poor coverage area at a high speed.

3. Conditional PSCell Change (CPC)

As to a problem that PSCell change is performed frequently in the high-speed mobility scenario and the high-frequency deployment scenario, 3GPP introduced a CPC process for LTE and NR systems in Rel-16. A basic principle thereof is that the source base station allocates a target cell to the terminal device in advance, in which a condition for triggering the terminal device to perform the PSCell change is contained.

The terminal device may perform evaluation according to the condition configured by the source base station. When the configured condition is met, the terminal device initiates the PSCell change, to avoid a problem that there is not enough time or it is unable to send measurement reports and receive a PSCell change command due to moving into a poor coverage area at a high speed.

Similar to CHO, for CPC, the network may configure multiple candidate target cells for the terminal device, and may configure a CPC execution condition for each candidate target cell respectively. The CPC execution condition for each candidate target cell may include one or two triggering events. The events that may be used for CPC in Rel-16 may include an event A3 and an event A5. The terminal device may determine to access which target cell based on the configured CPC execution condition.

4. 5G NR paging mechanism

A main function of paging is to enable the network to page the terminal device through a paging message when the terminal device is in the RRC_IDLE state or the RRC_INACTIVE state, or to notify, through a short message, the terminal device of changes of system messages or earthquake, tsunami/public early-warning information (applicable to all RRC states of the terminal device, including the connected state).

Paging channels may include a Physical Downlink Control Channel (PDCCH) scrambled by a paging Radio Network Temporary Identifier (RNTI) and a Physical Downlink Shared Channel (PDSCH) scheduled by the PDCCH. The paging message is transmitted in the PDSCH, and the short message has 8 bits and is in the PDCCH.

For the terminal device in the RRC_IDLE state or the RRC_INACTIVE state, since there is no other data communication between the terminal device and the network, in order to save power consumption, the terminal device may monitor the paging channel discontinuously, that is, adopt a paging Discontinuous Reception (DRX) mechanism. With the paging DRX mechanism, the terminal device only needs to monitor the paging channel in a Paging Occasion (PO) in each DRX cycle. The PO is a series of PDCCH monitoring occasions and it may be composed of multiple slots.

Optionally, the terminal device may calculate a System Frame Number SFN of a Paging Frame (PF) according to formula (1) first, and the PF may include multiple POs or starting positions of multiple POs.

$$(SFN + PF\_offset) \bmod T = (T \text{ div } N)*(UE\_ID \bmod N) \qquad (1)$$

Here PF_offset is an offset parameter of the PF, T is the DRX cycle, N is a total number of PFs in one DRX cycle, and UE_ID may be determined according to a Temporary Mobile Subscriber Identifier (TMSI) of the terminal device (UE), for example, UE_ID may be 5G-S-TMSI mod 1024.

Further, the terminal device may determine an index value i_s of the PO in the PF according to formula (2).

$$i\_s = \text{floor}(UE\_ID/N) \bmod Ns \qquad (2)$$

Here Ns is a number of POs included in one PF.

The terminal device may determine position of the PF and the index value of the PO in each paging DRX cycle according to the above formula (1) and formula (2). It should be understood that the PO may be composed of multiple PDCCH monitoring occasions, and one PO may include X PDCCH monitoring occasions, where X is equal to a number of actual transmissions of a Synchronization Signal Block (SSB) broadcast in a Master Information Block (MIB).

After determining the PF, the index value of the PO, and a number of PDCCH monitoring occasions in the PO, the terminal device only needs to know a starting position of a first PDCCH monitoring occasion of the PO through relevant configuration parameters, this starting position may be configured through high-level signaling or obtained based on a PO index. The terminal device may blindly detect the paging message according to the determined PO.

With the growth of the number of communication devices and the growth of users' demands on multiple high-quality services, energy consumption has become an important part of operator's operating cost. At present, energy cost of the communication network accounts for about 23% of the operator's total cost. Most of the energy consumption comes from the wireless access network, especially an Active Antenna Unit (AAU), while data centers and optical fiber transmission only account for a small share.

There are two types of power consumption included in the communication network.

Dynamic part: include power consumption during data transmission/reception;
Static portion: include consumption for maintaining required operations of wireless access devices, even when there is no continuous data transmission/reception at this time.

Current energy-saving technologies are usually directed to the terminal device, and do not consider a problem of energy saving of the network. Furthermore, specific details and impacts of relevant technologies for energy saving of the network have not been studied and discussed. Based on this, the embodiments of the disclosure discuss the problem of energy saving of the network from aspects such as cell HO, access control, paging monitoring, etc.

It should be noted that methods or embodiments mentioned in this application document may be implemented separately, part of the methods or part of the embodiments may be implemented in combination, or all of the methods or embodiments may be implemented in combination, which is not limited in the disclosure.

First embodiment

This embodiment introduces relevant processes of cell HO in detail.

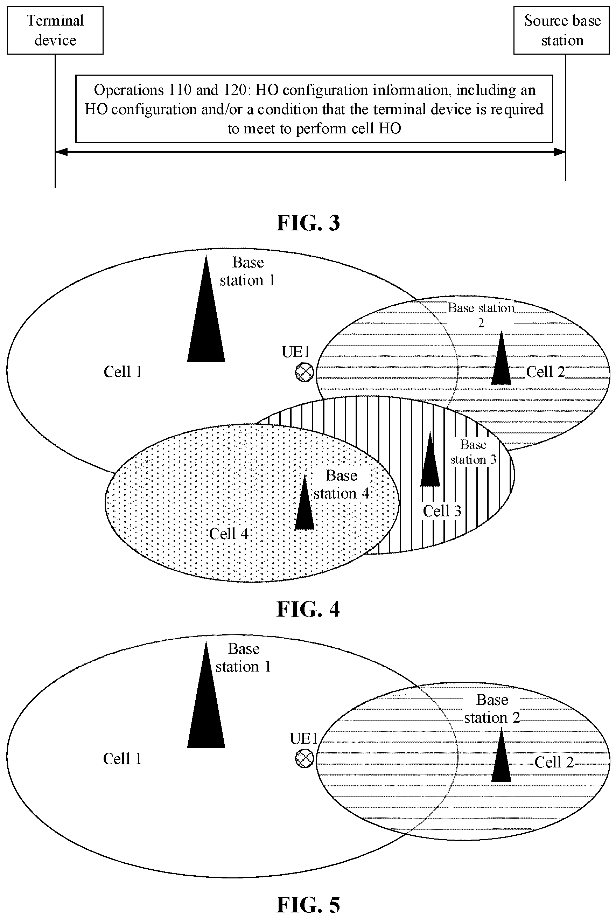

An embodiment of the disclosure provides a method for wireless communication. With reference to FIG. 3, the method for wireless communication may include the following operations 110 and 120.

In operation 110, a source base station or a source cell sends HO configuration information.

In operation 120, a terminal device receives the HO configuration information, where the HO configuration information includes an HO configuration and/or a condition that the terminal device is required to meet to perform cell HO.

Optionally, the above terminal device may be a terminal device that establishes a connection or has data transmission in the source base station or the source cell.

Optionally, the source base station or the source cell sends the HO configuration information to the terminal device.

Optionally, the terminal device may receive the HO configuration information from the source base station or the source cell.

Optionally, the source base station or the source cell may also send the HO configuration information to other terminal device(s), such that other terminal device(s) may forward the HO configuration information to the terminal device, which is not limited in the embodiments of the disclosure.

Optionally, the source base station or the source cell may send the above HO configuration information to the terminal device through group signaling or a dedicated message. Exemplarily, the group signaling may include group Downlink Control Information (DCI), a group Media Access Control (MAC) Control Element (CE) message, a group RRC message, multicast information or the like, which is not limited in the embodiments of the disclosure. The dedicated message may include RRC dedicated signaling, that is, the above HO configuration information may be configured through the RRC dedicated signaling.

In some embodiments, the terminal device may perform HO according to the HO configuration information, where the HO configuration information includes the HO configuration and/or the condition that the terminal device is required to meet to perform cell HO.

Optionally, the HO configuration in the above HO configuration information may be HO configurations of one or more candidate target cells, and the HO configuration information may include relevant configuration information of the one or more candidate target cells. Exemplarily, the HO configuration information may include Physical Cell Identifier (PCI) information of the one or more candidate target cells, frequency points corresponding to the candidate target cells, cell RNTI allocated by the candidate target cells to the terminal device, Random Access Channel (RACH) resource information required to access a candidate cell (the RACH resource information required to access the candidate cell may include dedicated RACH resource information and/or common RACH resource information, etc.), index values of the candidate target cells, etc. Of course, in some other embodiments, the configuration information of the candidate target cells may further include other information that are not mentioned, which is not limited in the embodiments of the disclosure.

It should be noted that the above configuration information of the one or more candidate target cells may be generated by each candidate target cell. Each candidate target cell may interact with the source base station or the source cell and provide its own configuration information to the source base station or the source cell, such that the source base station or the source cell may carry the configuration information of each candidate target cell in the HO configuration information.

Furthermore, the condition in the above HO configuration information may be generated by the source base station or the source cell, and sent to the terminal device.

It may be seen that in the embodiment of the disclosure, the source base station or the source cell may configure, for the terminal device, the HO configuration and the condition that the terminal device needs to meet when performing the cell HO. In this way, the terminal device may perform the HO based on the condition before performing the cell HO, thereby improving flexibility of the terminal device in performing the cell HO.

In some embodiments, the condition that the terminal device is required to meet to perform cell HO included in the HO configuration information may be related to one or more of network status, network capability, network type and network energy saving (NES) information.

Optionally, the network status may include an ON state of the network, an energy-saving state of the network, an NES state, etc. It should be noted that when the network is in an OFF state, the energy-saving state or the NES state, the network may stop providing all services to the terminal device, or the network may stop providing unnecessary services to the terminal device, and may only provide some necessary services.

Optionally, the network capability may include a capability of supporting energy saving, a capability of supporting NES, etc. It should be noted that for the network supporting the energy saving or NES capability, the network may stop providing services to the terminal device or stop providing some unnecessary services to the terminal device, when the network is in the energy-saving state or the NES state.

Optionally, the network type may include a protocol version type of the network, an access type of the network, etc. It should be noted that networks with different network types may provide different services to the terminal device.

Optionally, the NES information may include time information about when the network is in the NES state, time information about when the network uses an NES function, or the like, which is not limited in the embodiments of the disclosure.

In some embodiments, the above condition may include: a condition related to network status, network capability, network type and/or NES information of a source base station or a source cell; and/or a condition related to network status, network capability, network type and/or NES information of a target base station or a target cell.

In some embodiments, the condition related to network status, network capability, network type and/or NES information of the source base station or the source cell includes one or more of:

the source base station or the source cell is in an OFF state;
the source base station or the source cell is in the OFF state in part of time;
the source base station or the source cell is switched from an ON state to the OFF state;
the source base station or the source cell is in an NES state;
the source base station or the source cell is about to be in the NES state;
the source base station or the source cell is switched from another state to the NES state;
the source base station or the source cell temporarily postpones leaving the NES state;
the source base station or the source cell supports energy saving or NES;
the source base station or the source cell is an NES base station or an NES cell;
the source base station or the source cell supports or uses cell discontinuous transmission (DTX) or cell discontinuous reception (DRX);
the source base station or the source cell is in a DTX ON state;

the source base station or the source cell is in a DTX OFF state;

the source base station or the source cell is in a DRX ON state;

the source base station or the source cell is in a DRX OFF state;

part of information of the source base station or the source cell is not sent or is carried/sent by other node(s);

e source base station or the source cell is a first type of base station or cell;

the source base station or the source cell is a first base station or a first cell;

the source base station or the source cell is a base station or cell supporting a first protocol version;

the source base station or the source cell is in a first time period; or, the cell HO is triggered in the first time period, or, a time for performing the cell HO or triggering execution of the cell HO includes the first time period, or, a time taken for handing over to the target cell includes the first time period, or, a time where the target cell is used includes the first time period; or, an energy-saving time or unavailable time of the source cell is the first time period;

the source base station or the source cell is in a second time period; or, the cell HO is triggered beyond the second time period, or, a time for performing the cell HO or triggering execution of the cell HO is beyond the second time period, or, a time taken for handing over to the target cell is beyond the second time period, or, a time where the target cell is used is beyond the second time period; or, an energy-saving time or unavailable time of the source cell is beyond the second time period;

the terminal device receives first indication information, where the first indication information is configured to instruct or trigger the terminal device to perform the cell HO; or, the first indication information is configured to instruct or trigger the terminal device to perform HO evaluation; or, the first indication information is configured to instruct the terminal device to perform or trigger HO by using the HO configuration information; or, the first indication information is configured to instruct the terminal device to perform the HO based on pre-configured configuration information of the target cell; or, the first indication information is configured to indicate a condition related to network status, network capability, network type and/or NES information;

the terminal device receives the first indication information, and a channel state between the terminal device and the source base station or the source cell meets a channel condition; and

the terminal device receives the first indication information, and a channel state between the terminal device and the target base station or the target cell meets the channel condition.

It should be noted that the source base station or the source cell may stop providing all or part of services to the terminal device, in any one of the OFF state, the NES state, the DTX ON state, the DTX OFF state, the DRX ON state and the DRX OFF state. Therefore, the network may configure through the HO configuration information that when the source base station or the source cell is in or is about to be in any one of the OFF state, the NES state, the DTX ON state, the DTX OFF state, the DRX ON state and the DRX OFF state, or when the source base station or the source cell is switched from another state to any one of the OFF state, the NES state, the DTX ON state, the DTX OFF state, the DRX ON state and the DRX OFF state, or when the source base station or the source cell temporarily postpones leaving any one of the OFF state, the NES state, the DTX ON state, the DTX OFF state, the DRX ON state and the DRX OFF state, or when the source base station or the source cell supports an OFF capability, an NES capability, a DTX ON capability, a DTX OFF capability, a DRX ON capability and a DRX OFF capability, or when the source base station or the source cell uses an OFF function, an NES function, a DTX ON function, a DTX OFF function, a DRX ON function and a DRX OFF function, the terminal device may be triggered to perform the cell HO.

It is worth noting that the above DTX ON state, DTX OFF state, DRX ON state and DRX OFF state, or the above DTX ON capability, DTX OFF capability, DRX ON capability and DRX OFF capability, or the above DTX ON function, DTX OFF function, DRX ON function and DRX OFF function may be for a cell or a base station.

Optionally, for the case that the source base station or the source cell is about to be in the OFF state, the NES state, the DTX ON state, the DTX OFF state, the DRX ON state or the DRX OFF state, it may mean that the terminal device receives an instruction instructing the source base station or the source cell to enter the OFF state, the NES state, the DTX ON state, the DTX OFF state, the DRX ON state or the DRX OFF state; or, a time length between a current moment and a moment when the source base station or the source cell is converted to the OFF state, the NES state, the DTX ON state, the DTX OFF state, the DRX ON state or the DRX OFF state is less than a certain time length. Similarly, for the case that the base station or the source cell temporarily postpones leaving the OFF state, the NES state, the DTX ON state, the DTX OFF state, the DRX ON state or the DRX OFF state, it may mean that the terminal device receives an instruction to temporarily postpone performing state switching.

Furthermore, the network may also configure that when the source base station or the source cell is the first type of base station or cell, the first base station or the first cell, or supports the first base station or the first cell, a cell HO process of the terminal device is triggered.

Optionally, base stations or cells in the network may be divided into multiple types according to whether they support energy saving, whether they support the NES, or energy-saving technologies supported by them. The first type of base station or cell may be a base station or cell supporting energy saving, the first type of base station or cell may be a base station or cell supporting the NES, or the first type may be a base station or cell supporting a certain or some energy-saving technologies. Exemplarily, the first type may be a base station or cell indicating an NES energy-saving technology.

Optionally, the first base station or the first cell may be a certain/some base stations or cells in the network. For example, the first base station or the first cell may be a base station or cell identified as a specified identifier (ID). When the source base station or the source cell of the terminal device is the first base station or the first cell, the terminal device may be triggered to perform the cell HO.

Optionally, different protocol versions support different functions. For example, a protocol version Release-18 (Rel-18) supports the NES or NES technologies, while protocol versions lower than Rel-18 do not support the NES or NES technologies. The first protocol version may be a protocol version supporting the NES or NES technologies. Exemplarily, the first protocol version may be Rel-18, or a subsequent version of Rel-18. When the source base station or the source cell of the terminal device is a base station or cell supporting the first protocol version, the terminal device may be triggered to perform the cell HO.

It should be noted that the first time period in the embodiment of the disclosure may include one or more of:

a time for triggering the terminal device to perform HO;
a time for the terminal device to perform the HO, or a time taken for handing over to the target cell;
a time period that the source base station or the source cell is in any one of an OFF state, an NES state, a DTX ON state, a DTX OFF state, a DRX ON state and a DRX OFF state;
the first time period includes a time period that the source base station or the source cell uses any one of an NES function, an OFF function, a DTX ON function, a DTX OFF function, a DRX ON function and a DRX OFF function; and
a base station or cell corresponding to the first time period supports or has any one of an NES capability, an OFF capability, a DTX ON capability, a DTX OFF capability, a DRX ON capability and a DRX OFF capability.

Furthermore, the second time period in the embodiment of the disclosure may include one or more of:

a time for the source base station or the source cell to transmit data;
a time for the terminal device and the source base station to maintain connection there-between;
an available time of the source base station or the source cell;
an unavailable time of the target base station or the target cell;
a time beyond the time for triggering the terminal device to perform the HO;
a time beyond the time for the terminal device to perform the HO or a time taken for handing over to the target cell;
a time period that the source base station or the source cell is in any one of an ON state, a non-NES state, a DTX ON state, a DTX OFF state, a DRX ON state and a DRX OFF state;
a time period that the source base station or the source cell uses any one of an ON function, a non-NES function, a DTX ON function, a DTX OFF function, a DRX ON function and a DRX OFF function;
the base station or the cell corresponding to the second time period supports or has any one of an NES capability, an OFF capability, a DTX ON capability, a DTX OFF capability, a DRX ON capability and a DRX OFF capability; and
the base station or the cell corresponding to the second time period supports or has any one of a non-NES capability, the OFF capability, the DTX ON capability, the DTX OFF capability, the DRX ON capability and the DRX OFF capability.

Optionally, the first time period and/or the second time period may be determined based on one or more of: a start time, an end time, and a duration length.

Exemplarily, the first time period may be [A1, A1+delta1], where A1 is the start time of the first time period, and delta1 is the duration length of the first time period. The second time period may be [A2, A2+delta2], where A2 is the start time of the second time period, and delta2 is the duration length of the second time period.

Optionally, the start time and/or the end time may be an absolute time, or a count value determined based on Greenwich Mean Time, or a relative time, which is not limited in the embodiments of the disclosure.

Optionally, the duration length is determined based on one or more of a specified time length, a timer and a duration.

Optionally, the duration length may take slot, time domain symbol (symbol), minimum time unit (Tc), subframe, radio frame (frame), millisecond (ms), second (s), or the like as a unit, which is not limited in the embodiments of the disclosure.

It should be noted that there may be one or more first time periods and/or second time periods, which is not limited in the embodiments of the disclosure.

Optionally, the network may configure that the terminal device performs the cell HO immediately when the terminal device receives the first indication information.

Optionally, the network may configure that after the terminal device receives the first indication information, the terminal device performs the cell HO when a certain time elapses or in a certain condition; otherwise, the terminal device does not perform the cell HO. Exemplarily, the base station may also configure that the terminal device performs the cell HO when the terminal device receives the first indication information and the channel state between the terminal device and the source base station or the source cell meets the channel condition. Or, the base station may configure that the terminal device performs the cell HO when the terminal device receives the first indication information and the channel state between the terminal device and the target base station or the target cell meets the channel condition.

It should be noted that the network mentioned in the embodiment of the disclosure may refer to the source base station or the source cell.

It should also be noted that the above channel state may include one or more parameters of channel quality, Reference Signal Receiving Power (RSRP) and path loss, which is not limited in the embodiments of the disclosure. The above channel condition may be pre-configured, or may be configured by the network, or may be specified by the protocol, which is not limited in the embodiments of the disclosure.

Optionally, the first indication information may be sent by the source base station or the source cell. The source base station or the source cell may send the first indication information through group signaling, or may send the first indication information through a dedicated message, which is not limited in the embodiments of the disclosure.

In some embodiments, the first indication information is determined based on state indication information of the source base station or the source cell, and the state indication information is configured to indicate any one of the NES state, the OFF state, the DTX ON state, the DTX OFF state, the DRX ON state and the DRX OFF state of the source base station or the source cell.

Or, the first indication information is determined based on any one of an NES capability, an OFF capability, a DTX ON capability, a DTX OFF capability, a DRX ON capability and a DRX OFF capability of the source base station or the source cell.

Or, the first indication information is determined based on the source base station or the source cell using any one of an NES function, an OFF function, a DTX ON function, a DTX OFF function, a DRX ON function and a DRX OFF function.

Or, the first indication information is determined based on a demand of the source base station or the source cell.

Or, the first indication information is determined based on a demand or state of the target base station or the target cell.

Or, the first indication information is determined based on a capability of the target base station or the target cell.

It should be noted that the first indication information may also be implicit indication information, that is, the network implicitly instructs the terminal device to perform the HO evaluation by multiplexing (or reusing) other information; or, implicitly instructs the terminal device to perform or trigger the HO by using the HO configuration information; or, implicitly instructs the terminal device to perform the HO based on the pre-configured configuration information of the target cell; or, implicitly indicates the condition related to network status, network capability, network type and/or NES information. Furthermore, the first indication information may be explicit indication information, that is, the first indication information may directly instruct the terminal device to perform the HO evaluation; or, directly instruct the terminal device to perform or trigger the HO by using the HO configuration information; or, directly instruct the terminal device to perform the HO based on the pre-configured configuration information of the target cell; or, directly indicate the condition related to network status, network capability, network type and/or NES information. Indication modes of the first indication information are not limited in the embodiments of the disclosure.

Optionally, the first indication information may multiplex the state indication information of the source base station or the source cell that is sent by the source base station or the source cell. Exemplarily, when the source base station or the source cell indicates the terminal device that the source base station or the source cell enters any one of the NES state, the OFF state, the DTX ON state, the DTX OFF state, the DRX ON state and the DRX OFF state, the terminal device may determine that the source base station or the source cell has sent the first indication information.

Optionally, when the source base station or the source cell indicates the terminal device that the source base station or the source cell uses any one of the NES function, the OFF function, the DTX ON function, the DTX OFF function, the DRX ON function and the DRX OFF function, the terminal device may determine that the source base station or the source cell has sent the first indication information.

Optionally, when the source base station or the source cell indicates the terminal device that the source base station or the source cell supports any one of the NES capability, the OFF capability, the DTX ON capability, the DTX OFF capability, the DRX ON capability and the DRX OFF capability, the terminal device may determine that the source base station or the source cell has sent the first indication information.

Optionally, when the source base station or the source cell indicates one or more of the demand of the source base station or the source cell, the demand or state of the target base station or the target cell, and the capability of the target base station or the target cell to the terminal device, the terminal device may also determine that the source base station or the source cell has sent the first indication information.

Optionally, the first indication information may be explicit indication information. When the source base station or the source cell requires the terminal device to perform the cell HO or the HO evaluation, the source base station or the source cell may directly send the first indication information to instruct the terminal device to perform the cell HO or the HO evaluation. Exemplarily, the first indication information may be 1-bit information. When the first indication information takes a value of 0/1, the terminal device is instructed to perform the cell HO.

In some embodiments, the above condition related to network status, network capability, network type and/or NES information of the target base station or the target cell may include one or more of:

the target base station or the target cell is in an ON state;
the target base station or the target cell is in the ON state in part of time;
the target base station or the target cell is switched from an OFF state to the ON state;
the target base station or the target cell is in a non-NES state;
the target base station or the target cell is about to be in the non-NES state;
the target base station or the target cell temporarily postpones leaving the non-NES state;
the target base station or the target cell is a non-NES base station or a non-NES cell;
the target base station or the target cell supports or uses cell DTX or cell DRX;
the target base station or the target cell is in a DTX ON state;
the target base station or the target cell is in a DTX OFF state;
the target base station or the target cell is in a DRX ON state;
the target base station or the target cell is in a DRX OFF state;
the target base station or the target cell is a second type of base station or cell;
the target base station or the target cell is a second base station or a second cell;
the target base station or the target cell is a base station or a cell supporting a second protocol version;
the target base station or the target cell is in a third time period; or, an available time of the target cell includes the third time period; or, the cell HO is triggered in the third time period, or, a time for performing the cell HO or triggering execution of the cell HO includes the third time period, or, a time taken for handing over to the target cell includes the third time period, or, a time where the target cell is used includes the third time period;
the target base station or the target cell is in a fourth time period; or, a unavailable time of the target cell includes the fourth time period; or, the cell HO is triggered beyond the fourth time period, or, a time for performing the cell HO or triggering execution of the cell HO is beyond the fourth time period, or, a time taken for handing over to the target cell is beyond the fourth time period, or, a time where the target cell is used is beyond the fourth time period;
the terminal device receives second indication information, where the second indication information is configured to instruct or trigger the terminal device to perform the cell HO; or, the second indication information is configured to instruct or trigger the terminal device to perform HO evaluation; or, the second indication information is configured to instruct the terminal device to perform or trigger HO by using the HO configuration information; or, the second indication information is configured to instruct the terminal device to perform the HO based on pre-configured configuration information of the target cell; or, the second indication information is configured to indicate a condition related to network status, network capability, network type and/or NES information;
the terminal device receives the second indication information, and a channel state between the terminal device and the target base station or the target cell meets a channel condition; and
the terminal device receives the second indication information, and a channel state between the terminal device and the source base station or the source cell meets the channel condition.

It should be noted that the target base station or the target cell may provide all or part of services to the terminal device, in any one of the ON state, the non-NES state, the DTX ON state, the DTX OFF state, the DRX ON state and the DRX OFF state. Therefore, the network may configure through the HO configuration information that when the target base station or the target cell is in or about to be in any one of the ON state, the non-NES state, the DTX ON state, the DTX OFF state, the DRX ON state and the DRX OFF state, or when the target base station or the target cell is switched from another state to any one of the ON state, the non-NES state, the DTX ON state, the DTX OFF state, the DRX ON state and the DRX OFF state, or when the target base station or the target cell temporarily postpones leaving any one of the ON state, the non-NES state, the DTX ON state, the DTX OFF state, the DRX ON state and the DRX OFF state, or when the target base station or the target cell supports the ON capability, the non-NES capability, the DTX ON capability, the DTX OFF capability, the DRX ON capability and the DRX OFF capability, or when the source base station or the source cell uses the ON function, the non-NES function, the DTX ON function, the DTX OFF function, the DRX ON function and the DRX OFF function, the cell HO process of the terminal device is triggered.

Furthermore, the network may also configure that when the target base station or the target cell is the second type of base station or cell, the second base station or the second cell, or supports the second base station or the second cell, the cell HO process of the terminal device is triggered.

Optionally, base stations or cells in the network may be divided into multiple types according to whether they support energy saving, whether they support the NES, or energy-saving technologies supported by them. The second type of base station or cell may be a base station or cell that does not support energy saving, the second type of base station or cell may be a base station or cell that does not support the NES, or the second type of base station or cell may be a base station or cell supporting other energy-saving technologies except the energy-saving technologies supported by the first type of base station or cell in the above embodiment.

Optionally, the second base station or the second cell may be a certain/some base stations or cells in the network. For example, the second base station or the second cell may be a base station or cell identified as a specified ID, or may be other base station(s) or cell(s) except the first base station or the first cell in the above embodiment. When the target base station or the target cell of the terminal device is the second base station or the second cell, the terminal device may be triggered to perform the cell HO.

Optionally, different protocol versions support different functions. For example, the protocol version Rel-18 supports the NES or NES technologies, while protocol versions lower than Rel-18 do not support the NES or NES technologies. The second protocol version in the embodiment of the disclosure may be a protocol version that does not support the NES or NES technologies. Exemplarily, the second protocol version may be a protocol versions lower than Rel-18. Furthermore, the second protocol version may also be other protocol versions except the first protocol version in the above embodiment. When the target base station or the target cell of the terminal device is a base station or cell supporting the second protocol version, the terminal device may be triggered to perform the cell HO.

It should be noted that the third time period in the embodiment of the disclosure may include one or more of:

a time for triggering the terminal device to perform HO;

a time for the terminal device to perform the HO, or a time taken for handing over to the target cell;

a time for the target base station or the target cell to transmit data;

a time for the terminal device and the target base station to maintain connection there-between;

an available time of the target base station or the target cell;

an unavailable time of the source base station or the source cell;

a time period that the target base station or the target cell is in any one of an ON state, a non-NES state, a DTX ON state, a DTX OFF state, a DRX ON state and a DRX OFF state;

a time period that the target base station or the target cell uses any one of an ON function, a non-NES function, a DTX ON function, a DTX OFF function, a DRX ON function and a DRX OFF function;

the target base station or the target cell corresponding to the third time period supports or has any one of an ON capability, a non-NES capability, a DTX ON capability, a DTX OFF capability, a DRX ON capability and a DRX OFF capability; and

the target base station or the target cell corresponding to the third time period supports any one of the non-NES capability, the ON capability, the DTX ON capability, the DTX OFF capability, the DRX ON capability and the DRX OFF capability.

Furthermore, the fourth time period in the embodiment of the disclosure may include one or more of:

a time beyond the time for triggering the terminal device to perform the HO;

a time beyond the time for the terminal device to perform the HO or a time taken for handing over to the target cell;

an unavailable time of the target base station or the target cell;

an available time of the source base station or the source cell;

a time period that the source base station or the source cell is in any one of an OFF state, an NES state, a DTX ON state, a DTX OFF state, a DRX ON state and a DRX OFF state;

the fourth time period includes a time period that the target base station or the target cell uses any one of an NES function, an OFF function, a DTX ON function, a DTX OFF function, a DRX ON function and a DRX OFF function; and

the base station or the cell corresponding to the fourth time period supports or has any one of an NES capability, an OFF capability, a DTX ON capability, a DTX OFF capability, a DRX ON capability and a DRX OFF capability.

Optionally, the third time period and/or the fourth time period in the above embodiment may be determined based on one or more of:

a start time, an end time, and a duration length.

Exemplarily, the third time period may be [A3, A3+delta3], where A3 is the start time of the third time period, and delta3 is the duration length of the third time period. The fourth time period may be [A4, A4+delta4], where A4 is the start time of the fourth time period, and delta4 is the duration length of the fourth time period.

Optionally, the start time and/or the end time may be an absolute time, or a count value determined based on Greenwich Mean Time, or a relative time, which is not limited in the embodiments of the disclosure.

Optionally, the duration length is determined based on one or more of a specified time length, a timer and a duration.

Optionally, the duration length may take slot, symbol, Tc, subframe, frame, ms, s, or the like as a unit, which is not limited in the embodiments of the disclosure.

It should be noted that there may be one or more third time periods and/or fourth time periods, which is not limited in the embodiments of the disclosure.

Optionally, the network may configure that the terminal device performs the cell HO immediately when the terminal device receives the second indication information.

Optionally, the base station may also configure that after the terminal device receives the second indication information, the terminal device performs the cell HO when a certain time elapses or in a certain condition; otherwise, the terminal device does not perform the cell HO. Exemplarily, the base station may also configure that the terminal device performs the cell HO when the terminal device receives the second indication information and the channel state between the terminal device and the source base station or the source cell meets the channel condition. Or, the base station may configure that the terminal device performs the cell HO when the terminal device receives the second indication information and the channel state between the terminal device and the target base station or the target cell meets the channel condition.

It should be noted that the above channel state may include one or more parameters of channel quality, RSRP and path loss, which is not limited in the embodiments of the disclosure. The above channel condition may be pre-configured, or may be configured by the network, or may be specified by the protocol, which is not limited in the embodiments of the disclosure.

It should also be noted that the second indication information may be sent by the source base station or the source cell. The source base station or the source cell may send the second indication information through group signaling, or may send the second indication information through a dedicated message, which is not limited in the embodiments of the disclosure.

In some embodiments, the above second indication information may be determined based on state indication information of the target base station or the target cell, and the state indication information is configured to indicate any one of the non-NES state, the ON state, the DTX ON state, the DTX OFF state, the DRX ON state and the DRX OFF state of the target base station or the target cell.

Or, the second indication information is determined based on any one of a non-NES capability, an ON capability, a DTX ON capability, a DTX OFF capability, a DRX ON capability and a DRX OFF capability of the target base station or the target cell.

Or, the second indication information is determined based on the target base station or the target cell using any one of a non-NES function, an ON function, a DTX ON function, a DTX OFF function, a DRX ON function and a DRX OFF function.

Or, the second indication information is determined based on a demand of the target base station or the target cell.

Or, the second indication information is determined based on a demand of the source base station or the source cell.

Or, the second indication information is determined based on a capability of the source base station or the source cell.

It should be noted that the second indication information may also be implicit indication information, that is, the network implicitly instructs the terminal device to perform the cell HO evaluation by multiplexing other information; or, implicitly instructs the terminal device to perform or trigger the HO by using the HO configuration information; or, implicitly instructs the terminal device to perform the HO based on the pre-configured configuration information of the target cell; or, implicitly indicates the condition related to network status, network capability, network type and/or NES information. Furthermore, the second indication information may be explicit indication information, that is, the second indication information may directly instruct the terminal device to perform the HO evaluation; or, directly instruct the terminal device to perform or trigger the HO by using the HO configuration information; or, directly instruct the terminal device to perform the HO based on the pre-configured configuration information of the target cell; or, directly indicate the condition related to network status, network capability, network type and/or NES information. Indication modes of the second indication information are not limited in the embodiments of the disclosure.

Optionally, the second indication information may multiplex the state indication information of the target base station or the target cell, the state indication information of the target base station or the target cell may be sent by the source base station or the source cell. Exemplarily, when the source base station or the source cell indicates the terminal device that the target base station or the target cell enters any one of the non-NES state, the ON state, the DTX ON state, the DTX OFF state, the DRX ON state and the DRX OFF state, the terminal device may consider that the source base station or the source cell has sent the second indication information.

Optionally, when the source base station or the source cell indicates the terminal device that the target base station or the target cell uses any one of the non-NES function, the ON function, the DTX ON function, the DTX OFF function, the DRX ON function and the DRX OFF function, the terminal device may consider that the source base station or the source cell has sent the second indication information.

Optionally, when the source base station or the source cell indicates the terminal device that the target base station or the target cell supports any one of the non-NES capability, the ON capability, the DTX ON capability, the DTX OFF capability, the DRX ON capability and the DRX OFF capability, the terminal device may determine that the source base station or the source cell has sent the second indication information.

Optionally, when the source base station or the source cell indicates one or more of the demand of the target base station or the target cell, the demand or state of the source base station or the source cell, and the capability of the source base station or the source cell to the terminal device, the terminal device may also determine that the source base station or the source cell has sent the second indication information.

Optionally, the second indication information may be explicit indication information. When the target base station or the target cell requires the terminal device to perform the cell HO, the source base station or the source cell may be triggered to send the second indication information to the terminal device, to instruct the terminal device to perform the cell HO. Exemplarily, the second indication information may be 1-bit information. When the second indication information takes a value of 0/1, the terminal device is instructed to perform the cell HO.

In some embodiments, the above condition is for all cells. That is, the above condition may be a common condition.

Exemplarily, the above condition related to network status, network capability, network type and/or NES information of the source base station or the source cell is the same for different terminal devices; the above condition related to network status, network capability, network type and/or NES information of the source base station or the source cell is the same for different source cells in any one of an OFF state, an NES state, a DTX ON state, a DTX OFF state, a DRX ON state and a DRX OFF state.

Optionally, the above condition may also be cell-specific.

Exemplarily, the above condition related to network status, network capability, network type and/or NES information of the target base station or the target cell is different for different target cells. Or, the above condition related to network status, network capability, network type and/or NES information of the target base station or the target cell is different for different target cells in any one of an OFF state, an NES state, a DTX ON state and a DTX OFF state. An available time, or a time capable of triggering HO, or a time selectable to hand over to the target cell, or a time capable of maintaining connection and/or performing transmission with the terminal device is different for different candidate target cells; the available time, or the time capable of triggering HO, or the time selectable to hand over to the target cell, or the time capable of maintaining connection and/or performing transmission with the terminal device is different for the source cell and a candidate target cell.

In summary, the source base station or the source cell may configure, for the terminal device, the condition that needs to be met to perform the cell HO, and the condition may be related to the network status, network capability, network type and/or NES information. In this way, the terminal device may perform the cell HO based on a current network status, network capability, network type and/or NES information, to prevent from continuously accessing the source base station or the source cell that cannot perform normal data transmission, and prevent from handing over to the target base station or the target cell that cannot perform normal data transmission. Normal transmission of data is ensured while achieving the NES.

In some embodiments, the above HO configuration information may further include one or more of:

an execution condition/evaluation condition for each of the one or more candidate target cells; and
execution conditions/evaluation conditions for all of the one or more candidate target cells.

It may be understood that the terminal device may determine to access which target cell based on the configured execution condition/evaluation condition, that is, when an execution condition/evaluation condition for a certain candidate target cell is met, the terminal device may actively hand over to the candidate target cell.

That is, the HO configuration information provided in the embodiment of the disclosure may be CHO-like configuration information. Correspondingly, the cell HO in the embodiment of the disclosure may also refer to CHO-like HO.

It should be noted that execution conditions/evaluation conditions configured in the HO configuration information may be the same or different for the one or more candidate target cells. The source base station or the source cell may configure a respective execution condition/evaluation condition for each of the one or more candidate target cells, or may uniformly configure one execution condition/evaluation condition for the above one or more candidate target cells.

Processes of the terminal device performing the cell HO based on the HO configuration information will be described in detail below.

In some embodiments, the method for wireless communication provided in the embodiment of the disclosure may further include the following operations:

The terminal device performs the cell HO, or considers that a cell HO execution condition is met, or triggers execution of HO evaluation, or the terminal device leaves the source base station or the source cell, in case that one or more of the following conditions are met:

a first condition, related to the source base station or the source cell;
a second condition, related to a target base station or a target cell;
a third condition, related to the terminal device; and
a fourth condition, related to information received by the terminal device.

In some embodiments, the first condition may include one or more of:

the condition related to network status, network capability, network type and/or NES information of the source base station or the source cell;
a time length that the source base station or the source cell is in any one of the NES state, the OFF state, the DTX ON state, the DTX OFF state, the DRX ON state and the DRX OFF state is greater than a first time length;
a time length that the source base station or the source cell uses any one of an NES function, an OFF function, a DTX ON function, a DTX OFF function, the DRX ON state and the DRX OFF state is greater than the first time length;
a first channel quality is less than or equal to a first threshold, where the first channel quality is a channel quality between the terminal device and the source base station or the source cell; and
a difference between a second channel quality and the first channel quality is greater than a second threshold, where the second channel quality is a channel quality between the terminal device and the target base station or the target cell.

It should be understood that the first condition may include the condition related to network status, network capability, network type and/or NES information of the source base station or the source cell, contained in the above HO configuration information.

It should be noted that in the embodiment of the disclosure, the network status, network capability, network type and/or NES information of the source base station or the source cell may be indicated in the above HO configuration information, or may be separately indicated by other information except the HO configuration information, which is not limited in the embodiments of the disclosure. Exemplarily, the source base station or the source cell being in the ON/OFF state, time information of the ON/OFF state, the source base station or the source cell being in the NES/non-NES state, and time information of the NES/non-NES state may be indicated by the above HO configuration information, or may be indicated by RRC dedicated/group signaling, MAC CE dedicated/group signaling, DCI dedicated/group signaling.

Optionally, the first time length may be predefined, or may be configured independently, or may be configured through the above HO configuration information, or may be configured to the terminal device by the source base station or the source cell when the source base station or the source cell is switched from another state to any one of the NES state, the OFF state, the DTX ON state, the DTX OFF state, the DRX ON state and the DRX OFF state, which is not limited in the embodiments of the disclosure.

In the embodiment of the disclosure, the terminal device may also detect whether the source base station or the source cell is saving energy implicitly. When the terminal device detects whether the source base station or the source cell is saving energy implicitly, the cell HO may also be triggered.

Optionally, the terminal device may measure the first channel quality between itself and the source base station or the source cell. If the first channel quality is less than or equal to the first threshold, the terminal device may consider that the source base station or the source cell is saving energy implicitly.

Optionally, the terminal device may also measure the second channel quality between itself and the target base station or the target cell. If the difference between the second channel quality and the first channel quality is greater than or equal to the second threshold, it may be considered that the source base station or the source cell is saving energy implicitly, or that there is a good channel quality between the terminal device and the target base station or the target cell, while there is a relatively poor channel quality between the terminal device and the source base station or the source cell. When the terminal device detects that the difference between the second channel quality and the first channel quality is greater than or equal to the second threshold, the cell HO may also be triggered to hand over to the target cell with a better channel quality.

It should be noted that the first threshold and/or the second threshold may be a predefined value, or may be a value indicated in the CHO execution condition, which is not limited in the embodiments of the disclosure.

In some embodiments, the second condition may include one or more of:

the condition related to network status, network capability, network type and/or NES information of the target base station or the target cell;
a second channel quality is greater than or equal to a third threshold;

a difference between the second channel quality and a first channel quality is greater than or equal to a second threshold;

the target base station or the target cell meets a CHO execution condition/CHO evaluation condition;

the target base station or the target cell meets the CHO execution condition/CHO evaluation condition, and the target base station or the target cell does not use any one of an NES function, an OFF function, a DTX ON function, a DTX OFF function, a DRX ON function and a DRX OFF function;

the target base station or the target cell meets the CHO execution condition/CHO evaluation condition, and the target base station or the target cell is in any one of a non-NES state, an ON state, a DTX ON state, a DTX OFF state, a DRX ON state and a DRX OFF state;

the target base station or the target cell meets the CHO execution condition/CHO evaluation condition, and the target base station or the target cell does not support any one of the NES function, the OFF function, the DTX ON function, the DTX OFF function, the DRX ON function and the DRX OFF function;

the target base station or the target cell does not use any one of the NES function, the OFF function, the DTX ON function, the DTX OFF function, the DRX ON function and the DRX OFF function;

the target base station or the target cell is in any one of the non-NES state, the ON state, the DTX ON state, the DTX OFF state, the DRX ON state and the DRX OFF state; and

the target base station or the target cell does not support any one of the NES function, the OFF function, the DTX ON function, the DTX OFF function, the DRX ON function and the DRX OFF function.

It should be understood that the first condition may include the condition related to network status, network capability, network type and/or NES information of the target base station or the target cell, contained in the above HO configuration information.

It should be noted that the above network status, network capability, network type and/or NES information of the target base station or the target cell may be indicated in the above HO configuration information, or may be separately indicated by other information except the HO configuration information, which is not limited in the embodiments of the disclosure. Exemplarily, the source base station or the source cell being in the NES/non-NES state, and time information of energy saving may be indicated by the HO configuration information, or may be indicated by RRC dedicated/group signaling, MAC CE dedicated/group signaling, DCI dedicated/group signaling.

Optionally, the terminal device may measure the second channel quality between itself and the target base station or the target cell. If the second channel quality is greater than the third threshold, the terminal device may consider that the target base station or the target cell may provide a better service to the terminal device, and the terminal device may access the target base station or the target cell at this time.

Optionally, the terminal device may also measure the second channel quality between itself and the target base station or the target cell. If the difference between the second channel quality and the first channel quality is greater than or equal to the second threshold, it may be considered that the source base station or the source cell is saving energy implicitly, or that there is a good channel quality between the terminal device and the target base station or the target cell, while there is a relatively poor channel quality between the terminal device and the source base station or the source cell. When the terminal device detects that the difference between the second channel quality and the first channel quality is greater than the second threshold, the cell HO may also be triggered to hand over to the target cell with a better channel quality.

It should be noted that the third threshold may be a predefined value, or may be a value indicated in the CHO execution condition, which is not limited in the embodiments of the disclosure.

Optionally, the second condition may also be used together with the CHO execution condition/CHO evaluation condition. Specifically, the terminal device may also determine whether the target base station or the target cell meets the CHO execution condition/CHO evaluation condition. When the target base station or the target cell meets the CHO execution condition/CHO evaluation condition, the terminal device may directly perform the cell HO. Or, when the target base station or the target cell meets the CHO execution condition/CHO evaluation condition, and the target base station or the target cell does not use any one of the NES function, the OFF function, the DTX ON function, the DTX OFF function, the DRX ON function and the DRX OFF function, the terminal device may perform the cell HO. Or, when the target base station or the target cell meets the CHO execution condition, and the target base station or the target cell is in any one of the non-NES state, the ON state, the DTX ON state, the DTX OFF state, the DRX ON state and the DRX OFF state, the terminal device may perform the cell HO. Or, when the target base station or the target cell meets the CHO execution condition/CHO evaluation condition, and the target base station or the target cell does not support any one of the NES function, the OFF function, the DTX ON function, the DTX OFF function, the DRX ON function and the DRX OFF function, the terminal device may perform the cell HO.

In some embodiments, the third condition includes one or more of:

a serving cell of the terminal device is the source cell;

the terminal device supports an NES capability;

the terminal device has no transmission demand in a first time length;

the terminal device receives an HO configuration for one or more candidate target cells;

a Radio Link Failure (RLF) occurs in the terminal device; and

the RLF occurs in the terminal device in case that the source base station or the source cell is in any one of an NES state, an OFF state, a DTX ON state, a DTX OFF state, a DRX ON state and a DRX OFF state.

Optionally, the first time length may be predefined, or may be configured independently, or may be configured through the above HO configuration information, or may be configured to the terminal device by the source base station or the source cell when the source base station or the source cell is switched from another state to any one of the NES state, the OFF state, the DTX ON state, the DTX OFF state, the DRX ON state and the DRX OFF state, which is not limited in the embodiments of the disclosure.

In some embodiments, the fourth condition may include:

the terminal device receives third indication information, where the third indication information is configured for one or more of:

instructing or triggering the terminal device to perform HO evaluation;

instructing the terminal device to perform or trigger HO by using the HO configuration information;

instructing the terminal device to perform the HO based on pre-configured configuration information of the target cell;

indicating a network capability or network type of the source base station or the source cell;

indicating whether the source base station or the source cell uses any one of an NES function, an OFF function, a DTX ON function, a DTX OFF function, a DRX ON function and a DRX OFF function;

indicating any one of an NES state, an OFF state, a DTX ON state, a DTX OFF state, a DRX ON state and a DRX OFF state of the source base station or the source cell;

indicating an available time or non-energy-saving time or working time of the source base station or the source cell;

indicating an unavailable time or energy-saving time or closing time of the source base station or the source cell;

indicating information transmission time between the source base station or the source cell and a terminal;

indicating information transmission time between the target base station or the target cell and the terminal;

indicating an available time or non-energy-saving time or working time of the target base station or the target cell;

indicating an unavailable time or energy-saving time or closing time of the target base station or the target cell;

indicating a condition related to network status, network capability, network type and/or NES information;

indicating a network capability or network type of the target base station or the target cell;

indicating whether the target base station or the target cell uses any one of the NES function, the OFF function, the DTX ON function, the DTX OFF function, the DRX ON function and the DRX OFF function;

indicating that the target base station or the target cell is in any one of the NES state, the OFF state, the DTX ON state, the DTX OFF state, the DRX ON state and the DRX OFF state;

instructing the terminal device to trigger CHO execution or determination;

instructing the terminal device to perform CHO based on the network status, network capability, network type and/or NES information;

instructing the terminal device to perform or trigger the CHO;

instructing a terminal device supporting an NES capability to perform or trigger the CHO;

instructing the terminal device to perform HO execution or determination;

instructing the terminal device to trigger the HO execution or determination;

instructing the terminal device to perform the HO based on the network status, network capability, network type and/or NES information; and

instructing the terminal device supporting the NES capability to perform an HO process.

Optionally, the third indication information may be sent by the source base station or the source cell to the terminal device. The source base station or the source cell may send the third indication information through group signaling, or may send the third indication information through a dedicated message, which is not limited in the embodiments of the disclosure.

It should be noted that the above condition related to the network status, network capability, network type and/or NES information may be indicated by the above fourth indication information, or may be indicated by other separate indication information, or may be predefined or pre-configured, which is not limited in the embodiments of the disclosure.

The above embodiments will be described below with reference to an application scenario shown in FIG. 4. With reference to FIG. 4, a current serving cell of UE1 is cell 1, and the cell 1 includes three adjacent cells, i.e., cell 2, cell 3, and cell 4. Base station 1 corresponding to the cell 1 may send HO configuration information to the UE1, and relevant configuration information of three candidate target cells (the cell 2, the cell 3, and the cell 4) are configured for the UE1 through the HO configuration information. Furthermore, the HO configuration information further includes the condition that the terminal device is required to meet to perform cell HO. In this example, the condition that the terminal device is required to meet to perform cell HO included in the HO configuration information may include: the source cell is in the NES state, and the target cell is in the non-NES state. Correspondingly, after the UE1 receives the HO configuration information, the UE1 may monitor NES states of the cell 1, the cell 2, the cell 3 and the cell 4 based on the HO configuration information. When the UE1 detects that the cell 1 enters the NES state, and that any one of the cell 2, the cell 3 and the cell 4 remains in the non-NES state, the UE1 may trigger the cell HO at this time.

In summary, the terminal device may perform different types of cell HO when one or more of the first to fourth conditions are met, thereby improving flexibility of the cell HO.

It should be noted that in the embodiment of the disclosure, after the terminal device receives the HO configuration information, the terminal device may save the HO configuration information, however, the terminal device does not perform the cell HO corresponding to the HO configuration information. Instead, the terminal device performs the cell HO when one or more of the above four conditions are met.

In some embodiments, the above cell HO includes at least one of: CHO, HO based on the HO configuration information, or pre-configured multi-candidate-target-cell HO.

The CHO may be HO performed based on a CHO execution condition/CHO evaluation condition (trigger condition). The CHO execution condition/CHO evaluation condition may be carried in a CHO command.

In some embodiments, the HO configuration information may further include one or more of:

an execution condition/evaluation condition for each of the one or more candidate target cells; and
execution conditions/evaluation conditions for all of the one or more candidate target cells.

It may be understood that the terminal device may determine to access which target cell based on the execution condition/evaluation condition in the HO configuration information, that is, when an execution condition/evaluation condition for a certain candidate target cell is met, the terminal device may actively hand over to the candidate target cell.

It should be noted that the HO based on the HO configuration information may be HO based on the execution condition/evaluation condition configured in the HO configuration information. In other words, the HO based on the HO configuration information may have its own unique HO condition/evaluation condition. The HO based on the HO configuration information may also be referred to as a CHO-like HO.

Optionally, execution conditions/evaluation conditions configured in the HO configuration information may be the same or different for the one or more candidate target cells. The source base station or the source cell may configure a respective execution condition/evaluation condition for each of the one or more candidate target cells, or may uniformly configure one execution condition/evaluation condition for the above one or more candidate target cells.

In some embodiments, execution conditions/evaluation conditions for multiple candidate target cells may be pre-configured. That is, the execution conditions/evaluation conditions for multiple candidate target cells are neither carried in the CHO command, nor in the above HO configuration information. The execution conditions/evaluation conditions for multiple candidate target cells may be separately configured by the base station.

The pre-configured multi-candidate-target-cell HO may be HO performed by the terminal device according to a pre-configured execution condition/evaluation condition.

In a possible implementation, the terminal device may directly perform the cell HO when one or more of the above first to fourth conditions are met.

In another possible implementation, the terminal device may also determine whether an execution condition/evaluation condition for the target cell is met when one or more of the above first to fourth conditions are met, to select one target cell to hand over to it.

Optionally, the terminal device may measure the one or more candidate target cells to obtain measurement results. When one or more of the first to fourth conditions are met, and a measurement result of a certain candidate target cell meets the execution condition/evaluation condition for the target cell, the candidate target cell is used as the target cell, and the terminal device may hand over to the candidate target cell.

Optionally, the terminal device may perform the CHO when one or more of the above first to fourth conditions are met. It may be understood that one or more of the above first to fourth conditions may be used together with an existing CHO execution condition.

Optionally, the terminal device may perform the HO based on the HO configuration information when one or more of the above first to fourth conditions are met. It may be understood that the terminal device may perform the CHO-like HO as mentioned above when one or more of the above first to fourth conditions are met. It may be seen that the first condition, the second condition, the third condition and the fourth condition may also be decoupled from the CHO execution condition, and each of the CHO and the CHO-like HO has its own execution condition.

Optionally, the pre-configured multi-candidate-target-cell HO may be performed when one or more of the above first to fourth conditions are met.

Optionally, the terminal device may not perform the cell HO when one or more of the first condition, the second condition, the third condition and the fourth condition are met, however, no candidate target cell meets the execution condition/evaluation condition for the target cell.

It should be noted that the execution condition/evaluation condition for the above target cell may be a CHO execution condition (trigger condition)/CHO evaluation condition. The CHO execution condition/CHO evaluation condition may be configured by CHO configuration information. The execution condition/evaluation condition for the target cell may be the execution condition/evaluation condition configured in the HO configuration information.

It may be seen that the terminal device may perform different types of cell HO when one or more of the first to fourth conditions are met, thereby improving flexibility of the cell HO.

In some embodiments, the following operations may also be performed before the terminal device performs the cell HO.

After the terminal device receives the HO configuration information, the terminal device performs measurement based on the HO configuration information, to obtain measurement results.

Or,

after the terminal device receives the HO configuration information, and state of the source cell is switched to any one of the NES state, the OFF state, the DTX ON state, the DTX OFF state, the DRX ON state and the DRX OFF state, the terminal device performs measurement based on the HO configuration information, to obtain measurement results.

Or,

in case that the terminal device receives the HO configuration information and the HO is triggered, the terminal device performs measurement based on the HO configuration information, to obtain measurement results.

It should be understood that the terminal device measures one or more candidate target cells based on configuration information of the one or more candidate cells configured by the HO configuration information.

In a possible implementation, after the terminal device receives the HO configuration information, the terminal device may immediately start to perform measurement based on the HO configuration information, to obtain measurement results.

In another possible implementation, after the terminal device receives the HO configuration information, the terminal device does not immediately start to perform measurement, instead, performs measurement based on the HO configuration information when a certain condition is met.

Optionally, after the terminal device receives the HO configuration information, and state of the source base station or the source cell is switched to any one of the NES state, the OFF state, the DTX ON state, the DTX OFF state, the DRX ON state and the DRX OFF state, the terminal device performs measurement based on the HO configuration information, to obtain measurement results.

Optionally, in case that the terminal device receives the HO configuration information and the HO is triggered, the terminal device may also perform measurement based on the HO configuration information, to obtain measurement results.

In some embodiments, the HO configuration information includes one or more sets of execution conditions/evaluation conditions; or, an execution condition/evaluation condition for the target cell has one or more sets of conditions.

Optionally, the above one or more sets of execution conditions/evaluation conditions may be generated by the source base station or the source cell.

It should be noted that the one or more candidate target cells may have their own independent execution conditions/evaluation conditions, or may share the same execution condition/evaluation condition.

Optionally, the one or more execution conditions/evaluation conditions included in the HO configuration information may be for all the candidate target cells. In the HO configuration information, one or more execution conditions/evaluation conditions may also be configured for each candidate target cell, which is not limited in the embodiments of the disclosure.

In some embodiments, the terminal device may perform the cell HO or HO evaluation by using a first set of execution conditions/evaluation conditions.

It should be noted that when one set of execution conditions/evaluation conditions is configured in the HO configuration information, the execution condition/evaluation condition may be the first set of execution conditions/evaluation conditions. At this time, the terminal device may perform the cell HO based on the configured first set of execution conditions/evaluation conditions. Or, when multiple sets of execution conditions/evaluation conditions are configured in the HO configuration information, the terminal device may perform the cell HO by using only the first set of execution conditions/evaluation conditions.

Optionally, the first set of execution conditions/evaluation conditions in the embodiment of the disclosure may be an execution condition/evaluation condition that enables the terminal device to hand over to the target cell quickly.

Threshold parameters or other parameters in the first set of execution conditions/evaluation conditions may be set differently from parameters in an existing execution condition/evaluation condition, to enable the terminal device to hand over to the target cell quickly. Exemplarily, the first set of execution conditions/evaluation conditions may include an event A3 or an event A5, and if the event A3 of the first set of execution conditions/evaluation conditions is compared with the event A3 in the existing CHO execution condition/CHO evaluation condition, the threshold configured in the first set of execution conditions/evaluation conditions is lower than the threshold of the CHO execution condition/CHO evaluation condition. If the event A5 of the first set of execution conditions/evaluation conditions is compared with the event A5 in the existing CHO execution condition/CHO evaluation condition, a threshold 1 configured in the first set of execution conditions/evaluation conditions is higher than a threshold 1 of the CHO execution condition/CHO evaluation condition, and a threshold 2 configured in the first set of execution conditions/evaluation conditions is lower than a threshold 2 of the CHO execution condition/CHO evaluation condition.

How the terminal device performs the cell HO or HO evaluation by using the first set of execution conditions/evaluation conditions, will be described in detail below.

In some embodiments, the operation of performing, by the terminal device, the cell HO or HO evaluation by using the first set of execution conditions/evaluation conditions may include at least one of the following operations.

In case that the first set of execution conditions/evaluation conditions is used, if the first set of execution conditions/evaluation conditions is met, the terminal device hands over to the target cell.

Or, in case that the first set of execution conditions/evaluation conditions is used, if one or more of a first condition, a second condition, a third condition and a fourth condition are met and the first set of execution conditions/evaluation conditions is met, the terminal device hands over to the target cell.

Or, in case that the first set of execution conditions/evaluation conditions is used, if one or more candidate target cells or all the candidate target cells do not meet the first set of execution conditions/evaluation conditions, the terminal device selects a candidate target cell with an optimal measurement result from the one or more candidate target cells, for performing the HO.

Or, in case that the first set of execution conditions/evaluation conditions is used, if one or more candidate target cells or all the candidate target cells do not meet the first set of execution conditions/evaluation conditions, the terminal device selects the target cell from the one or more candidate target cells according to an order of measurement results of the candidate target cells, and/or, the terminal device hands over to the target cell.

Or, in case that the first set of execution conditions/evaluation conditions is used, if one or more candidate target cells or all the candidate target cells do not meet the first set of execution conditions/evaluation conditions, the terminal device selects the target cell from the one or more candidate target cells according to priorities or priority ranks of the candidate target cells, and/or, the terminal device hands over to the target cell.

Or, in case that the first set of execution conditions/evaluation conditions is used, if one or more of the first condition, the second condition, the third condition and the fourth condition are met and one or more candidate target cells or all the candidate target cells do not meet the first set of execution conditions/evaluation conditions, the terminal device selects a candidate target cell with an optimal measurement result from the one or more candidate target cells, for performing the HO.

Or, in case that the first set of execution conditions/evaluation conditions is used, if one or more of the first condition, the second condition, the third condition and the fourth condition are met and one or more candidate target cells or all the candidate target cells do not meet the first set of execution conditions/evaluation conditions, the terminal device selects the target cell from the one or more candidate target cells according to an order of measurement results of the candidate target cells, and/or, the terminal device hands over to the target cell.

Or, in case that the first set of execution conditions/evaluation conditions is used, if one or more of the first condition, the second condition, the third condition and the fourth condition are met and one or more candidate target cells or all the candidate target cells do not meet the first set of execution conditions/evaluation conditions, the terminal device selects the target cell from the one or more candidate target cells according to priorities or priority ranks of the candidate target cells, and/or, the terminal device hands over to the target cell.

Or, in case that one set of execution conditions/evaluation conditions is configured, if the first set of execution conditions/evaluation conditions is met, the terminal device hands over to the target cell.

Or, in case that one set of execution conditions/evaluation conditions is configured, if one or more of the first condition, the second condition, the third condition and the fourth condition are met and the first set of execution conditions/evaluation conditions is met, the terminal device hands over to the target cell.

Or, in case that one set of execution conditions/evaluation conditions is configured, if one or more candidate target cells or all the candidate target cells do not meet the first set of execution conditions/evaluation conditions, the terminal device selects a candidate target cell with an optimal measurement result from the one or more candidate target cells, for performing the HO.

Or, in case that one set of execution conditions/evaluation conditions is configured, if one or more candidate target cells or all the candidate target cells do not meet the first set of execution conditions/evaluation conditions, the terminal device selects the target cell from the one or more candidate target cells according to an order of measurement results of the candidate target cells, and/or, the terminal device hands over to the target cell.

Or, in case that one set of execution conditions/evaluation conditions is configured, if one or more candidate target cells or all the candidate target cells do not meet the first set of execution conditions/evaluation conditions, the terminal device selects the target cell from the one or more candidate target cells according to priorities or priority ranks of the candidate target cells, and/or, the terminal device hands over to the target cell.

Or, in case that one set of execution conditions/evaluation conditions is configured, if one or more of the first condition, the second condition, the third condition and the fourth condition are met and one or more candidate target cells or all the candidate target cells do not meet the first set of execution conditions/evaluation conditions, the terminal device selects a candidate target cell with an optimal measurement result from the one or more candidate target cells, for performing the HO.

Or, in case that one set of execution conditions/evaluation conditions is configured, if one or more of the first condition, the second condition, the third condition and the fourth condition are met and one or more candidate target cells or all the candidate target cells do not meet the first set of execution conditions/evaluation conditions, the terminal device selects the target cell from the one or more candidate target cells according to an order of measurement results of the candidate target cells, and/or, the terminal device hands over to the target cell.

Or, in case that one set of execution conditions/evaluation conditions is configured, if one or more of the first condition, the second condition, the third condition and the fourth condition are met and one or more candidate target cells or all the candidate target cells do not meet the first set of execution conditions/evaluation conditions, the terminal device selects the target cell from the one or more candidate target cells according to priorities or priority ranks of the candidate target cells, and/or, the terminal device hands over to the target cell.

Simply speaking, in a possible implementation, the terminal device may use a certain candidate target cell as a target cell to hand over finally when the measurement result of the candidate target cell meets the first set of execution conditions/evaluation conditions for the target cell, and may directly hand over to the target cell. When no measurement results of candidate target cells meet the first set of execution conditions/evaluation conditions, the terminal device may perform one or more of:

selecting a target cell with an optimal measurement result, and handing over to the target cell;
selecting a target cell from the candidate target cells according to an order of measurement results, and/or, handing over to the target cell; and
selecting a target cell from the candidate target cells according to priorities or priority ranks, and/or, handing over to the target cell.

In another possible implementation, the first set of execution conditions/evaluation conditions may be used in combination with one or more of the first condition, the second condition, the third condition and the fourth condition in the above embodiment. The terminal device may use a certain candidate target cell as a target cell to hand over finally when one or more of the first condition, the second condition, the third condition and the fourth condition are met, and the measurement result of the candidate target cell meets the first set of execution conditions/evaluation conditions. When one or more of the first condition, the second condition, the third condition and the fourth condition are met, while no measurement results of candidate target cells meet the first set of execution conditions/evaluation conditions, the terminal device may perform one or more of:

selecting a target cell with an optimal measurement result, and handing over to the target cell;
selecting a target cell from the candidate target cells according to an order of measurement results, and/or, handing over to the target cell; and
selecting a target cell from the candidate target cells according to priorities or priority ranks, and/or, handing over to the target cell.

It should be noted that the priority may be understood as an absolute level, and the priority rank may be understood as a relative level, that is, the priority rank of each candidate target cell is defined relative to other candidate target cells.

Optionally, the priorities or priority ranks of the candidate target cells may be configured by the network. In some embodiments, the priorities or priority ranks of the candidate target cells are indicated by at least one of the following information sent by the source base station:

dedicated signaling, system information, group signaling, the HO configuration information, or CHO configuration information.

It should be noted that the operation of selecting, by the terminal device, the target cell from the candidate target cells according to the order of measurement results may be to select a candidate target cell with a measurement result ranked in second or third place from the candidate target cells as a target cell to hand over, so as to avoid occurrence of a case where the candidate target cell with the optimal measurement result congests, which is not limited in the embodiments of the disclosure.

In summary, when the terminal device uses the first set of execution conditions/evaluation conditions, or only the first set of execution conditions/evaluation conditions is configured in the HO configuration information, the terminal device may determine the target cell to perform the cell HO in different scenarios, thereby improving flexibility of the cell HO.

In some embodiments, the HO configuration information includes multiple sets of execution conditions/evaluation conditions, and/or the cell HO or HO evaluation is performed by using different execution conditions/evaluation conditions in different cases.

It may be understood that multiple sets of different execution conditions/evaluation conditions may be configured in the HO configuration information, such that the terminal device may select different execution conditions/evaluation conditions to perform the cell HO in different cases, thereby improving flexibility of the cell HO.

In some embodiments, the operation of performing the cell HO by using different execution conditions/evaluation conditions in different cases includes one or more of the following operations.

In a first case, the cell HO or HO evaluation is performed by using a first set of execution conditions/evaluation conditions.

In the first case, if a first set of execution conditions/evaluation conditions corresponding to the target cell is met, the terminal device hands over to the target cell.

In the first case, if one or more of a first condition, a second condition, a third condition and a fourth condition are met and the first set of execution conditions/evaluation conditions corresponding to the target cell is met, the terminal device hands over to the target cell.

In the first case, if one or more candidate target cells or all the candidate target cells do not meet a CHO execution condition/CHO evaluation condition, the cell HO or HO evaluation is performed by using a second set of execution conditions/evaluation conditions.

In the first case, if one or more of the first condition, the second condition, the third condition and the fourth condition are met and one or more candidate target cells or all the candidate target cells do not meet the CHO execution condition/CHO evaluation condition, the cell HO/HO evaluation is performed by using the second set of execution conditions/evaluation conditions.

In the first case, if one or more candidate target cells or all the candidate target cells do not meet the CHO execution condition/CHO evaluation condition, the terminal device performs any one of the following operations. The terminal device selects a candidate target cell with an optimal measurement result from the one or more candidate target cells, for performing the HO. Or, the terminal device selects the target cell from the one or more candidate target cells according to an order of measurement results of the candidate target cells, and/or, the terminal device hands over to the target cell. Or, the terminal device selects the target cell from the one or more candidate target cells according to priorities or priority ranks of the candidate target cells, and/or, the terminal device hands over to the target cell.

In the first case, if one or more of the first condition, the second condition, the third condition and the fourth condition are met and one or more candidate target cells or all the candidate target cells do not meet the CHO execution condition/CHO evaluation condition, the terminal device performs any one of the following operations. The terminal device selects a candidate target cell with an optimal measurement result from the one or more candidate target cells, for performing the HO. Or, the terminal device selects the target cell from the one or more candidate target cells according to an order of measurement results of the candidate target cells, and/or, the terminal device hands over to the target cell. Or, the terminal device selects the target cell from the one or more candidate target cells according to priorities or priority ranks of the candidate target cells, and/or, the terminal device hands over to the target cell.

In the first case, if the first set of execution conditions/evaluation conditions is not met, the cell HO or HO evaluation is performed by using the second set of execution conditions/evaluation conditions.

In the first case, if one or more of the first condition, the second condition, the third condition and the fourth condition are met and the first set of execution conditions/evaluation conditions is not met, the cell HO/HO evaluation is performed by using the second set of execution conditions/evaluation conditions.

In the first case, if the first set of execution conditions/evaluation conditions is not met, the terminal device performs any one of the following operations. The terminal device selects a candidate target cell with an optimal measurement result from the one or more candidate target cells, for performing the HO. Or, the terminal device selects the target cell from the one or more candidate target cells according to an order of measurement results of the candidate target cells, and/or, the terminal device hands over to the target cell. Or, the terminal device selects the target cell from the one or more candidate target cells according to priorities or priority ranks of the candidate target cells, and/or, the terminal device hands over to the target cell.

In the first case, if one or more of the first condition, the second condition, the third condition and the fourth condition are met and the first set of execution conditions/evaluation conditions is not met, the terminal device performs any one of the following operations. The terminal device selects a candidate target cell with an optimal measurement result from the one or more candidate target cells, for performing the HO. Or, the terminal device selects the target cell from the one or more candidate target cells according to an order of measurement results of the candidate target cells, and/or, the terminal device hands over to the target cell. Or, the terminal device selects the target cell from the one or more candidate target cells according to priorities or priority ranks of the candidate target cells, and/or, the terminal device hands over to the target cell.

In a second case, the cell HO or HO evaluation is performed by using a second set of execution conditions/evaluation conditions.

In the second case, if a second set of execution conditions/evaluation conditions corresponding to the target cell is met, the terminal device hands over to the target cell.

In the second case, if one or more of a first condition, a second condition, a third condition and a fourth condition are met and the second set of execution conditions/evaluation conditions corresponding to the target cell is met, the terminal device hands over to the target cell.

In the second case, if one or more candidate target cells or all the candidate target cells meet a CHO execution condition/CHO evaluation condition, the cell HO or HO evaluation is performed by using the first set of execution conditions/evaluation conditions.

In the second case, if one or more of the first condition, the second condition, the third condition and the fourth condition are met and one or more candidate target cells or all the candidate target cells do not meet the CHO execution condition/CHO evaluation condition, the cell HO is performed by using the first set of execution conditions/evaluation conditions.

In the second case, if one or more candidate target cells or all the candidate target cells do not meet the CHO execution condition/CHO evaluation condition, the terminal device performs any one of the following operations. The terminal device selects a candidate target cell with an optimal measurement result from the one or more candidate target cells, for performing the HO. Or, the terminal device selects the target cell from the one or more candidate target cells according to an order of measurement results of the candidate target cells, and/or, the terminal device hands over to the target cell. Or, the terminal device selects the target cell from the one or more candidate target cells according to priorities or priority ranks of the candidate target cells, and/or, the terminal device hands over to the target cell.

In the second case, if one or more of the first condition, the second condition, the third condition and the fourth condition are met and one or more candidate target cells or all the candidate target cells do not meet the CHO execution condition/CHO evaluation condition, the terminal device performs any one of the following operations. The terminal device selects a candidate target cell with an optimal measurement result from the one or more candidate target cells, for performing the HO. Or, the terminal device selects the target cell from the one or more candidate target cells according to an order of measurement results of the candidate target cells, and/or, the terminal device hands over to the target cell. Or, the terminal device selects the target cell from the one or more candidate target cells according to priorities or priority ranks of the candidate target cells, and/or, the terminal device hands over to the target cell.

In the second case, if one or more candidate target cells or all the candidate target cells meet the second set of execution conditions/evaluation conditions, the cell HO or HO evaluation is performed by using the second set of execution conditions/evaluation conditions;

In the second case, if the first set of execution conditions/evaluation conditions is not met, the cell HO or HO evaluation is performed by using the second set of execution conditions/evaluation conditions.

In the second case, if one or more of the first condition, the second condition, the third condition and the fourth condition are met and the first set of execution conditions/evaluation conditions is not met, the cell HO is performed by using the second set of execution conditions/evaluation conditions.

In the second case, if the first set of execution conditions/evaluation conditions is not met, the terminal device performs any one of the following operations. The terminal device selects a candidate target cell with an optimal measurement result from the one or more candidate target cells, for performing the HO. Or, the terminal device selects the target cell from the one or more candidate target cells according to an order of measurement results of the candidate target cells, and/or, the terminal device hands over to the target cell. Or, the terminal device selects the target cell from the one or more candidate target cells according to priorities or priority ranks of the candidate target cells, and/or, the terminal device hands over to the target cell.

In the second case, if one or more of the first condition, the second condition, the third condition and the fourth condition are met and the first set of execution conditions/evaluation conditions is not met, the terminal device performs any one of the following operations. The terminal device selects a candidate target cell with an optimal measurement result from the one or more candidate target cells, for performing the HO. Or, the terminal device selects the target cell from the one or more candidate target cells according to an order of measurement results of the candidate target cells, and/or, the terminal device hands over to the target cell. Or, the terminal device selects the target cell from the one or more candidate target cells according to priorities or priority ranks of the candidate target cells, and/or, the terminal device hands over to the target cell.

It should be noted that the HO configuration information may include two sets of execution conditions/HO conditions. The first set of execution conditions/evaluation conditions may be an execution condition/evaluation condition that enables the terminal device to hand over to the target cell quickly. The second set of execution conditions/evaluation conditions may be an existing execution condition/evaluation condition, such as the CHO execution condition/CHO evaluation condition.

Threshold parameters or other parameters in the first set of execution conditions/evaluation conditions may be set differently from parameters in the second set of execution conditions/evaluation conditions, to enable the terminal device to hand over to the target cell quickly. Exemplarily, the first set of execution conditions/evaluation conditions and the second set of execution conditions/evaluation conditions may include an event A3 or an event A5, and if the event A3 of the first set of execution conditions/evaluation conditions is compared with the event A3 of the second set of execution conditions/evaluation conditions, the threshold configured in the first set of execution conditions/evaluation conditions is lower than the threshold of the second set of execution conditions/evaluation conditions. If the event A5 of the first set of execution conditions/evaluation conditions is compared with the event A5 of the second set of execution conditions/evaluation conditions, a threshold 1 configured in the first set of execution conditions/evaluation conditions is higher than a threshold 1 of the second set of execution conditions/evaluation conditions, and a threshold 2 configured in the first set of execution conditions/evaluation conditions is lower than a threshold 2 of the second set of execution conditions/evaluation conditions.

Optionally, the first case may include one or more of:

the source base station/source cell is in, or is about to be in, or temporarily postpones leaving any one of the OFF state, the NES state, the DTX ON state, the DTX OFF state, the DRX ON state and the DRX OFF state; and
the source base station/source cell uses any one of the NES function, the OFF function, the DTX ON function, the DTX OFF function, the DRX ON function and the DRX OFF function.

That is, in case that the source base station or the source cell is able to stop providing all services to the terminal device or stop providing unnecessary services, the terminal device may perform the cell HO by using the first set of execution condition or evaluation condition, to enable the terminal device to hand over to the target cell quickly, so as to avoid the terminal device from being disconnected from the network, which results in call interruption, data jamming or other problems.

Optionally, the second case may include one or more of:

the source base station/source cell is in, or is about to be in, or temporarily postpones leaving any one of the ON state, the non-NES state, the DTX ON state, the DTX OFF state, the DRX ON state and the DRX OFF state; and
the source base station/source cell uses any one of the non-NES function, the ON function, the DTX ON function, the DTX OFF function, the DRX ON function and the DRX OFF function.

That is, in case that the source base station or the source cell is able to provide services, the terminal device may perform the cell HO by using the second set of execution condition or evaluation condition, to perform the cell HO normally.

In some embodiments, the method further includes at least one of the following operations.

In case that the one or more sets of execution conditions/evaluation conditions are not configured, or in case that the one or more sets of execution conditions/evaluation conditions are not activated or enabled, if one or more candidate target cells or all the candidate target cells do not meet an execution condition/evaluation condition for the target cell, the terminal device selects a candidate target cell with an optimal measurement result from the one or more candidate target cells, for performing the HO or perform HO evaluation.

Or, in case that the one or more sets of execution conditions/evaluation conditions are not configured, or in case that the one or more sets of execution conditions/evaluation conditions are not activated or enabled, if one or more candidate target cells or all the candidate target cells do not meet the execution condition/evaluation condition for the target cell, the terminal device selects the target cell from the one or more candidate target cells according to an order of measurement results of the candidate target cells, and/or, the terminal device hands over to the target cell.

Or, in case that the one or more sets of execution conditions/evaluation conditions are not configured, or in case that the one or more sets of execution conditions/evaluation conditions are not activated or enabled, if one or more candidate target cells or all the candidate target cells do not meet the execution condition for the target cell, the terminal device selects the target cell from the one or more candidate target cells according to priorities or priority ranks of the candidate target cells, and/or, the terminal device hands over to the target cell.

Or, in case that the one or more sets of execution conditions/evaluation conditions are not configured, or in case that the one or more sets of execution conditions/evaluation conditions are not activated or enabled, if one or more of the first condition, the second condition, the third condition and the fourth condition are met and one or more candidate target cells or all the candidate target cells do not meet the execution condition/evaluation condition for the target cell, the terminal device selects a candidate target cell with an optimal measurement result from the one or more candidate target cells, for performing the HO.

Or, in case that the one or more sets of execution conditions/evaluation conditions are not configured, or in case that the one or more sets of execution conditions/evaluation conditions are not activated or enabled, if one or more of the first condition, the second condition, the third condition and the fourth condition are met and one or more candidate target cells or all the candidate target cells do not meet the first set of execution conditions/evaluation conditions, the terminal device selects the target cell from the one or more candidate target cells according to an order of measurement results of the candidate target cells, and/or, the terminal device hands over to the target cell.

Or, in case that the one or more sets of execution conditions/evaluation conditions are not configured, or in case that the one or more sets of execution conditions/evaluation conditions are not activated or enabled, if one or more of the first condition, the second condition, the third condition and the fourth condition are met and one or more candidate target cells or all the candidate target cells do not meet the execution condition/evaluation condition for the target cell, the terminal device selects the target cell from the one or more candidate target cells according to priorities or priority ranks of the candidate target cells, and/or, the terminal device hands over to the target cell.

It should be noted that the source base station or the source cell may not configure, for the terminal device, the one or more sets of execution conditions/evaluation conditions in the HO configuration information. Furthermore, the one or more sets of execution conditions/evaluation conditions configured in the HO configuration information may be used by the terminal device by being activated or enabled

In the embodiment of the disclosure, the terminal device may perform the HO in case that the one or more sets of execution conditions/evaluation conditions are not configured in the HO configuration information, or that the one or more sets of execution conditions/evaluation conditions are not activated or enabled.

In a possible implementation, in case that the one or more sets of execution conditions/evaluation conditions are not configured in the HO configuration information, or that the one or more sets of execution conditions/evaluation conditions are not activated or enabled, the terminal device may perform any one of:

selecting a target cell with an optimal measurement result, and handing over to the target cell;
selecting a target cell from the candidate target cells according to an order of measurement results, and/or, handing over to the target cell; or
selecting a target cell from the candidate target cells according to priorities or priority ranks, and/or, handing over to the target cell.

In another possible implementation, in case that the one or more sets of execution conditions/evaluation conditions are not configured in the HO configuration information, or that the one or more sets of execution conditions/evaluation conditions are not activated or enabled, the terminal device may determine whether the candidate target cells meet the execution condition/evaluation condition for the target cell. The execution condition/evaluation condition for the target cell here may be the CHO execution condition/CHO evaluation condition, or may be an activated or enabled execution condition/evaluation condition, which is not limited in the embodiments of the disclosure. When one or more candidate target cells or all the candidate target cells do not meet the execution condition/evaluation condition for the target cell, the terminal device may perform any one of:

selecting a target cell with an optimal measurement result, and handing over to the target cell;
selecting a target cell from the candidate target cells according to an order of measurement results, and/or, handing over to the target cell; or
selecting a target cell from the candidate target cells according to priorities or priority ranks, and/or, handing over to the target cell.

In yet another possible implementation, the terminal device may also make a determination in combination with the first to fourth conditions in the above embodiment. Specifically, in case that the one or more sets of execution conditions/evaluation conditions are not configured in the HO configuration information, or that the one or more sets of execution conditions/evaluation conditions are not activated or enabled, if one or more of the first condition, the second condition, the third condition and the fourth condition are met, and one or more candidate target cells or all the candidate target cells do not meet the execution condition/evaluation condition for the target cell, the terminal device may perform any one of:

selecting a target cell with an optimal measurement result, and handing over to the target cell;
selecting a target cell from the candidate target cells according to an order of measurement results, and/or, handing over to the target cell; or
selecting a target cell from the candidate target cells according to priorities or priority ranks, and/or, handing over to the target cell.

It should be noted that relevant descriptions of the terminal device performing the above operations may be understood with reference to descriptions in the above embodiments, which will not be elaborated here for the sake of brevity.

Optionally, the terminal device receives an HO command before performing the cell HO or before meeting the execution condition/evaluation condition, and the terminal device performs the HO process, ignores, disregards or deletes the above HO configuration information it receives, and/or terminates execution of the cell HO corresponding to the above HO configuration information.

It should be noted that the above first embodiment may be implemented alone, or may be implemented together with other embodiments, which is not limited in the embodiments of the disclosure.

Second embodiment

In an actual application, states of the source base station or the source cell and the target base station or the target cell may change with time, resulting in that the terminal device frequently hands over between the source cell and the target cell back and forth.

Based on this, in an embodiment of the disclosure, the network may configure, for the terminal device, a condition of not performing/terminating execution of/exiting the cell HO. The terminal device terminates/exits the cell HO in case that one or more of the following conditions are met:

a fifth condition, related to a source base station or a source cell;
a sixth condition, related to a target base station or a target cell;
a seventh condition, related to the terminal device; and
an eighth condition, related to information received by the terminal device.

In some embodiments, the fifth condition includes one or more of:

the source base station or the source cell is in an ON state;
the source base station or the source cell is in the ON state in part of time;
the source base station or the source cell is switched from an OFF state to the ON state;
the source base station or the source cell is in a non-NES state;
the source base station or the source cell temporarily postpones entering an NES state;
the source base station or the source cell is about to leave the NES state;
the source base station or the source cell supports energy saving or NES;
the source base station or the source cell does not support energy saving or NES;
the source base station or the source cell is an NES base station or an NES cell;
the source base station or the source cell is a non-NES base station or a non-NES cell;
the source base station or the source cell does not support or use cell DTX or cell DRX;
the source base station or the source cell is in a DTX ON state;
the source base station or the source cell is in a DTX OFF state;
the source base station or the source cell is in a DRX ON state;
the source base station or the source cell is in a DRX OFF state;
the source base station or the source cell is a second type of base station or cell;
the source base station or the source cell is a second base station or a second cell;
the source base station or the source cell is a base station or a cell supporting a second protocol version;
a time length that the source base station or the source cell is in any one of the NES state, the OFF state, the DTX ON state, the DTX OFF state, the DRX ON state and the DRX OFF state is less than or equal to a first time length;
a time length that the source base station or the source cell uses any one of an NES function, an OFF function, a DTX ON function, a DTX OFF function, a DRX ON function and a DRX OFF function is less than or equal to the first time length;
a first channel quality is greater than or equal to a fourth threshold;
the source base station or the source cell is in a first time period; or, the cell HO is triggered beyond the first time period, or, a time for performing the cell HO or triggering execution of the cell HO does not include the first time period, or, a time taken for handing over to the target cell does not include the first time period, or, a time where the target cell is used does not include the first time period; or, an energy-saving time or unavailable time of the source cell does not include the first time period; and
the source base station or the source cell is in a second time period; or, the cell HO is triggered in the second time period, or, a time for performing the cell HO or triggering execution of the cell HO includes the second time period, or, a time taken for handing over to the target cell includes the second time period, or, a time where the target cell is used includes the second time period; or, an energy-saving time or unavailable time of the source cell includes the second time period.

It should be noted that relevant descriptions of the fifth condition may be understood with reference to relevant descriptions of the condition related to network status, network capability, network type and/or NES information of the source base station or the source cell, the condition related to network status, network capability, network type and/or NES information of the target base station or the target cell, the first condition and the second condition described in the above embodiments, which will not be elaborated here for the sake of brevity.

In some embodiments, the sixth condition includes one or more of:

the target base station or the target cell is in an OFF state;
the target base station or the target cell is in the OFF state in part of time;
the target base station or the target cell is switched from an ON state to the OFF state;
the target base station or the target cell is in an NES state;
the target base station or the target cell is about to be in the NES state;
the target base station or the target cell is switched from another state to the NES state;
the target base station or the target cell temporarily postpones leaving the NES state;
the target base station or the target cell supports energy saving or NES;
the target base station or the target cell is an NES base station or an NES cell;
the target base station or the target cell supports or uses cell DTX or cell DRX;
the target base station or the target cell is in a DTX ON state;
the target base station or the target cell is in a DTX OFF state;
the target base station or the target cell is in a DRX ON state;
the target base station or the target cell is in a DRX OFF state;
part of information of the target base station or the target cell is not sent or is carried/sent by other node(s);
the target base station or the target cell is a first type of base station or cell;
the target base station or the target cell is a first base station or a first cell;
the target base station or the target cell is a base station or cell supporting a first protocol version;
a time length that the target base station or the target cell is in any one of the NES state, the OFF state, the DTX ON state, the DTX OFF state, the DRX ON state and the DRX OFF state is greater than or equal to a second time length;
a time length that the target base station or the target cell uses any one of an NES function, an OFF function, a DTX ON function, a DTX OFF function, a DRX ON function and a DRX OFF function is greater than or equal to the second time length;
a second channel quality is less than or equal to a fifth threshold, where the second channel quality is a channel quality between the terminal device and the target base station or the target cell;
a time length that the second channel quality is less than or equal to the fifth threshold is greater than a third time length;
a difference between the second channel quality and a first channel quality is less than or equal to a second threshold, where the first channel quality is a channel quality between the terminal device and the source base station or the source cell;
the target base station or the target cell is in a third time period; or, an available time of the target cell includes the third time period; or, the cell HO is triggered in the third time period, or, a time for performing the cell HO or triggering execution of the cell HO includes the third time period, or, a time taken for handing over to the target cell includes the third time period, or, a time where the target cell is used includes the third time period; and
the target base station or the target cell is in a fourth time period; or, a unavailable time of the target cell includes the fourth time period; or, the cell HO is triggered beyond the fourth time period, or, a time for performing the cell HO or triggering execution of the cell HO is beyond the fourth time period, or, a time taken for handing over to the target cell is beyond the fourth time period, or, a time where the target cell is used is beyond the fourth time period.

It should be noted that relevant descriptions of the sixth condition may be understood with reference to relevant descriptions of the condition related to network status, network capability, network type and/or NES information of the source base station or the source cell, the condition related to network status, network capability, network type and/or NES information of the target base station or the target cell, the first condition and the second condition in the above embodiments, which will not be elaborated here for the sake of brevity.

In some embodiments, the seventh condition may include one or more of:

a serving cell of the terminal device is the source cell;
the terminal device supports an NES capability;
the terminal device has no data transmission demand in a first time period, where the first time period includes a time for triggering the terminal device to perform HO; or, the first time period includes a time for the terminal device to perform the HO, or a time taken for handing over to the target cell; or, the first time period includes a time period that the source base station or the source cell is in any one of an OFF state, an NES state, a DTX ON state, a DTX OFF state, a DRX ON state and a DRX OFF state; or, the first time period includes a time period that the source base station or the source cell uses any one of an NES function, an OFF function, a DTX ON function, a DTX OFF function, a DRX ON function and a DRX OFF function; or, the source base station or the source cell corresponding to the first time period supports or has any one of an NES capability, an OFF capability, a DTX ON capability, a DTX OFF capability, a DRX ON capability and a DRX OFF capability; and

the terminal device has a data transmission demand in a second time period, where the second time period includes a time period for transmission by the source base station; or, the second time period includes a time period for the terminal device and the source base station to maintain connection there-between; or, the second time period includes an available time of the source base station or the source cell; or, the second time period includes an unavailable time of the target cell; or, the second time period includes a time beyond the time for triggering the terminal device to perform the HO; or, the second time period includes a time beyond the time for the terminal device to perform the HO or a time taken for handing over to the target cell; or, the second time period includes a time period that the source base station or the source cell is in any one of an ON state, a non-NES state, a DTX ON state, a DTX OFF state, a DRX ON state and a DRX OFF state; or, the second time period includes a time period that the source base station or the source cell uses any one of an ON function, a non-NES function, an OFF function, a DTX ON function, a DTX OFF function, a DRX ON function and a DRX OFF function; or, the source base station or the source cell corresponding to the second time period supports or has any one of a non-NES capability, an ON capability, a DTX ON capability, a DTX OFF capability, a DRX ON capability and a DRX OFF capability.

It should be noted that relevant descriptions of the seventh condition may be understood with reference to relevant descriptions of the condition related to network status, network capability, network type and/or NES information of the source base station or the source cell, the condition related to network status, network capability, network type and/or NES information of the target base station or the target cell, the first condition, the second condition and the third condition in the above embodiments, which will not be elaborated here for the sake of brevity.

In some embodiments, the eighth condition includes one or more of:

the terminal device does not receive third indication information, and/or the terminal device receives fourth indication information.

The third indication information is configured for one or more of:

instructing or triggering the terminal device to perform HO evaluation;
instructing the terminal device to perform or trigger HO by using first configuration information;
instructing the terminal device to perform the HO based on pre-configured configuration information of the target cell;
instructing or triggering the terminal device to leave the source cell;
indicating a network capability or network type of the source base station or the source cell;
indicating whether the source base station or the source cell uses any one of an NES function, an OFF function, a DTX ON function, a DTX OFF function, a DRX ON function and a DRX OFF function;
indicating any one of an NES state, an OFF state, a DTX ON state, a DTX OFF state, a DRX ON state and a DRX OFF state of the source base station or the source cell;
indicating an available time or non-energy-saving time or working time of the source base station or the source cell;
indicating an unavailable time or energy-saving time or closing time of the source base station or the source cell;
indicating information transmission time between the source base station or the source cell and a terminal;
indicating information transmission time between the target base station or the target cell and the terminal;
indicating an available time or non-energy-saving time or working time of the target base station or the target cell;
indicating an unavailable time or energy-saving time or closing time of the target base station or the target cell;
indicating a condition related to network status, network capability, network type and/or NES information;
indicating a network capability or network type of the target base station or the target cell;
indicating whether the target base station or the target cell uses any one of the NES function, the OFF function, the DTX ON function, the DTX OFF function, the DRX ON function and the DRX OFF function;
indicating that the target base station or the target cell is in any one of the NES state, the OFF state, the DTX ON state, the DTX OFF state, the DRX ON state and the DRX OFF state;
instructing the terminal device to trigger CHO execution or determination;
instructing the terminal device to perform CHO based on the network status, network capability, network type and/or NES information;
instructing the terminal device to perform or trigger the CHO;
instructing a terminal device supporting an NES capability to perform or trigger the CHO;

instructing the terminal device to perform HO execution or determination;
instructing the terminal device to trigger the HO execution or determination;
instructing the terminal device to perform the HO based on the network status, network capability, network type and/or NES information;
instructing the terminal device supporting the NES capability to perform an HO process.

Furthermore, the fourth indication information is configured to indicate one or more of:

the network capability or network type of the source base station or the source cell;
whether the source base station or the source cell uses any one of the NES function, the OFF function, the DTX ON function, the DTX OFF function, the DRX ON function and the DRX OFF function;
any one of the NES state, the OFF state, the DTX ON state, the DTX OFF state, the DRX ON state and the DRX OFF state of the source base station or the source cell;
the network capability or network type of the target base station or the target cell;
whether the target base station or the target cell uses any one of the NES function, the OFF function, the DTX ON function, the DTX OFF function, the DRX ON function and the DRX OFF function;
any one of the NES state, the OFF state, the DTX ON state, the DTX OFF state, the DRX ON state and the DRX OFF state of the target base station or the target cell;
instructing the terminal device not to perform the CHO execution or determination;
instructing the terminal device not to trigger the CHO execution or determination;
instructing the terminal device to temporarily postpone performing/triggering the CHO;
instructing the terminal device to exit a CHO process;
instructing the terminal device not to perform the HO execution or determination;
instructing the terminal device not to trigger the HO execution or determination;
instructing the terminal device to temporarily postpone performing/triggering the HO; and
instructing the terminal device to exit the HO process.

Optionally, the fourth indication information may be sent by the source base station or the source cell. The source base station or the source cell may send the fourth indication information through a multicast message, or may send the fourth indication information through a dedicated message, which is not limited in the embodiments of the disclosure.

The above condition related to the network status, network capability, network type and/or NES information may be indicated by the fourth indication information, or may be indicated by other separate indication information, or may be predefined or pre-configured, which is not limited in the embodiments of the disclosure.

It should be noted that relevant descriptions of the eighth condition may be understood with reference to relevant descriptions of the fourth condition in the above embodiments, which will not be elaborated here for the sake of brevity.

The above embodiments will be described below with reference to an application scenario shown in FIG. 5. With reference to FIG. 5, a current serving cell of UE1 is cell 1, and an adjacent cell of the cell 1 is cell 2. Base station 1 corresponding to the cell 1 may send HO configuration information to the UE1, and relevant configuration information of a candidate target cell being the cell 2 is configured for the UE1 through the HO configuration information. Furthermore, the HO configuration information further includes the condition that the terminal device is required to meet to perform cell HO. In this example, the condition that the terminal device is required to meet to perform cell HO included in the HO configuration information may include: the source cell is in the NES state. After the UE1 receives the HO configuration information, the UE1 may monitor current states of the cell 1 and the cell 2 based on the HO configuration information. When the UE1 detects that the cell 1 is in the NES state, the UE1 may hand over to the cell 2. When the UE1 detects that the cell 2 is in the NES state, the UE1 hands over from the cell 2 to the cell 1. Therefore, when the cell 1 and the cell 2 are in the NES state simultaneously, the UE1 will perform ping-pong HO.

In this exemplary scenario, the terminal device may determine whether to terminate/exit the cell HO according to the sixth condition. The sixth condition may include the NES state of the target cell. Based on this, the UE1 may perform the cell HO in combination with the condition that the terminal device is required to meet to perform the cell HO configured in the HO configuration information, and the sixth condition. Specifically, when the UE1 detects that the cell 1 enters the NES state and the condition configured in the HO configuration information is met, the UE1 triggers the cell HO. At the same time, when the UE1 detects that the target cell is also in the NES state and the sixth condition is met, the UE1 may terminate execution of the cell HO.

In summary, in the method for wireless communication provided in the embodiment of the disclosure, the terminal device may be provided with a mode of exiting/terminating the cell HO, thereby avoiding a problem of ping-pong HO of the terminal device and improving communication performance. It should be noted that the second embodiment may be implemented alone, or may be implemented in combination with other embodiments, which is not limited in the embodiments of the disclosure.

Third embodiment

This embodiment will introduce modes of selecting or determining the target base station or the target cell by the terminal device in detail.

In some embodiments, the terminal device may select or determine the target base station/target cell based on one or more of:

a channel quality; a priority; a priority rank; a number of target cells that meet the condition; network status, network capability, network type and/or NES information of the target base station or the target cell; an available time of the target base station or the target cell; and ID indication of the target base station or the target cell.

It should be noted that relevant descriptions of the network status, network capability, network type and/or NES information may refer to descriptions of the network status, network capability, network type and/or NES information in the above embodiments, which will not be elaborated here for the sake of brevity.

It may be understood that in a possible implementation, the terminal device may select or determine the target base station or the target cell according to a preset rule. Exemplarily, the terminal device may measure one or more candidate target cells based on HO configuration carried in the HO configuration information, to obtain channel quality of the one or more candidate target cells. The terminal device may select a candidate target base station/candidate target cell with a best channel quality, a second best channel quality, or in a specific order of channel quality as the target base station/target cell to hand over. Furthermore, the terminal device may also select the target base station/target cell to finally hand over from candidate target base stations/candidate target cells according to the priorities/priority ranks. The terminal device may also consider relevant cases of NES, and select the target base station/target cell according to network statuses, network capabilities, network types and NES information of the candidate target base stations or candidate target cells, and available time of the candidate target base stations or candidate target cells.

Optionally, in some embodiments, the operation of selecting or determining, by the terminal device, the target base station or the target cell according to the preset rule may be implemented in the following modes.

The target base station/target cell meets at least one of the following conditions, or the target base station/target cell determined from candidate target base stations/candidate target cells meets at least one of the following conditions, or the target base station/target cell is determined according to at least one of the following conditions:

the target base station or the target cell is in an ON state;
the target base station or the target cell is in the ON state in part of time;
the target base station or the target cell is switched from an OFF state to the ON state;
the target base station or the target cell supports energy saving or NES;
the target base station or the target cell is in an NES state;
the target base station or the target cell is about to be in the NES state;
the target base station or the target cell is an NES base station or an NES cell;
a time length that the candidate target cell is in the NES state is less than a sixth time length;
a time interval between a current moment and a moment when the target base station or the target cell is about to be switched to the NES state is less than a fourth time length;
the target base station or the target cell is in a non-NES state;
the target base station or the target cell is about to be in the non-NES state;
the target base station or the target cell is a non-NES base station or a non-NES cell;
a time interval between the current moment and a moment when the target base station or the target cell is about to be switched to the non-NES state is less than a fifth time length;
the target base station or the target cell supports or uses cell DTX or cell DRX;
the target base station or the target cell does not use the cell DTX or the cell DRX;
the target base station or the target cell is in a DTX ON state;
the target base station or the target cell is in a DTX OFF state;
the target base station or the target cell is in a DRX ON state;
the target base station or the target cell is in a DRX OFF state;
the target base station or the target cell is a second type of base station or cell;
the target base station or the target cell is a second base station or a second cell;
the target base station or the target cell is a base station or a cell supporting a second protocol version;
a second channel quality meets a CHO execution condition, where the second channel quality is a channel quality between the terminal device and the target base station or the target cell;
the second channel quality is greater than or equal to a sixth threshold;
the second channel quality is greater than or equal to a third channel quality, where the third channel quality is a channel quality between the terminal device and a candidate target cell in the NES state;
a difference between the second channel quality and the third channel quality is less than or equal to a seventh threshold;

a time length that the difference between the second channel quality and the third channel quality is less than or equal to the seventh threshold is greater than a seventh time length;

there are multiple target cells that meet an HO execution/evaluation condition;

there are the multiple target cells that meet the HO execution/evaluation condition, and a channel quality difference between multiple candidate target cells is less than an eighth threshold;

there are the multiple target cells that meet the HO execution/evaluation condition, and a channel quality difference between candidate target cells with a best channel quality among the multiple candidate target cells is less than the eighth threshold;

there are multiple candidate target cells that meet a channel quality condition;

there are the multiple candidate target cells that meet the channel quality condition, and a channel quality difference between the multiple candidate target cells is less than the eighth threshold;

there are the multiple candidate target cells that meet the channel quality condition, and a channel quality difference between candidate target cells with a best channel quality among the multiple candidate target cells is less than the eighth threshold;

the target base station or the target cell is a cell with a priority greater than a first priority;

the target base station or the target cell is a cell with a non-low priority; and

the target base station or the target cell is a cell with a highest priority.

It should be noted that each candidate target base station or candidate target cell is configured with a corresponding priority or priority rank. The priority may be understood as an absolute level, and the priority rank may be understood as a relative level.

In some embodiments, the priority or priority rank of the candidate target base station or the candidate target cell is indicated by at least one of the following information sent by the source base station: dedicated signaling, system information, group signaling, the HO configuration information, or CHO configuration information.

It may be understood that the network may indicate the priority/priority rank of the candidate target base station or the candidate target cell to the terminal device separately. The network may also indicate the priority/priority rank of the candidate target base station or the candidate target cell in the HO configuration information or the CHO configuration information.

Optionally, the network may indicate priorities/priority ranks of only a part of the candidate target base stations or candidate target cells. Exemplarily, the network may indicate priorities/priority ranks of candidate target base stations or candidate target cells in the NES state through at least one of the above information, and the network may indicate through at least one of the above information that low priorities are given to which candidate target base stations or candidate target cells among the candidate target base stations or candidate target cells in the NES state.

Optionally, usage of the priorities/priority ranks of the candidate target base stations or candidate target cells, or whether the target base station/target cell to hand over is selected based on the priorities/priority ranks of the candidate target base stations or candidate target cells, may be used in the following scenarios:

there are multiple target cells that meet an HO execution/evaluation condition;

there are the multiple target cells that meet the HO execution/evaluation condition, and a channel quality difference between multiple candidate target cells is less than an eighth threshold;

there are the multiple target cells that meet the HO execution/evaluation condition, and a channel quality difference between candidate target cells with a best channel quality among the multiple candidate target cells is less than the eighth threshold;

there are multiple candidate target cells that meet a channel quality condition;

there are the multiple candidate target cells that meet the channel quality condition, and a channel quality difference between the multiple candidate target cells is less than the eighth threshold; and

there are the multiple candidate target cells that meet the channel quality condition, and a channel quality difference between candidate target cells with a best channel quality among the multiple candidate target cells is less than the eighth threshold.

It should be noted that the above HO execution/evaluation condition may be an HO execution/evaluation condition carried in the HO configuration information, or may be an HO execution/evaluation condition carried in the CHO configuration information, or may be a pre-configured HO execution/evaluation condition, which is not limited in the embodiments of the disclosure. Furthermore, the above channel quality condition may be determined based on rank values of channel quality of multiple candidate target cells. The above channel quality difference may be a difference between actual channel quality, or may be a difference between rank values of channel quality, which is not limited in the embodiments of the disclosure.

In another possible implementation, the target base station/target cell may be configured by the network. The terminal device may determine the target base station or the target cell to hand over according to the ID indication of the target base station/target cell.

Optionally, the method for wireless communication provided in the embodiment of the disclosure may further include the following operations.

The terminal device receives indication information sent by the source base station, and/or, the terminal device selects or determines the target base station/target cell according to the indication information sent by the source base station.

The indication information carries an ID of the target base station/target cell, or the indication information is configured to indicate a cell to which the terminal device is to hand over.

It should be noted that the indication information here may be a new indication information, or may be any one of the first indication information, the second indication information, the third indication information and the fourth indication information in the above embodiments, which is not limited in the embodiments of the disclosure.

In summary, the terminal device may consider different scenarios and select a suitable target base station or target cell, thereby improving flexibility of HO of the terminal device. It should be noted that the third embodiment may be implemented alone, or may be implemented in combination with other embodiments, which is not limited in the embodiments of the disclosure.

Fourth embodiment

This embodiment introduces transmission modes of signaling in the cell HO process in detail.

In an embodiment of the disclosure, the method for wireless communication may include the following operation 210.

In operation 210, the terminal device receives first signaling sent by a source base station or a source cell through group signaling and/or a dedicated message, where the first signaling includes one or more of the HO configuration information, an HO command, the first indication information, the second indication information, the third indication information and the fourth indication information.

It should be noted that the HO command may include a CHO command or an ordinary HO command, which is not limited in the embodiments of the disclosure.

Optionally, the group signaling may include group DCI, a group MAC CE message, a group RRC message, multicast information or the like, which is not limited in the embodiments of the disclosure. The dedicated message may include RRC dedicated signaling, dedicated DCI, a dedicated MAC CE message or the like, which is not limited in the embodiments of the disclosure.

It should be understood that the source base station may send the group signaling to multiple terminal devices in the coverage of the source cell, and configure information in the cell HO process for multiple terminal devices simultaneously through the group signaling, to reduce signaling overhead. The source base station may also configure the information in the cell HO process for the terminal device separately through the dedicated message, to avoid configuration failure and ensure a success rate of HO of the terminal device.

It should be noted that the source base station or the source cell may send the first signaling or part of information of the first signaling to different terminal devices by using different transmission modes.

In some embodiments, the above transmission mode may include at least one of:

the source base station sends the first signaling or part of information of the first signaling through group signaling;
the source base station sends the first signaling or part of the information of the first signaling through a dedicated message;
the source base station repeatedly sends the first signaling or part of the information of the first signaling through the group signaling; or
the source base station repeatedly sends the first signaling or part of the information of the first signaling through the dedicated message.

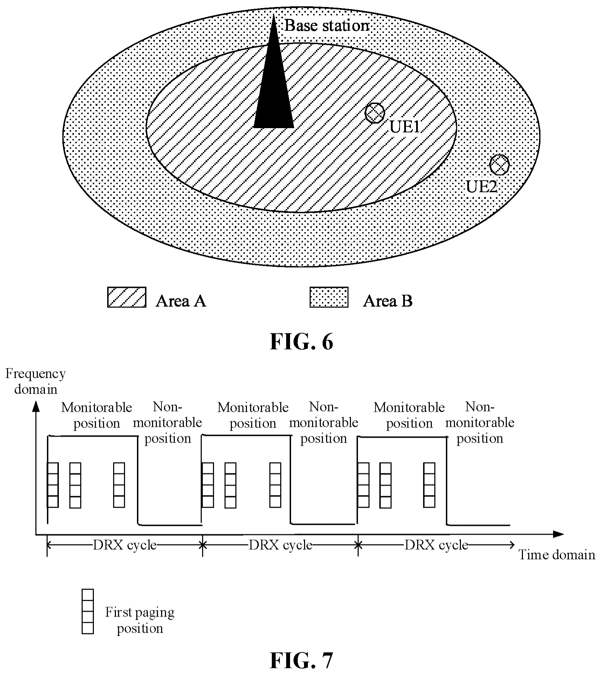

Exemplarily, with reference to FIG. 6, the source base station or the source cell may send the first signaling or part of the information of the first information to the terminal device in area A through the group signaling, and the source base station or the source cell may send the first signaling or part of the information of the first signaling to each terminal device in area B through the dedicated message.

In some embodiments, in the method for wireless communication provided in the embodiment of the disclosure, the terminal device performs reception based on transmission mode configuration information, where the transmission mode configuration information is configured to indicate a transmission mode of first signaling or a transmission mode of part of information of the first signaling.

Transmission modes of the first signaling corresponding to different terminal devices are the same or different; and/or, transmission modes of all or part of the information of the first signaling are the same or different.

In some embodiments, the transmission mode configuration information is determined based on any one of: a predefinition, a network configuration, or a preset rule.

Optionally, transmission mode configuration information of different terminal devices are the same or different. Exemplarily, transmission mode configuration information of the same type of terminal devices are the same, and correspondingly, transmission mode configuration information of different types of terminal devices are different. Or, if a distance between the terminal device and the source base station is different, corresponding transmission mode configuration information is different.

In a possible implementation, the transmission mode configuration information of the terminal device may be predefined, and "predefined" may be predefined by the protocol, or may be predefined by the terminal device and the network, which is not limited in the embodiments of the disclosure.

Exemplarily, the terminal device and the network may predefine a correspondence between the type of the terminal device and the transmission mode configuration information, such that the terminal device may determine corresponding transmission mode configuration information according to its own type. Or, the terminal device and the network may predefine a correspondence between the distance of the terminal device from the source base station and the transmission mode configuration information, such that the terminal device may determine corresponding transmission mode configuration information according to its distance from the source base station.

In another possible implementation, the transmission mode configuration information of the terminal device may be configured by the network.

Optionally, the transmission mode configuration information of the terminal device may be generated by the source base station. The source base station may send the transmission mode configuration information to the terminal device.

Optionally, the source base station may send the transmission mode configuration information to the terminal device through RRC dedicated signaling.

Optionally, the transmission mode configuration information may be common, for example, may be for terminal devices, or may be for source base stations, which is not limited in the embodiments of the disclosure.

In yet another possible implementation, the transmission mode configuration information of the terminal device may also be implemented by the terminal device itself. Optionally, the terminal device may determine the transmission mode configuration information according to the preset rule.

Exemplarily, the terminal device may determine the transmission mode according to a channel quality, path loss information, distance information and/or beam information between the terminal device and the source base station or the target base station.

In some embodiments, the transmission mode configuration information may include area configuration information and/or information about number of times of repeated transmissions.

The area configuration information is configured to indicate position information of the terminal device, or a position relationship and/or orientation relationship between the terminal device and a source base station or a source cell.

The information about number of times of repeated transmissions is configured to indicate a number of times of repeated receptions of the terminal device, or a number of times that information of the source base station or the source cell is repeatedly sent, or a number of times that the source base station repeatedly sends the first signaling or part of the information of the first signaling.

It should be noted that the position relationship between the terminal device and the source base station or the source cell indicated by the area configuration information may be whether the terminal device is at the center or edge of the source cell, or may be whether the terminal device is at the center, middle or edge of the source cell, which is not limited in the embodiments of the disclosure. Furthermore, the orientation relationship between the terminal device and the source base station or the source cell indicated by the area configuration information may be that the terminal device is in which beam direction of the source base station, for example, the terminal device is in an east/south/west/north direction of the source base station.

Optionally, there may be one or more area configuration information. Exemplarily, the area configuration information may include whether the terminal device is at the center, middle or edge of the source cell, and the terminal device is in which beam direction of the source base station.

In some embodiments, the area configuration information may be determined based on one or more of: a channel quality, path loss information, distance information and/or beam information between the terminal device and the source base station or the source cell; and/or a channel quality, path loss information, distance information and/or beam information between the terminal device and the target base station or the target cell.

In some embodiments, different area configuration information corresponds to different transmission modes.

Different area configuration information corresponding to different transmission modes may include one or more of:

for a first area, the source base station or the source cell sends the first signaling or part of the information of the first signaling to the terminal device through group signaling;

for a second area, the source base station or the source cell sends the first signaling or part of the information of the first signaling to the terminal device through a dedicated message or through the group signaling and the dedicated message;

in case that the terminal device is in the first area or the area configuration information indicates that the terminal device is in the first area, the source base station or the source cell sends the first signaling or part of the information of the first signaling to the terminal device through the group signaling; and

in case that the terminal device is in the second area or the area configuration information indicates that the terminal device is in the second area, the source base station or the source cell sends the first signaling or part of the information of the first signaling to the terminal device through the dedicated message or through the group signaling and the dedicated message.

Optionally, the first area may be an area with a better channel quality, a better path loss, a shorter distance or a larger beam range. The source base station or the source cell may send the first signaling or part of the information of the first signaling to the terminal device in the first area through group signaling. The second area may be an area with a poor channel quality, a poor path loss, a longer distance or a smaller beam range. The source base station or the source cell may send the first signaling or part of the information of the first signaling to the terminal device in the second area through a dedicated message, or through the group signaling + the dedicated message. In this way, failure of configuration of HO information is avoided, and a success rate of group HO is improved.

Exemplarily, with reference to FIG. 6, the source base station may send the first signaling or part of the information of the first signaling by using group signaling in a central area of the cell, i.e., area A, and may send the first signaling or part of the information of the first signaling by using a dedicated message or the group signaling + the dedicated message in an edge area of the cell, i.e., area B.

Furthermore, the source base station sends the first signaling or part of the information of the first signaling by using group signaling in a beam 1 direction of the cell or an east direction, and sends the first signaling or part of the information of the first signaling by using a dedicated message or the group signaling + the dedicated message in other areas.

Optionally, there may be one or more information about number of times of repeated transmissions, which is not limited in the embodiments of the disclosure.

In some embodiments, the information about number of times of repeated transmissions is the same for different terminal devices.

Or, the information about number of times of repeated transmissions is different for different terminal devices.

Or, the information about number of times of repeated transmissions is different for terminal device(s) in different areas.

It may be understood that when there is one information about number of times of repeated transmissions, the information about number of times of repeated transmissions may be common, and the information about number of times of repeated transmissions is the same for different terminal devices.

When there are multiple information about number of times of repeated transmissions, the information about number of times of repeated transmissions may be different for different terminal devices. Exemplarily, the corresponding information about number of times of repeated transmissions may be different for the terminal device at different moments, different types of terminal devices, different configurations of terminal devices, and terminal device(s) in different areas.

Exemplarily, the information of number of times of repeated transmissions may include N1, where N1 is greater than or equal to 1. In the range of the entire source cell, the source base station may repeatedly send, through the group signaling or the dedicated message, the first signaling or part of the information of the first signaling N times to all terminal devices in the coverage of the source cell.

The number of times of repeated transmissions may include N2 and N3, N2<N3. With reference to FIG. 6, the source base station may send the first signaling or part of the information of the first signaling to the terminal device in area 1 of the source cell by using group signaling, and the first signaling or part of the information of the first signaling is not sent repeatedly, or is repeatedly sent N2 times. The source base station may send the first signaling or part of the information of the first signaling to the terminal device in area 2 of the source cell by using the group signaling, and the first signaling or part of the information of the first signaling is not sent repeatedly, or is repeatedly sent N3 times.

The number of times of repeated transmissions may include N4, N5 and N6, where N4<N5<N6. In the central area of the cell, the first signaling or part of the information of the first signaling may be sent by using group signaling, and the first signaling or part of the information of the first signaling is not sent repeatedly, or is repeatedly sent N2 times; and the first signaling or part of the information of the first signaling is sent, and the first signaling or part of the information of the first signaling is not sent repeatedly, or is repeatedly sent N3 times. In a middle area of the cell, the first signaling or part of the information of the first signaling may be sent by using the group signaling, and the first signaling or part of the information of the first signaling is not sent repeatedly, or is repeatedly sent N4 times. In the edge area of the cell, the first signaling or part of the information of the first signaling may be sent by using the group signaling, and the first signaling or part of the information of the first signaling is repeatedly sent N5 times.

In some embodiments, the HO configuration information or transmission mode configuration information is further configured to indicate one or more of:

a group to which the terminal device belongs;
DCI of the group to which the terminal device belongs; and
RNTI of the group to which the terminal device belongs.

It may be understood that the source base station or the source cell may indicate the group of the terminal device and/or DCI/RNTI corresponding to the group, or the like through the HO configuration information or the transmission mode configuration information. In this way, the source base station may send the first signaling or part of the information of the first signaling to the terminal device in each group by using DCI/RNTI corresponding to the group.

In some embodiments, the area configuration information is associated with the group to which the terminal device belongs, and/or the information about number of times of repeated transmissions is associated with the group to which the terminal device belongs.

It may be understood that the source base station or the source cell may allocate and indicate different groups to the terminal device according to the area configuration information, and/or allocate and indicate different groups to the terminal device according to the information about number of times of repeated transmissions.

In some embodiments, the source base station sends the first signaling or part of the information of the first signaling to the terminal device based on the area configuration information and/or the information about number of times of repeated transmissions of the terminal device. Correspondingly, the terminal device receives the first signaling or part of the information of the first signaling based on the area configuration information and/or the information about number of times of repeated transmissions.

In a possible implementation, the source base station may send the first signaling or part of the information of the first signaling to the terminal device based on the area configuration information of the terminal device alone. Correspondingly, the terminal device receives the first signaling or part of the information of the first signaling based on the area configuration information alone.

Optionally, in case that the area configuration information indicates that the terminal device is in a first area, the first signaling or part of the information of the first signaling is sent through group signaling.

In case that the area configuration information indicates that the terminal device is in a second area, the first signaling or part of the information of the first signaling is sent through a dedicated message or through the group signaling and the dedicated message.

Optionally, the first area and the second area may be determined by the source base station according to the channel quality, path loss information, distance information and/or beam information between the terminal device and the source base station or the source cell, and/or the channel quality, path loss information, distance information and/or beam information between the terminal device and the target base station or the target cell.

Optionally, the first area and the second area may also be determined according to a range of number of terminal devices. Exemplarily, if the number of terminal devices in the cell is greater than a threshold, the first signaling or part of the information of the first signaling is sent by using group signaling. Otherwise, the first signaling or part of the information of the first signaling may be sent by using a dedicated message or the group signaling and the dedicated message.

Optionally, the first area and the second area may be determined according to the channel quality, path loss information, distance information and/or beam information between the terminal device and the source base station or the source cell, and/or the channel quality, path loss information, distance information and/or beam information between the terminal device and the target base station or the target cell, and the range of number of terminal devices. Exemplarily, when a number of users in a certain position or direction or channel quality area is greater than a threshold, the first signaling or part of the information of the first signaling is sent by using group signaling. Otherwise, the first signaling or part of the information of the first signaling may be sent by using a dedicated message or the group signaling and the dedicated message.

In another possible implementation, in case that the transmission mode configuration information includes the information about number of times of repeated transmissions, the source base station or the source cell sends the first signaling or part of the information of the first signaling according to the information about number of times of repeated transmissions. Correspondingly, the terminal device receives the first signaling or part of the information of the first signaling according to the information about number of times of repeated transmissions.

Optionally, if the information about number of times of repeated transmissions indicates N times, the source base station may repeatedly send the first signaling or part of the information of the first signaling N times to the terminal device in the range of the source cell.

In yet another possible implementation, in case that the transmission mode configuration information includes the information about number of times of repeated transmissions, the source base station or the source cell sends the first signaling or part of the information of the first signaling according to the information about number of times of repeated transmissions and the area configuration information and based on a transmission mode corresponding to the area configuration information and a number of times indicated by the information about number of times of repeated transmissions. Correspondingly, the terminal device receives the first signaling or part of the information of the first signaling according to the information about number of times of repeated transmissions and the area configuration information and based on the transmission mode corresponding to the area configuration information and the number of times indicated by the information about number of times of repeated transmissions.

Exemplarily, with reference to FIG. 6, the number of times of repeated transmissions may include N2 and N3, N2 is greater than or equal to 1, and N3 is greater than N2. With reference to FIG. 6, the source base station may send the first signaling or part of the information of the first signaling to the terminal device in the area A of the source cell by using group signaling, and the first signaling or part of the information of the first signaling is repeatedly sent N2 times. The source base station may send the first signaling or part of the information of the first signaling to the terminal device in the area B of the source cell by using a dedicated message, and the first signaling or part of the information of the first signaling is repeatedly sent N3 times.

In some embodiments, the terminal device may determine a number of times of receptions according to a channel state between the terminal device and the source base station or the source cell, where the number of times of receptions is less than or equal to the number of times indicated by the information about number of times of repeated transmissions.

It may be understood that when the information about number of times of repeated transmissions indicates that repeated transmissions are performed N times, it may be unnecessary for the terminal device to receive all the repeated transmissions. The terminal device may determine the number of times of receptions according to the channel state between the terminal device and the source base station or the source cell, and the number of times of receptions may be less than the number of times indicated by the information about number of times of repeated transmissions, or may be equal to the number of times indicated by the information about number of times of repeated transmissions.

The channel state between the terminal device and the source base station or the source cell may include a channel quality, path loss information, distance information, beam information, or other information.

In some embodiments, in case that the terminal device receives the first signaling or part of the information of the first signaling once, the terminal device may ignore or may not receive subsequent signaling sent repeatedly.

In some embodiments, after receiving the first signaling or part of the information of the first signaling once, the terminal device responds to the first signaling or part of the information of the first signaling.

It may be understood that after receiving the first signaling or part of the information of the first signaling once, the terminal device may configure the cell HO based on the first signaling or part of the information of the first signaling.

In some embodiments, the method further includes the following operations after the source base station or the source cell sends the first signaling to the terminal device through the group signaling.

The source base station or the source cell determines a terminal device that has not performed the cell HO successfully, and/or a terminal device connected to the source cell, and/or a terminal device that has not handed over.

The source base station or the source cell sends, through the dedicated message, an HO command or a CHO command to the terminal device that has not performed the cell HO successfully, and/or the terminal device connected to the source cell, and/or the terminal device that has not handed over, or the source base station or the source cell instructs the terminal device to perform HO through the dedicated message.

Or, the source base station or the source cell sends the HO command or the CHO command to the terminal device that has not performed the cell HO successfully, and/or the terminal device connected to the source cell, and/or the terminal device that has not handed over through a group message transmitted repeatedly, or the source base station or the source cell instructs the terminal device to perform the HO through the group message transmitted repeatedly.

It may be understood that the source base station or the source cell may determine the terminal device that has not performed the cell HO successfully, and/or the terminal device connected to the source cell, and/or the terminal device that has not handed over, and re-send the HO command or the CHO command to these terminal devices or instruct the terminal devices to perform the HO. Here, the source base station or the source cell may re-send the HO command or the CHO command to these terminal devices through the dedicated message, or may instruct these terminal devices to perform the HO through the dedicated message; or, the source base station or the source cell may re-send the HO command or the CHO command to these terminal devices through the group signaling transmitted repeatedly, or may instruct these terminal devices to perform the HO through the group message transmitted repeatedly. In this way, failure of indication of group HO may be avoided, and a success rate of the group HO may be improved.

In some embodiments, the above terminal device that has not performed the cell HO successfully, and/or the terminal device connected to the source cell, and/or the terminal device that has not handed over are determined by the source base station or the source cell according to seventh indication information sent by a target base station; the seventh indication information is configured to indicate a terminal device that has handed over successfully, and/or a terminal device that establishes connection with the target base station or the target cell, and/or a terminal device that has handed over to the target base station or the target cell.

It may be understood that the source base station may interact with the target base station, and determine the above terminal device that has not performed the cell HO successfully, and/or the terminal device connected to the source cell, and/or the terminal device that has not handed over through the seventh indication information sent by the target base station.

Optionally, the seventh indication information may include ID information of the terminal device that has handed over successfully, or ID information of the terminal device that establishes connection with the target base station or the target cell, or ID information of the terminal device that has handed over to the target base station or the target cell.

In summary, in the method provided in the embodiment of the disclosure, different transmission mode configuration information is configured for different terminal devices, which may avoid failure of indication of group HO, and improve the success rate of the group HO. It should be noted that the fourth embodiment may be implemented alone, or may be implemented together with other embodiments, which is not limited in the embodiments of the disclosure.

Fifth embodiment

This embodiment will introduce processes of cell reselection or cell access control in detail.

In an embodiment of the disclosure, there is also provided a method for wireless communication, the method may include the following operation 310.

In operation 310, a terminal device performs at least one of cell access, access permission, cell selection, or cell reselection according to fifth indication information.

In the embodiment of the disclosure, the terminal device may receive the fifth indication information, and the fifth indication information is used for at least one of access, access permission, cell selection, or cell reselection of a first terminal device. Or, the terminal device determines whether/how to perform at least one of cell access, access permission, cell selection, or cell reselection according to the fifth indication information.

Optionally, the terminal device may receive the fifth indication information sent by a base station. The base station here may be a serving base station of the terminal device, for example, the base station may be a source base station, a target base station or the like of the terminal device, which is not limited in the embodiments of the disclosure. Optionally, the base station may send the fifth indication information by group signaling or a dedicated message. It should be noted that modes of sending the fifth indication information by the base station may be determined by the transmission mode configuration information in the above fourth embodiment. Relevant descriptions of determining the transmission mode of the fifth indication information may refer to descriptions in the fourth embodiment, which will not be elaborated here for the sake of brevity.

In some embodiments, the fifth indication information is configured to indicate whether one or more of a network, frequency point and cell allow a first terminal device to access/select/reselect, or whether the first terminal device is allowed to access one or more of the network, frequency point and cell.

In some embodiments, the network, frequency point and cell are one or more of:

a network, frequency point and cell supporting energy-saving/NES;
a network, frequency point and cell allowing or identifying a first terminal device;
a network, frequency point and cell configured to implement energy-saving/NES;
any network, frequency point and cell;
a network, frequency point and cell not allowing a non-first terminal device; and
a network, frequency point and cell that the non-first terminal device is controlled to access or select.

In some embodiments, the network, frequency point and cell include one or more of:
the source base station, a serving base station, a current base station, an adjacent base station, a candidate target base station, a target base station, an inter-system base station, a present frequency point, a serving frequency point, a current frequency point, an adjacent frequency point, an intra-frequency point, an inter-frequency point, an inter-system frequency point, the source cell, a serving cell, a current cell, an adjacent cell, a candidate target cell, a target cell, an intra-frequency point cell, an inter-frequency point cell, and an inter-system cell.

Optionally, the first terminal device may be a terminal device supporting or identifying the fifth indication information, or the first terminal device may be a terminal device supporting energy-saving/NES, or the first terminal device may be a terminal device supporting a first protocol version. The first protocol version may be Rel-18, or a subsequent version of Rel-18.

In some embodiments, different terminal devices have different access/selection/reselection operations, where different terminal devices having different access/selection/reselection operations includes at least one of:

allowing a first terminal device to access one or more of the network, frequency point and cell;
allowing the first terminal device to select one or more of the network, frequency point and cell;
allowing the first terminal device to reselect one or more of the network, frequency point and cell;
not allowing a non-first terminal device to access one or more of the network, frequency point and cell;
not allowing the non-first terminal device to select one or more of the network, frequency point and cell; or
not allowing the non-first terminal device to reselect one or more of the network, frequency point and cell.

In some embodiments, the base station does not configure parameters for cell access/selection/reselection to a non-first terminal device. In other words, the non-first terminal device may not be configured with, or cannot acquire, or does not apply the parameters for cell selection/reselection/access.

It should be noted that the above parameters may be at least one of parameters for cell selection/reselection/access in the related art. Exemplarily, the non-first terminal device may not apply p_Max, or makes the network/frequency point/cell not meet an S criterion (for example, not meet Srxlev>0 AND Squal>0).

Optionally, parameters that cannot be acquired by or are not configured for the non-first terminal device may be processed according to default values (such as 0) or abnormal values or negative infinity.

Optionally, the fifth indication information may be indicated by one or more of broadcast information, System Information Block (SIB) and MIB. Optionally, the SIB may be an existing SIB or a new SIB.

In some embodiments, the fifth indication information may be carried through system information or RRC signaling.

Exemplarily, the system information may include at least one of MIB, SIB1, SIB2, SIB3, SIB4, SIB5, or the new SIB. That is, the fifth indication information may be carried in at least one of MIB, SIB1, SIB2, SIB3, SIB4, SIB5, or the new SIB.

It should be noted that the fifth indication information may be indicated alone, or may be indicated together with other indication information.

In a possible implementation, the fifth indication information may be indicated alone.

Optionally, if the terminal device receives the fifth indication information, or the fifth indication information appears, or the fifth indication information takes a value of "true", it indicates that: one or more of the network, frequency point and cell allow the first terminal device to access/select/reselect, and/or, one or more of the network, frequency point and cell do not allow the non-first terminal device to perform access/selection/reselection.

Optionally, if the terminal device does not receive the fifth indication information, or the fifth indication information does not appear, or the fifth indication information takes a value of "false", it indicates that:

one or more of the network, frequency point and cell do not allow the first terminal device to perform access/selection/reselection; or
the first terminal device is not allowed to access/select/reselect one or more of the network, frequency point and cell; or
one or more of the network, frequency point and cell do not allow the non-first terminal device to perform access/selection/reselection; or
the non-first terminal device is not allowed to access/select/reselect one or more of the network, frequency point and cell; or
one or more of the network, frequency point and cell do not allow all the terminal devices to perform access/selection/reselection; or
all the terminal devices are not allowed to access/select/reselect one or more of the network, frequency point and cell.

Optionally, if the terminal device does not receive the fifth indication information, or the fifth indication information does not appear, or the fifth indication information takes a value of "false", it indicates that:

one or more of the network, frequency point and cell allow the first terminal device to perform access/selection/reselection; or
the first terminal device may access/select/reselect one or more of the network, frequency point and cell; or
one or more of the network, frequency point and cell do not allow the non-first terminal device to perform access/selection/reselection; or
the non-first terminal device is not allowed to access/select/reselect one or more of the network, frequency point and cell; or
one or more of the network, frequency point and cell do not allow all the terminal devices to perform access/selection/reselection; or
all the terminal devices are not allowed to access/select/reselect one or more of the network, frequency point and cell.

In another possible implementation, the fifth indication information may reuse other indication information.

Optionally, the fifth indication information may be indicated together with access control indication information.

Optionally, the fifth indication information may be used together with a prohibition indication field in the MIB (such as a cellBarred indication field) or a prohibition indication field in the SIB1 (such as a cellReservedForOtherUse indication field, a cellReservedForOperatorUse indication field, a cellReservedForFutureUse indication field, etc.). Exemplarily, when the cellBarred indication field of the MIB is set as "barred", the first terminal device and/or the non-first terminal device need to further determine, according to the fifth indication information, whether the first terminal device and/or the non-first terminal device are prohibited, or whether access/selection/reselection of the first terminal device and/or the non-first terminal device are allowed.

When the cellBarred indication field of the MIB is set as "barred" and the cellReservedForFutureUse indication field in the SIB1 is set as "true", the first terminal device may not be prohibited, or access/selection/reselection of the first terminal device is allowed; and/or, the non-first terminal device may be prohibited, or access/selection/reselection of the non-first terminal device is not allowed.

In some embodiments, the method for wireless communication provided in the embodiment of the disclosure may further include the following operation 320.

In operation 320, the terminal device receives sixth indication information associated with an energy-saving technology, where the sixth indication information is configured to indicate whether one or more of a network, frequency point and cell allow a terminal device supporting the energy-saving technology associated with the sixth indication information to access/select/reselect, or whether the terminal device supporting the energy-saving technology associated with the sixth indication information is allowed to access one or more of the network, frequency point and cell.

It should be understood that the terminal device may perform at least one of cell access, access permission, cell selection, or cell reselection according to the sixth indication information. Or, the terminal device may determine whether/how to perform at least one of cell access, access permission, cell selection, or cell reselection according to the sixth indication information.

It should be understood that the terminal device may perform at least one of cell access, access permission, cell selection, or cell reselection according to the fifth indication information and the sixth indication information. Or, the terminal device may determine whether/how to perform at least one of cell access, access permission, cell selection, or cell reselection according to the fifth indication information and the sixth indication information.

Optionally, the terminal device may receive the sixth indication information sent by a base station.

Optionally, the base station may send the sixth indication information by group signaling or a dedicated message. It should be noted that modes of sending the sixth indication information by the base station may be determined by the transmission mode configuration information in the above fourth embodiment. Relevant descriptions of determining the transmission mode of the sixth indication information may refer to descriptions in the fourth embodiment, which will not be elaborated here for the sake of brevity.

In some embodiments, there are one or more sixth indication information.

In some embodiments, different sixth indication information is associated with different energy-saving technologies.

It may be understood that the sixth indication information may be configured to indicate whether terminal devices supporting different energy-saving technologies may access/select/reselect the network, frequency point and cell.

Exemplarily, sixth indication information 1 indicates whether a terminal device supporting a network energy-saving technology 1 may access/select/reselect the network, frequency point and cell; sixth indication information 2 indicates whether a terminal device supporting a network energy-saving technology 2 may access/select/reselect the network, frequency point and cell. Or, the sixth indication information 1 indicates whether a first terminal device supporting the network energy-saving technology 1 among first terminal devices may access/select/reselect the network, frequency point and cell; the sixth indication information 2 indicates whether a first terminal device supporting the network energy-saving technology 2 among the first terminal devices may access/select/reselect the network, frequency point and cell.

Optionally, the sixth indication information may be indicated by one or more of broadcast information, SIB and MIB. Optionally, the SIB may be an existing SIB or a new SIB.

In some embodiments, the sixth indication information may be carried through system information or RRC signaling.

Optionally, the above system information may include at least one of MIB, SIB1, SIB2, SIB3, SIB4, SIB5, or the new SIB. That is, the sixth indication information may be carried in at least one of MIB, SIB1, SIB2, SIB3, SIB4, SIB5, or the new SIB.

Optionally, the sixth indication information and the fifth indication information may be carried in the same Information Element (IE).

It should be noted that the above fifth indication information and/or sixth indication information are carried in frequency point information, or carried in cell-level information, which is not limited in the embodiments of the disclosure.

In some embodiments, after receiving the fifth indication information and/or the sixth indication information, the terminal device may further perform the following operations.

The terminal device performs at least one of cell access, access permission, cell selection, or cell reselection based on the fifth indication information and/or the sixth indication information.

In some embodiments, the operation of performing, by the terminal device, at least one of cell access, access permission, cell selection, or cell reselection based on the fifth indication information and/or the sixth indication information includes any one of the following operations.

In case that the fifth indication information indicates that one or more of the network, frequency point and cell allow a first terminal device to access/select/reselect, or that the first terminal device is allowed to access one or more of the network, frequency point and cell, if the terminal device is the first terminal device, the terminal device performs access/selection/reselection based on one or more of the network, frequency point and cell; and/or, if the terminal device is a non-first terminal device, the terminal device does not select one or more of the network, frequency point and cell to perform access/selection/reselection.

Or, in case that the fifth indication information indicates that one or more of the network, frequency point and cell do not allow a non-first terminal device to access/select/reselect, or that the non-first terminal device is not allowed to access one or more of the network, frequency point and cell, if the terminal device is the first terminal device, the terminal device performs access/selection/reselection based on one or more of the network, frequency point and cell; and/or, if the terminal device is the non-first terminal device, the terminal device does not select one or more of the network, frequency point and cell to perform access/selection/reselection.

Or, in case that the sixth indication information indicates that one or more of the network, frequency point and cell allow a terminal device supporting an energy-saving technology associated with the sixth indication information to access/select/reselect, or that the terminal device supporting the energy-saving technology associated with the sixth indication information is allowed to access one or more of the network, frequency point and cell, if the terminal device supports the energy-saving technology associated with the sixth indication information, the terminal device performs access/selection/reselection based on one or more of the network, frequency point and cell; and/or, if the terminal device does not support the energy-saving technology associated with the sixth indication information, the terminal device does not select one or more of the network, frequency point and cell to perform access/selection/reselection.

Or, in case that the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device supports the energy-saving technology associated with the sixth indication information, the terminal device performs access/selection/reselection based on one or more of the network, frequency point and cell; and/or, if the terminal device does not support the energy-saving technology associated with the sixth indication information, the terminal device does not select one or more of the network, frequency point and cell to perform access/selection/reselection.

Or, in case that the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is a terminal device supporting the energy-saving technology associated with the sixth indication information among first terminal devices, the terminal device performs access/selection/reselection based on one or more of the network, frequency point and cell; and/or, if the terminal device is a terminal device not supporting the energy-saving technology associated with the sixth indication information among the first terminal devices, the terminal device does not select one or more of the network, frequency point and cell to perform access/selection/reselection.

Or, in case that the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device is a terminal device supporting the energy-saving technology associated with the sixth indication information among first terminal devices, the terminal device performs access/selection/reselection based on one or more of the network, frequency point and cell; and/or, if the terminal device is a terminal device not supporting the energy-saving technology associated with the sixth indication information among the first terminal devices, the terminal device does not select one or more of the network, frequency point and cell to perform access/selection/reselection.

Or, in case that the fifth indication information indicates that one or more of the network, frequency point and cell allow a first terminal device to access/select/reselect, or that the first terminal device is allowed to access one or more of the network, frequency point and cell, and the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is the first terminal device and supports the energy-saving technology associated with the sixth indication information, the terminal device performs access/selection/reselection based on one or more of the network, frequency point and cell; and/or, if the terminal device is a non-first terminal device, and/or the terminal device does not support the energy-saving technology associated with the sixth indication information, the terminal device does not select one or more of the network, frequency point and cell to perform access/selection/reselection.

Or, in case that the fifth indication information indicates that one or more of the network, frequency point and cell allow a first terminal device to access/select/reselect, or that the first terminal device is allowed to access one or more of the network, frequency point and cell, and the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device is the first terminal device and supports the energy-saving technology associated with the sixth indication information, the terminal device performs access/selection/reselection based on one or more of the network, frequency point and cell; and/or, if the terminal device is a non-first terminal device, and/or the terminal device does not support the energy-saving technology associated with the sixth indication information, the terminal device does not select one or more of the network, frequency point and cell to perform access/selection/reselection.

Or, in case that the fifth indication information indicates that one or more of the network, frequency point and cell do not allow a non-first terminal device to access/select/reselect, or that the first terminal device is not allowed to access one or more of the network, frequency point and cell, and the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is the first terminal device and supports the energy-saving technology associated with the sixth indication information, the terminal device performs access/selection/reselection based on one or more of the network, frequency point and cell; and/or, if the terminal device is the non-first terminal device, and/or the terminal device does not support the energy-saving technology associated with the sixth indication information, the terminal device does not select one or more of the network, frequency point and cell to perform access/selection/reselection.

Or, in case that the fifth indication information indicates that one or more of the network, frequency point and cell do not allow a non-first terminal device to access/select/reselect, or that the first terminal device is not allowed to access one or more of the network, frequency point and cell, and the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device is the first terminal device and supports the energy-saving technology associated with the sixth indication information, the terminal device performs access/selection/reselection based on one or more of the network, frequency point and cell; and/or, if the terminal device is the non-first terminal device, and/or the terminal device does not support the energy-saving technology associated with the sixth indication information, the terminal device does not select one or more of the network, frequency point and cell to perform access/selection/reselection.

Or, in case that the fifth indication information indicates that one or more of the network, frequency point and cell do not allow the first terminal device to access/select/reselect, or that the first terminal device is not allowed to access one or more of the network, frequency point and cell, and the sixth indication information indicates that one or more of the network, frequency point and cell allow or do not allow a terminal device supporting the energy-saving technology associated with the sixth indication information to access/select/reselect, or that the terminal device supporting the energy-saving technology associated with the sixth indication information is allowed or not allowed to access one or more of the network, frequency point and cell, if the terminal device is the first terminal device, the terminal device does not select one or more of the network, frequency point and cell to perform access/selection/reselection.

Or, in case that the fifth indication information indicates that one or more of the network, frequency point and cell do not allow the first terminal device to access/select/reselect, or that the first terminal device is not allowed to access one or more of the network, frequency point and cell, and the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is the first terminal device and the terminal device supports the energy-saving technology associated with the sixth indication information, the terminal device selects one or more of the network, frequency point and cell to perform access/selection/reselection; if the terminal device is the first terminal device and the terminal device does not support the energy-saving technology associated with the sixth indication information, the terminal device does not select one or more of the network, frequency point and cell to perform access/selection/reselection.

Or, in case that the fifth indication information indicates that one or more of the network, frequency point and cell do not allow the first terminal device to access/select/reselect, or that the first terminal device is not allowed to access one or more of the network, frequency point and cell, and the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is the first terminal device, the terminal device does not select one or more of the network, frequency point and cell to perform access/selection/reselection; and/or, if the terminal device is the non-first terminal device and the terminal device supports the energy-saving technology associated with the sixth indication information, the terminal device performs access/selection/reselection based on one or more of the network, frequency point and cell; and/or, if the terminal device is the non-first terminal device and the terminal device does not support the energy-saving technology associated with the sixth indication information, the terminal device does not select one or more of the network, frequency point and cell to perform access/selection/reselection.

Or, in case that the fifth indication information indicates that one or more of the network, frequency point and cell do not allow the first terminal device to access/select/reselect, or that the first terminal device is not allowed to access one or more of the network, frequency point and cell, and the sixth indication information indicates that one or more of the network, frequency point and cell do not allow a terminal device supporting the energy-saving technology associated with the sixth indication information to access/select/reselect, or that the terminal device supporting the energy-saving technology associated with the sixth indication information is not allowed to access one or more of the network, frequency point and cell, if the terminal device is the first terminal device, the terminal device does not select one or more of the network, frequency point and cell to perform access/selection/reselection; and/or, if the terminal device is the non-first terminal device and the terminal device does not support the energy-saving technology associated with the sixth indication information, the terminal device performs access/selection/reselection based on one or more of the network, frequency point and cell; and/or, if the terminal device is the non-first terminal device and the terminal device supports the energy-saving technology associated with the sixth indication information, the terminal device does not select one or more of the network, frequency point and cell to perform access/selection/reselection.

It may be understood that the terminal device may perform at least one of cell access, access permission, cell selection, or cell reselection according to the fifth indication information only. Specifically, the terminal device may determine cell access/selection/reselection operations according to contents indicated by the fifth indication information, and whether the terminal device itself is the first terminal device or the non-first terminal device.

The terminal device may also perform at least one of cell access, access permission, cell selection, or cell reselection according to the sixth indication information only. Specifically, the terminal device may determine cell access/selection/reselection operations according to contents indicated by the sixth indication information and whether the terminal device supports the energy-saving technology associated with the sixth indication information. Or, the terminal device may determine cell access/selection/reselection operations according to contents indicated by the sixth indication information, whether the terminal device itself is the first terminal device or the non-first terminal device, and whether the terminal device itself supports the energy-saving technology associated with the sixth indication information.

Furthermore, the terminal device may perform at least one of cell access, access permission, cell selection, or cell reselection by combining the fifth indication information with the sixth indication information together.

Specifically, in case that the terminal device is the first terminal device, if the fifth indication information indicates that the first terminal device is allowed to access/select/reselect (or, the fifth indication information indicates that the non-first terminal device is not allowed to access/select/reselect) one or more of the above network, frequency point and cell, the first terminal device also needs to determine whether its access/selection/reselection is allowed according to the sixth indication information. If the terminal device supports the energy-saving technology associated with the sixth indication information, the terminal device determines to perform access/selection/reselection based on one or more of the above network, frequency point and cell. If the terminal device does not support the energy-saving technology associated with the sixth indication information, the terminal device determines that it is not allowed to access/select/reselect one or more of the above network, frequency point and cell.

In case that the terminal device is the first terminal device, if the fifth indication information indicates that the first terminal device is not allowed to access/select/reselect (or, the fifth indication information indicates that the non-first terminal device is allowed to access/select/reselect) one or more of the above network, frequency point and cell, the first terminal device is not allowed to access/select/reselect one or more of the above network, frequency point and cell, no matter whether the first terminal device supports the energy-saving technology associated with the sixth indication information.

In case that the terminal device is the non-first terminal device, if the fifth indication information indicates that access/selection/reselection of the non-first terminal device is allowed (or, the fifth indication information indicates that access/selection/reselection of the first terminal device is not allowed), the terminal device also needs to determine whether its access/selection/reselection is allowed according to the sixth indication information. If the terminal device supports the energy-saving technology associated with the sixth indication information, the terminal device determines that it is allowed to access/select/reselect one or more of the above network, frequency point and cell. If the terminal device does not support the energy-saving technology associated with the sixth indication information, the terminal device determines that it is not allowed to access/select/reselect one or more of the above network, frequency point and cell.

In case that the terminal device is the non-first terminal device, if the fifth indication information indicates that access/selection/reselection of the non-first terminal device is not allowed (or, the fifth indication information indicates that access/selection/reselection of the first terminal device is allowed), the terminal device is not allowed to access/select/reselect one or more of the above network, frequency point and cell, no matter whether the terminal device supports the energy-saving technology associated with the sixth indication information.

In summary, in the method provided in the embodiment of the disclosure, different access/selection/reselection operations may be performed for different terminal devices, to implement the NES. It should be noted that the above fifth embodiment may be implemented alone, or may be implemented together with other embodiments, which is not limited in the embodiments of the disclosure.

Sixth embodiment

This embodiment will introduce paging processes in detail.

In an embodiment of the disclosure, there is also provided a method for wireless communication, the method includes the following operation 410.

In operation 410, a terminal device receives first paging configuration information, where the first paging configuration information is used by a first terminal device to determine a first paging position.

Optionally, the terminal device may receive the first paging configuration information sent by a base station. The base station here may be a serving base station of the terminal device, for example, the base station may be a source base station, a target base station or the like of the terminal device, which is not limited in the embodiments of the disclosure.

Optionally, the first terminal device may be a terminal device supporting energy-saving/NES, or the first terminal device may be a terminal device supporting a first protocol version, or the first terminal device may be a terminal device in at least one of a specific ID, a specific service, or a specific group. The first protocol version may be Rel-18, or a subsequent version of Rel-18.

In some embodiments, the method for wireless communication provided in the embodiment of the disclosure further includes the following operation 420.

In operation 420, the terminal device receives second paging configuration information, where the second paging configuration information is used by a second terminal device to determine a second paging position.

Optionally, the terminal device may receive the second paging configuration information sent by the base station.

Optionally, the second terminal device may be a terminal device not supporting energy-saving/NES, or the second terminal device may be a terminal device not supporting the first protocol version. In other words, the second terminal device may be a non-first terminal device.

It should be noted that the base station may configure only the first paging configuration information, which is used by the first terminal device to perform paging configuration. Furthermore, the base station may also configure two paging configuration information: the first paging configuration information and the second paging configuration information, which are used by the first terminal device and the second terminal device to perform paging configuration respectively. The operation 410 and the operation 420 may be performed separately, or may be performed simultaneously, which is not limited in the embodiments of the disclosure.

It should be understood that the base station may consider an NES case, to configure the first paging configuration information for the terminal device supporting energy-saving/NES or the terminal device supporting the first protocol version. It may be understood that the first paging position configured by the first paging configuration information may not include a time domain position where the base station performs energy-saving/NES, or the base station is in an energy-saving/NES state, or the base station uses an energy-saving/NES function, to reduce monitoring positions of a paging message and achieve the NES.

The base station may configure the second paging configuration information for the second terminal device, the second paging configuration information here may be determined based on an existing paging monitoring configuration and/or a defined monitoring mechanism.

Optionally, the first paging configuration information and/or the second paging configuration information may include one or more of:

a control resource set (controlResourceSet), a search space (searchSpace), a monitoring cccasion offset of PO (firstPDCCH-MonitoringOccasionOfPO), an SSB position (ssb-PositionsInBurst), a default paging cycle (defaultPaging-Cycle), an offset parameter of PF (nAndPagingFrameOffset), and a number of POs included in the PF (Ns).

In some embodiments, the first paging configuration information may further include one or more of:

a position of a paging monitoring window;

a continuous monitoring time period;

a non-monitoring time period;

a position of the paging monitoring window in a first cycle;

a continuous monitoring time period in the first cycle; and

a non-monitoring time period in the first cycle.

The first cycle includes a cycle related to the terminal device, or a cycle related to a cell, or a cycle related to a base station.

It should be noted that each of the continuous monitoring time period and the non-monitoring time period may include at least one of a start time, an end time, and a duration length. The position of the paging monitoring window, the continuous monitoring time period and the non-monitoring time period may be used in a non-periodic scenario. The position of the paging monitoring window in the first cycle, the continuous monitoring time period in the first cycle and the non-monitoring time period in the first cycle may be used in a periodic scenario.

Optionally, the first cycle may be a paging DRX cycle, i.e., a non-continuous monitoring cycle of the terminal device. Exemplarily, with reference to FIG. 7, the first paging configuration information may configure the position of the paging monitoring window, the continuous monitoring time period and the non-monitoring time period in each DRX cycle.

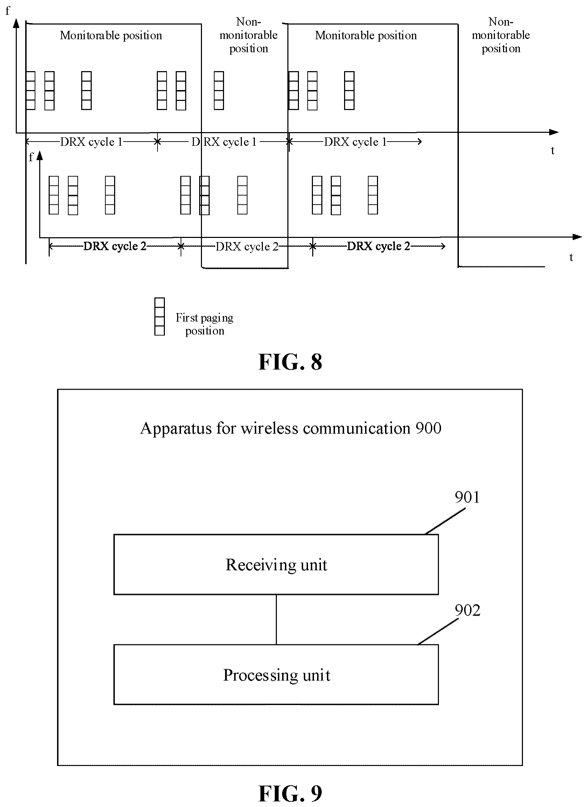

Optionally, the first cycle may also be a cell-level or base station-level cycle allowed by the network. Exemplarily, with reference to FIG. 8, the first paging configuration information may configure the position of the paging monitoring window, the continuous monitoring time period and the non-monitoring time period in the cell-level or base station-level cycle.

It should be noted that the cell-level or base station-level cycle allowed by the network are the same for different terminal devices. Exemplarily, with reference to FIG. 8, a paging DRX cycle of the UE1 is DRX cycle 1, and a paging DRX cycle of UE2 is DRX cycle 2. The DRX cycle 1 is different from the DRX cycle 2. A cell-level or base station-level cycle of the UE1 is the same as a cell-level or base station-level cycle of the UE2.

In some embodiments, the second paging configuration information includes one or more of:

a position of a paging monitoring window;

a continuous monitoring time period;

a non-monitoring time period;

a position of the paging monitoring window in a second cycle;

a continuous monitoring time period in the second cycle; and

a non-monitoring time period in the second cycle.

The second cycle includes a cycle related to the terminal device, or a cycle related to a cell, or a cycle related to a base station.

It should be noted that relevant descriptions of the second paging configuration information may refer to descriptions of the first paging configuration information, which will not be elaborated here for the sake of brevity.

In some embodiments, in case that the terminal device is the first terminal device, the terminal device may determine the first paging position based on the first paging configuration information, and monitor a paging message at the first paging position. Correspondingly, the base station performs a paging operation for the first terminal device based on the first paging configuration information.

In some embodiments, in case that the terminal device is a first terminal device that meets a condition, the terminal device may determine the first paging position based on the first paging configuration information, and monitor a paging message at the first paging position. Correspondingly, the base station performs a paging operation for the first terminal device based on the first paging configuration information. Optionally, in case that the terminal device is a first terminal device that does not meet the condition, the terminal device may determine the second paging position based on the second paging configuration information, and monitor a paging message at the second paging position. Correspondingly, the base station performs a paging operation for the second terminal device based on the second paging configuration information. Optionally, the condition may be predefined, may be configured/indicated by the network, or may be determined by a terminal. Optionally, "meeting the condition" may be one of a specific ID, a specific service, or a specific group, or the terminal that meets a specific condition may be UE with a specific ID, UE in a specific group, UE providing a specific service, etc.

It should be noted that when the network configures two paging configuration information, that is, when the network configures the first paging configuration information and the second paging configuration information for the terminal device simultaneously, in case that the terminal device is the first terminal device, the terminal device may determine the first paging position based on the first paging configuration information, and monitor the paging message at the first paging position. Furthermore, the terminal device may determine or may also determine the second paging position based on the second paging configuration information, and monitor the paging message at the second paging position, which is not limited in the embodiments of the disclosure.

Optionally, the first terminal device may determine the second paging position based on the second paging configuration information and monitor the paging message at the second paging position, in case that it meets a certain condition; optionally, the condition may be predefined, may be configured/indicated by the network, or may be determined by the terminal device. Exemplarily, in case that the first paging configuration information is not received, or the first paging configuration information is not available, or the first paging position is not available, or there is no available first paging position in a certain time period, or the terminal device is a specific first terminal device or the like, the first terminal device determines the second paging position based on the second paging configuration information and monitors the paging message at the second paging position.

Optionally, the first terminal device may also determine the second paging position according to the second paging configuration information and monitor the paging message at the second paging position, without any limitation of conditions.

Optionally, the base station pages the terminal device through paging DCI and the paging message, or notifies, through a short message, the terminal device of changes of system messages or earthquake, tsunami/public early-warning information.

In some embodiments, the operation of monitoring, by the terminal device, the paging message at the first paging position includes any one of the following operations.

The terminal device monitors the paging message at all or part of first paging positions in a paging monitoring window.

Or, the terminal device monitors the paging message at all or part of first paging positions in a continuous monitoring time period, where the continuous time period includes a time period during which the terminal device is capable of monitoring the paging message.

Or, the terminal device monitors the paging message at all or part of first paging positions in a paging monitoring window of each first cycle.

Or, the terminal device monitors the paging message at all or part of first paging positions in a continuous monitoring time period of each first cycle.

It may be understood that the terminal device monitors the paging message at all the first paging positions in the paging monitoring window, or in the continuous monitoring time period, or in the paging monitoring window of each first cycle, or in the continuous monitoring time period of each first cycle. The terminal device does not monitor beyond the paging monitoring window, or beyond the continuous monitoring time period, or beyond the paging monitoring window of each first cycle, or beyond the continuous monitoring time period of each first cycle.

Furthermore, the terminal device may monitor the paging message at part of the first paging positions in the paging monitoring window, or in the continuous monitoring time period, or in the paging monitoring window of each first cycle, or in the continuous monitoring time period of each first cycle.

Optionally, the part of the first paging positions are determined based on ID information of the terminal device and/or a preset rule.

Exemplarily, the terminal device may take a modulus of number of POs in the paging monitoring window or the continuous monitoring time period according to ID of the terminal device (such as UE ID), to determine that the terminal device monitors at which first paging position in the paging monitoring window or the continuous monitoring time period.

In some embodiments, in case that the terminal device is a second terminal device, the terminal device is denied to access the base station.

Or, in case that the terminal device is the second terminal device, the terminal device determines a second paging position based on the second paging configuration information, and monitors a paging message at the second paging position.

It should be understood that if the base station is configured with only the first paging configuration information, the base station blocks/rejects/does not allow the second terminal device to access it.

If the base station is configured with the first paging configuration information and the second paging configuration information, the second terminal device may determine the second paging position based on the second paging configuration information and monitor the paging message at the second paging position. Correspondingly, the base station may perform a paging operation for the second terminal device based on the second paging configuration information.

In summary, the embodiment of the disclosure provides a paging enhancement method, and different paging configuration information may be configured for different terminal devices. In particular, special paging configuration information is configured for the terminal device supporting energy-saving/NES, which may reduce monitoring positions of the paging message and achieve the NES. It should be noted that the above sixth embodiment may be implemented alone, or may be implemented together with other embodiments, which is not limited in the embodiments of the disclosure.

The method provided in the embodiment of the disclosure will be described below in combination with specific application scenarios.

Seventh embodiment

This embodiment provides an HO method based on NES, the method includes the following operations 1 and 2.

In operation 1, a network sends HO configuration information to UE.

The operation 1 may include at least one of the following 1.1 to 1.5.

1.1. The network is a source base station.

1.2. The UE is a UE that establishes a link or has data transmission with the source base station.

1.3. The HO configuration information is information configured by RRC dedicated signaling.

1.4. The HO configuration information is CHO-like configuration information. It may be understood that the HO configuration information includes HO configurations of multiple candidate target cells and a condition for performing HO by using the HO configurations of multiple candidate target cells.

Optionally, the condition for performing the HO by using the HO configurations of multiple candidate target cells is common (for example, it is directed to the UE, or directed to an NES state of the source base station), or is cell-specific (for example, each of multiple different candidate target cells has its own configuration, and/or it is specific to an NES state of the target cell).

Optionally, the CHO-like configuration includes an HO configuration of a candidate target cell. The HO configuration of the candidate target cell may be generated by the target base station.

Optionally, the CHO-like configuration includes an execution condition/evaluation condition. The execution condition/evaluation condition may be generated by the target base station, or the target base station may interact with the source base station, and then the execution condition/evaluation condition may be generated by the source base station.

Optionally, the condition for performing the HO by using the HO configurations of multiple candidate target cells is a time condition, that is, corresponding HO may be performed at [A1, A1+delta1]. (Otherwise, HO of the HO configurations are not performed). Optionally, [A1, A1+delta1] is a time for the source base station to be in an NES or energy-saving state, or a time when the HO may be selected to be performed. Optionally, A1 is an absolute time, or a count number based on Greenwich Mean Time, or a relative time. Optionally, delta1 may be a time length, or a timer, or a duration. Optionally, delta1 may have a unit of slot/symbol/Tc/subframe/frame/ms/10ms, etc.

Optionally, the condition for performing the HO by using the HO configurations of multiple candidate target cells is a time condition, that is, corresponding HO may be performed between [A2, A2+delta2]. (Otherwise, HO of the HO configurations are not performed beyond [A2, A2+delta2]). Optionally, [A2, A2+delta2] is a time for a corresponding candidate target cell to be in a non-NES or non-energy-saving state, or a time that may be selected to hand over to the candidate target cell. Optionally, there may be one or more time periods (such as [A2, A2+delta2]) that may be used for performing the HO.

Optionally, the condition for performing the HO by using the HO configurations of multiple candidate target cells is a time condition, that is, corresponding HO may be performed beyond [A3, A3+delta3]. (Otherwise, HO of the HO configurations are not performed between [A3, A3+delta3]). Optionally, [A3, A3+delta3] is a time for a corresponding candidate target cell to be in an NES or energy-saving state, or a time that may not be selected to hand over to the candidate target cell. Optionally, there may be one or more time periods (such as [A3, A3+delta3]) that may be used for performing the HO.

Optionally, the condition for performing the HO by using the HO configurations of multiple candidate target cells is a time condition, that is, whether the target cell is in the NES state, is about to be in the NES state, has been in the NES state, or is in the NES state at a certain time.

Optionally, the condition for performing the HO by using the HO configurations of multiple candidate target cells is indication information, that is, whether network indication information for triggering or performing HO of the HO configurations is received. For example, if the network indication information is received, HO of the HO configurations are performed. Otherwise, HO of the HO configurations are not performed. Or, if the network indication information is received, HO of the HO configurations are performed in a certain time or condition (such as channel quality, RSRP, path loss or the like of the UE and the network). Otherwise, HO of the HO configurations are not performed.

1.5. The HO configuration information is CHO-like configuration information. The HO configuration information may include a condition for performing HO based on cases of the source cell, or a condition for performing CHO, or a condition for performing the HO by using the HO configurations of multiple candidate target cells.

Optionally, the condition for performing the HO by using the HO configurations of multiple candidate target cells is common (for example, it is directed to the UE, or directed to an NES state of the source base station).

Optionally, the CHO-like configuration information includes an execution condition/evaluation condition, and the execution condition/evaluation condition is generated by the source base station.

Optionally, the CHO-like configuration information includes one or more sets of execution conditions/evaluation conditions.

The CHO-like configuration information includes multiple sets of execution conditions/evaluation conditions. For example, if the source base station is in the NES or energy-saving state, another set of evaluation condition is used for configuration (to hand over to the target cell quickly). If the source base station is in the non-NES or non-energy-saving state, an existing set of evaluation condition is used, and the target cell is handed over to as long as the existing evaluation execution condition is met.

Or, the CHO-like configuration information includes multiple sets of execution conditions/evaluation conditions. For example, if the source base station is in the NES or energy-saving state and no cell meets the CHO execution condition, another set of evaluation condition is used for configuration (to hand over to the target cell quickly). If the source base station is in the non-NES or non-energy-saving state, an existing set of evaluation condition is used, and the target cell is handed over to as long as the existing evaluation execution condition is met.

Or, the CHO-like configuration information includes configuration of one set of evaluation condition. For example, in case that the source base station is in the NES or energy-saving state, if no candidate target cell meets the CHO execution condition, several candidate cells are compared according to current measurement results, and a best cell is selected as the target cell to hand over, to hand over to it.

Optionally, the condition for performing the HO based on cases of the source cell, or the condition for performing the CHO, or the condition for performing the HO by using the HO configurations of multiple candidate target cells may be a time condition, that is, the UE may perform corresponding HO at [A4, A4+delta4]. (Otherwise, the UE does not perform the corresponding HO). Optionally, [A4, A4+delta4] is a time for the source base station to be in an NES or energy-saving state, or a time when the CHO needs to be performed, or a time when the CHO may be performed. Optionally, there may be one or more time periods (such as [A4, A4+delta4]) that may be used for performing the HO.

Optionally, in the above time condition, or in a condition that the source base station is in the NES or energy-saving state, the UE performs the HO/CHO according to a second set of execution conditions/evaluation conditions/performs the HO by using the HO configurations of multiple candidate target cells. The network configures multiple sets of execution conditions/evaluation conditions, and the second set of execution conditions/evaluation conditions (including measurement events A3/A5 or the like) are used by the UE to determine channel quality of candidate cells, and/or, select or quickly select the target cell to hand over to it), or are used by the UE to select a candidate target cell with a best channel quality measured currently, to perform the HO.

Optionally, the condition for performing the HO based on cases of the source cell, or the condition for performing the CHO, or the condition for performing the HO by using the HO configurations of multiple candidate target cells may include a state condition, that is, whether the source cell is in the NES state, is about to be in the NES state, has been in the NES state, or is in the NES state at a certain time.

Optionally, in a condition that the source base station is in the NES or energy-saving state, is about to be in the NES or energy-saving state, or has been in the NES or energy-saving state, the UE performs the HO/CHO according to a second execution condition/evaluation condition/performs the HO by using the HO configurations of multiple candidate target cells. The network configures multiple sets of execution conditions/evaluation conditions, the second set of execution conditions/evaluation conditions (including measurement events A3/A5 or the like, which are used by the UE to determine channel quality of candidate cells, and/or, select or quickly select the target cell to hand over to it), or the UE selects a candidate target cell with a best channel quality measured currently, to perform the HO.

Optionally, the condition for performing the HO based on cases of the source cell, or the condition for performing the CHO, or the condition for performing the HO by using the HO configurations of multiple candidate target cells may include a state condition, i.e., indication information, that is, whether network indication information for triggering or performing HO of the HO configurations is received. For example, if the network indication information is received, HO of the HO configurations are performed. Otherwise, HO of the HO configurations are not performed. Or, if the network indication information is received, HO of the HO configurations are performed in a certain time or condition (such as channel quality, RSRP, path loss or the like of the UE and the network). Otherwise, HO of the HO configurations are not performed.

Optionally, the indication information may be NES or energy-saving information of the source base station.

Optionally, the indication information is display indication information for triggering execution.

In operation 2, the UE saves the HO configuration information sent by the network. In case that the UE meets the condition, the UE performs HO (CHO-like HO) corresponding to the HO configuration information.

The operation 2 may include at least one of the following 2.1 to 2.6.

2.1. The UE saves the HO configuration information configured by the network, however, the UE does not perform the HO corresponding to the HO configuration information. Furthermore, in case that the UE meets the condition, the UE performs the HO (CHO-like HO) corresponding to the HO configuration information.

2.2. The UE saves the HO configuration information configured by the network, and performs measurement according to the configuration information. Or, the UE starts to perform measurement from receiving the HO configuration information. For example, in case that the CHO-like configuration is received, the UE performs measurement immediately, without waiting for NES conversion and then performing measurement.

2.3. In case that the UE meets the condition, the UE performs the HO (CHO-like HO) corresponding to the HO configuration information. Specifically, in case that the source cell meets the first condition, and/or the target cell meets the second condition, and/or the UE meets the third condition and/or the fourth condition, the UE performs the CHO, or performs the HO (CHO-like HO) corresponding to the HO configuration information.

Optionally, the first condition includes at least one of: the source cell is an NES cell, the source cell is in the NES state, the source cell changes its state (changes from non-NES to NES), a time length of the NES state of the source cell is greater than or equal to the first time length (configured together with the CHO configuration, or configured independently, or configured after the state of the source cell is switched after the CHO), channel quality of the source cell is less than or equal to the first threshold (such as an implicit energy-saving case, or an existing CHO execution condition), a difference between channel quality of the target cell and the channel quality of the source cell is greater than the second threshold, or execution of the CHO is triggered in the time of [T1, T2] of the NES or energy saving of the source cell achieves (for example, [T1, T2] may be [A1, A1+delta1], or [A4, A4+delta4]. Optionally, time information of the NES or energy saving of the source cell is indicated in the CHO-like HO configuration, or is separately indicated by the network beyond the CHO-like HO configuration.

Optionally, the second condition includes at least one of: the target cell is not an NES cell or is not in the NES state, channel quality of the target cell is greater than or equal to the third threshold, a difference between the channel quality of the target cell and the channel quality of the source cell is greater than or equal to the second threshold, a time length that the channel quality of the target cell is greater than or equal to the third threshold is greater than the first time length, the target cell meets the existing CHO execution condition (A3/5, etc.) and is in the non-NES state, the target cell is in the time of [A2, A2+delta2] corresponding to the target cell, or the target cell is beyond the time of [A3, A3+delta3] corresponding to the target cell.

Optionally, the third condition includes at least one of: a serving cell of the UE is the source cell, the UE is a UE with the NES capability, the UE has no transmission requirement in the first time length, the UE receives HO configurations for multiple cells, or RLF occurs to the UE in case of the NES of the source cell.

Optionally, the fourth condition includes at least one of: the network (the source cell) sends indication information 1, or the UE receives the indication information 1. The indication information 1 is configured to instruct the UE to perform the CHO, or to indicate the NES information of the source cell/target cell, or to instruct a UE that meets the condition (the UE with the NES capability) to perform the HO or trigger the UE to perform the CHO.

2.4. In case that the UE meets the condition, the UE performs the HO corresponding to the HO configuration information (the CHO-like HO). The condition may be used together with the existing CHO execution condition/CHO evaluation condition (trigger condition), or the condition may be decoupled from the existing CHO execution condition/CHO evaluation condition (trigger condition). That is, the execution condition/evaluation condition configured in the HO configuration information and the CHO execution condition/CHO evaluation condition are used separately, that is, the CHO-like HO has its own unique execution condition.

2.5. The UE selects a candidate target cell that meets the channel quality condition as a cell to be handed over finally, or the UE preferentially selects a non-NES cell that meets the channel quality condition as the target cell to hand over, or the UE preferentially selects a non-NES cell as the target cell to hand over, or the UE preferentially selects a cell of which NES time is shorter than the sixth time length as the target cell to hand over, or the UE preferentially selects a cell of which channel quality meets the condition and NES time is shorter than the sixth time length as the target cell to hand over.

2.6. Before performing the CHO or before meeting any CHO execution condition, the UE receives an HO command (without CHO-like configuration), then the UE performs the HO process, ignores or disregards or deletes the received CHO-like configuration, and/or terminates execution of the CHO.

In summary, this embodiment provides a cell HO method in case that the source base station is in the NES state or changes to the NES state. This embodiment may be implemented in combination with other embodiments, or may be implemented alone.

Eighth embodiment

This embodiment provides a method for selecting a target cell to hand over based on HO configuration information, the method includes the following operations 1 and 2.

In operation 1, a network sends HO configuration information to UE.

The operation 1 may include at least one of the following 1.1 to 1.5.

1.1. The network is a source base station.

1.2. The UE is a UE that establishes a link or has data transmission with the source base station.

1.3. The HO configuration information is information configured by RRC dedicated signaling.

1.4. The HO configuration information is CHO-like configuration information. It may be understood that the HO configuration information includes HO configurations of multiple candidate target cells and a condition for performing HO by using the HO configurations of multiple candidate target cells.

Optionally, the condition for performing the HO by using the HO configurations of multiple candidate target cells is common (for example, it is directed to the UE, or directed to an NES state of the source base station), or is cell-specific (for example, each of multiple different candidate target cells has its own configuration, and/or it is specific to an NES state of the target cell).

Optionally, the CHO-like configuration includes an HO configuration of a candidate target cell. The HO configuration of the candidate target cell may be generated by the target base station.

Optionally, the CHO-like configuration includes an execution condition/evaluation condition. The execution condition/evaluation condition may be generated by the target base station, or the target base station may interact with the source base station, and then the execution condition/evaluation condition may be generated by the source base station.

Optionally, the condition for performing the HO by using the HO configurations of multiple candidate target cells is a time condition, that is, corresponding HO may be performed at [A1, A1+delta1]. (Otherwise, HO of the HO configurations are not performed). Optionally, [A1, A1+delta1] is a time for the source base station to be in an NES or energy-saving state, or a time when the HO may be selected to be performed. Optionally, A1 is an absolute time, or a count number based on Greenwich Mean Time, or a relative time. Optionally, delta1 may be a time length, or a timer, or a duration. Optionally, delta1 may have a unit of slot/symbol/Tc/subframe/frame/ms/10ms, etc.

Optionally, the condition for performing the HO by using the HO configurations of multiple candidate target cells is a time condition, that is, corresponding HO may be performed between [A2, A2+delta2]. (Otherwise, HO of the HO configurations are not performed beyond [A2, A2+delta2]). Optionally, [A2, A2+delta2] is a time for a corresponding candidate target cell to be in a non-NES or non-energy-saving state, or a time that may be selected to hand over to the candidate target cell. Optionally, there may be one or more time periods (such as [A2, A2+delta2]) that may be used for performing the HO.

Optionally, the condition for performing the HO by using the HO configurations of multiple candidate target cells is a time condition, that is, corresponding HO may be performed beyond [A3, A3+delta3]. (Otherwise, HO of the HO configurations are not performed between [A3, A3+delta3]). Optionally, [A3, A3+delta3] is a time for a corresponding candidate target cell to be in an NES or energy-saving state, or a time that may not be selected to hand over to the candidate target cell. Optionally, there may be one or more time periods (such as [A3, A3+delta3]) that may be used for performing the HO.

Optionally, the condition for performing the HO by using the HO configurations of multiple candidate target cells is a time condition, that is, whether the target cell is in the NES state, is about to be in the NES state, has been in the NES state, or is in the NES state at a certain time.

Optionally, the condition for performing the HO by using the HO configurations of multiple candidate target cells is indication information, that is, whether network indication information for triggering or performing HO of the HO configurations is received. For example, if the network indication information is received, HO of the HO configurations are performed. Otherwise, HO of the HO configurations are not performed. Or, if the network indication information is received, HO of the HO configurations are performed in a certain time or condition (such as channel quality, RSRP, path loss or the like of the UE and the network). Otherwise, HO of the HO configurations are not performed.

1.5. The HO configuration information is CHO-like configuration information. The HO configuration information may include a condition for performing HO based on cases of the source cell, or a condition for performing CHO, or a condition for performing the HO by using the HO configurations of multiple candidate target cells.

Optionally, the condition for performing the HO by using the HO configurations of multiple candidate target cells is common (for example, it is directed to the UE, or directed to an NES state of the source base station).

Optionally, the CHO-like configuration information includes an execution condition/evaluation condition, and the execution condition/evaluation condition is generated by the source base station.

Optionally, the CHO-like configuration information includes one or more sets of execution conditions/evaluation conditions.

The CHO-like configuration information includes multiple sets of execution conditions/evaluation conditions. For example, if the source base station is in the NES or energy-saving state, another set of evaluation condition is used for configuration (to hand over to the target cell quickly). If the source base station is in the non-NES or non-energy-saving state, an existing set of evaluation condition is used, and the target cell is handed over to as long as the existing evaluation execution condition is met.

Or, the CHO-like configuration information includes multiple sets of execution conditions/evaluation conditions. For example, if the source base station is in the NES or energy-saving state and no cell meets the CHO execution condition, another set of evaluation condition is used for configuration (to hand over to the target cell quickly). If the source base station is in the non-NES or non-energy-saving state, an existing set of evaluation condition is used, and the target cell is handed over to as long as the existing evaluation execution condition is met.

Or, the CHO-like configuration information includes configuration of one set of evaluation condition. For example, in case that the source base station is in the NES or energy-saving state, if no candidate target cell meets the CHO execution condition, several candidate cells are compared according to current measurement results, and a best cell is selected as the target cell to hand over, to hand over to it.

Optionally, the condition for performing the HO based on cases of the source cell, or the condition for performing the CHO, or the condition for performing the HO by using the HO configurations of multiple candidate target cells may be a time condition, that is, the UE may perform corresponding HO at [A4, A4+delta4]. (Otherwise, the UE does not perform the corresponding HO). Optionally, [A4, A4+delta4] is a time for the source base station to be in an NES or energy-saving state, or a time when the CHO needs to be performed, or a time when the CHO may be performed. Optionally, there may be one or more time periods (such as [A4, A4+delta4]) that may be used for performing the HO.

Optionally, in the above time condition, or in a condition that the source base station is in the NES or energy-saving state, the UE performs the HO/CHO according to a second set of execution conditions/evaluation conditions/performs the HO by using the HO configurations of multiple candidate target cells. The network configures multiple sets of execution conditions/evaluation conditions, the second set of execution conditions/evaluation conditions (including measurement events A3/A5 or the like, which are used by the UE to determine channel quality of candidate cells, and/or, select or quickly select the target cell to hand over to it), or the UE selects a candidate target cell with a best channel quality measured currently, to perform the HO.

Optionally, the condition for performing the HO based on cases of the source cell, or the condition for performing the CHO, or the condition for performing the HO by using the HO configurations of multiple candidate target cells may include a state condition, that is, whether the source cell is in the NES state, is about to be in the NES state, has been in the NES state, or is in the NES state at a certain time.

Optionally, in a condition that the source base station is in the NES or energy-saving state, is about to be in the NES or energy-saving state, or has been in the NES or energy-saving state, the UE performs the HO/CHO according to a second execution condition/evaluation condition/performs the HO by using the HO configurations of multiple candidate target cells. The network configures multiple sets of execution conditions/evaluation conditions, the second set of execution conditions/evaluation conditions (including measurement events A3/A5 or the like, which are used by the UE to determine channel quality of candidate cells, and/or, select or quickly select the target cell to hand over to it), or the UE selects a candidate target cell with a best channel quality measured currently, to perform the HO.

Optionally, the condition for performing the HO based on cases of the source cell, or the condition for performing the CHO, or the condition for performing the HO by using the HO configurations of multiple candidate target cells may include a state condition, i.e., indication information, that is, whether network indication information for triggering or performing HO of the HO configurations is received. For example, if the network indication information is received, HO of the HO configurations are performed. Otherwise, HO of the HO configurations are not performed. Or, if the network indication information is received, HO of the HO configurations are performed in a certain time or condition (such as channel quality, RSRP, path loss or the like of the UE and the network). Otherwise, HO of the HO configurations are not performed.

Optionally, the indication information may be NES or energy-saving information of the source base station.

Optionally, the indication information is display indication information for triggering execution.

In operation 2, the UE saves the HO configuration information sent by the network. When the UE performs HO (CHO-like HO) corresponding to the HO configuration, the UE the target cell to hand over.

A candidate target cell is selected as the target cell to hand over in case that the candidate target cell meets at least one of the following conditions: the target cell is an NES cell, there are multiple target cells that meet the condition (for example, when multiple target cells meet the condition, a non-NES cell or a cell with high priority may be selected preferentially), the target cell is in or not in the NES state currently, the target cell is a cell that will be switched to the NES state, a time interval between a current moment and a moment when the target cell is about to be switched to the NES state is less than the fourth time length, the target cell is a cell that will be switched to the non-NES state, a time length between the current moment and a moment when the target cell is about to be switched to the non-NES state is less than the fifth time length, the target cell is a cell with a time length that it is in the NES state being less than the sixth time length, the target cell is a cell with channel quality meeting the channel quality condition (for example, meeting one of A3/4/5, etc.), the target cell is a cell with channel quality being greater than or equal to the sixth threshold, the target cell is a cell with channel quality being greater than or equal to channel quality of an NES target cell, the target cell is a cell with a difference between its channel quality and the channel quality of the NES target cell being less than or equal to the seventh threshold, the target cell is a cell with a time length that the difference between its channel quality and the channel quality of the NES target cell is less than or equal to the seventh threshold being greater than the seventh time length, the target cell is a preferential cell, the target cell is a cell with a non-low priority, the target cell is a preferential cell, or the target cell is a cell with a highest priority.

Optionally, the above priorities/priority ranks may be indicated by the network. For example, priorities of the candidate target cells are indicated by the network separately or in the CHO configuration. Or, the priority ranks of the candidate target cells are indicated by the network separately or in the CHO configuration. Or, whether the cell in the NES state is given a low priority, is indicated by the network separately or in the CHO configuration. Or, which cells in the NES state are given a low priority, is indicated by the network separately or in the CHO configuration.

Optionally, regarding how to operate based on priorities/priority ranks, or whether the target cell is selected according to the priorities/priority ranks, it may be used in the following cases: when there are multiple cells that meet the condition (such as the channel quality condition, or channel quality rank values), or when there are multiple cells that meet the condition (such as the channel quality condition, or channel quality rank values) and a channel quality difference/rank difference of multiple cells is in a range, or when a channel quality difference/difference of channel quality rank values of several cells with a best channel quality is in a range.

Optionally, before performing the CHO or before meeting any CHO execution condition, the UE receives an HO command (without CHO-like configuration), then the UE performs the HO process, ignores or disregards or deletes the received CHO-like configuration, and/or terminates execution of the CHO.

In summary, in this embodiment, the terminal device may select a suitable HO cell based on the CHO or CHO-like HO. This embodiment may be implemented in combination with other embodiments, or may be implemented alone.

Ninth embodiment

This embodiment provides a condition in which cell HO is not performed, the condition includes the following operations 1 and 2.

In operation 1, a network sends HO configuration information to UE.

The operation 1 may include at least one of the following 1.1 to 1.5.

1.1. The network is a source base station.

1.2. The UE is a UE that establishes a link or has data transmission with the source base station.

1.3. The HO configuration information is information configured by RRC dedicated signaling.

1.4. The HO configuration information is CHO-like configuration information. It may be understood that the HO configuration information includes HO configurations of multiple candidate target cells and a condition for performing HO by using the HO configurations of multiple candidate target cells.

Optionally, the condition for performing the HO by using the HO configurations of multiple candidate target cells is common (for example, it is directed to the UE, or directed to an NES state of the source base station), or is cell-specific (for example, each of multiple different candidate target cells has its own configuration, and/or it is specific to an NES state of the target cell).

Optionally, the CHO-like configuration includes an HO configuration of a candidate target cell. The HO configuration of the candidate target cell may be generated by the target base station.

Optionally, the CHO-like configuration includes an execution condition/evaluation condition. The execution condition/evaluation condition may be generated by the target base station, or the target base station may interact with the source base station, and then the execution condition/evaluation condition may be generated by the source base station.

Optionally, the condition for performing the HO by using the HO configurations of multiple candidate target cells is a time condition, that is, corresponding HO may be performed at [A1, A1+delta1]. (Otherwise, HO of the HO configurations are not performed). Optionally, [A1, A1+delta1] is a time for the source base station to be in an NES or energy-saving state, or a time when the HO may be selected to be performed. Optionally, A1 is an absolute time, or a count number based on Greenwich Mean Time, or a relative time. Optionally, delta1 may be a time length, or a timer, or a duration. Optionally, delta1 may have a unit of slot/symbol/Tc/subframe/frame/ms/10ms, etc.

Optionally, the condition for performing the HO by using the HO configurations of multiple candidate target cells is a time condition, that is, corresponding HO may be performed between [A2, A2+delta2]. (Otherwise, HO of the HO configurations are not performed beyond [A2, A2+delta2]). Optionally, [A2, A2+delta2] is a time for a corresponding candidate target cell to be in a non-NES or non-energy-saving state, or a time that may be selected to hand over to the candidate target cell. Optionally, there may be one or more time periods (such as [A2, A2+delta2]) that may be used for performing the HO.

Optionally, the condition for performing the HO by using the HO configurations of multiple candidate target cells is a time condition, that is, corresponding HO may be performed beyond [A3, A3+delta3]. (Otherwise, HO of the HO configurations are not performed between [A3, A3+delta3]). Optionally, [A3, A3+delta3] is a time for a corresponding candidate target cell to be in an NES or energy-saving state, or a time that may not be selected to hand over to the candidate target cell. Optionally, there may be one or more time periods (such as [A3, A3+delta3]) that may be used for performing the HO.

Optionally, the condition for performing the HO by using the HO configurations of multiple candidate target cells is a time condition, that is, whether the target cell is in the NES state, is about to be in the NES state, has been in the NES state, or is in the NES state at a certain time.

Optionally, the condition for performing the HO by using the HO configurations of multiple candidate target cells is indication information, that is, whether network indication information for triggering or performing HO of the HO configurations is received. For example, if the network indication information is received, HO of the HO configurations are performed. Otherwise, HO of the HO configurations are not performed. Or, if the network indication information is received, HO of the HO configurations are performed in a certain time or condition (such as channel quality, RSRP, path loss or the like of the UE and the network). Otherwise, HO of the HO configurations are not performed.

1.5. The HO configuration information is CHO-like configuration information. The HO configuration information may include a condition for performing HO based on cases of the source cell, or a condition for performing CHO, or a condition for performing the HO by using the HO configurations of multiple candidate target cells.

Optionally, the condition for performing the HO by using the HO configurations of multiple candidate target cells is common (for example, it is directed to the UE, or directed to an NES state of the source base station).

Optionally, the CHO-like configuration information includes an execution condition/evaluation condition, and the execution condition/evaluation condition is generated by the source base station.

Optionally, the CHO-like configuration information includes one or more sets of execution conditions/evaluation conditions.

The CHO-like configuration information includes multiple sets of execution conditions/evaluation conditions. For example, if the source base station is in the NES or energy-saving state, another set of evaluation condition is used for configuration (to hand over to the target cell quickly). If the source base station is in the non-NES or non-energy-saving state, an existing set of evaluation condition is used, and the target cell is handed over to as long as the existing evaluation execution condition is met.

Or, the CHO-like configuration information includes multiple sets of execution conditions/evaluation conditions. For example, if the source base station is in the NES or energy-saving state and no cell meets the CHO execution condition, another set of evaluation condition is used for configuration (to hand over to the target cell quickly). If the source base station is in the non-NES or non-energy-saving state, an existing set of evaluation condition is used, and the target cell is handed over to as long as the existing evaluation execution condition is met.

Or, the CHO-like configuration information includes configuration of one set of evaluation condition. For example, in case that the source base station is in the NES or energy-saving state, if no candidate target cell meets the CHO execution condition, several candidate cells are compared according to current measurement results, and a best cell is selected as the target cell to hand over, to hand over to it.

Optionally, the condition for performing the HO based on cases of the source cell, or the condition for performing the CHO, or the condition for performing the HO by using the HO configurations of multiple candidate target cells may be a time condition, that is, the UE may perform corresponding HO at [A4, A4+delta4]. (Otherwise, the UE does not perform the corresponding HO). Optionally, [A4, A4+delta4] is a time for the source base station to be in an NES or energy-saving state, or a time when the CHO needs to be performed, or a time when the CHO may be performed. Optionally, there may be one or more time periods (such as [A4, A4+delta4]) that may be used for performing the HO.

Optionally, in the above time condition, or in a condition that the source base station is in the NES or energy-saving state, the UE performs the HO/CHO according to a second set of execution conditions/evaluation conditions/performs the HO by using the HO configurations of multiple candidate target cells. The network configures multiple sets of execution conditions/evaluation conditions, the second set of execution conditions/evaluation conditions (including measurement events A3/A5 or the like, which are used by the UE to determine channel quality of candidate cells, and/or, select or quickly select the target cell to hand over to it), or the UE selects a candidate target cell with a best channel quality measured currently, to perform the HO.

Optionally, the condition for performing the HO based on cases of the source cell, or the condition for performing the CHO, or the condition for performing the HO by using the HO configurations of multiple candidate target cells may include a state condition, that is, whether the source cell is in the NES state, is about to be in the NES state, has been in the NES state, or is in the NES state at a certain time.

Optionally, in a condition that the source base station is in the NES or energy-saving state, is about to be in the NES or energy-saving state, or has been in the NES or energy-saving state, the UE performs the HO/CHO according to a second execution condition/evaluation condition/performs the HO by using the HO configurations of multiple candidate target cells. The network configures multiple sets of execution conditions/evaluation conditions, the second set of execution conditions/evaluation conditions (including measurement events A3/A5 or the like, which are used by the UE to determine channel quality of candidate cells, and/or, select or quickly select the target cell to hand over to it), or the UE selects a candidate target cell with a best channel quality measured currently, to perform the HO.

Optionally, the condition for performing the HO based on cases of the source cell, or the condition for performing the CHO, or the condition for performing the HO by using the HO configurations of multiple candidate target cells may include a state condition, i.e., indication information, that is, whether network indication information for triggering or performing HO of the HO configurations is received. For example, if the network indication information is received, HO of the HO configurations are performed. Otherwise, HO of the HO configurations are not performed. Or, if the network indication information is received, HO of the HO configurations are performed in a certain time or condition (such as channel quality, RSRP, path loss or the like of the UE and the network). Otherwise, HO of the HO configurations are not performed.

Optionally, the indication information may be NES or energy-saving information of the source base station.

Optionally, the indication information is display indication information for triggering execution.

In operation 2, the UE saves the HO configuration information sent by the network. The UE does not perform HO (CHO-like HO) corresponding to the HO configuration or terminates execution of the CHO, in case that the UE meets at least one of the following conditions.

Specifically, when the source cell meets the fifth condition, and/or the target cell meets the sixth condition, and/or the UE meets the seventh condition and/or the eighth condition, the UE is prevented from performing the HO, the CHO, or the UE does not perform the CHO.

Optionally, the fifth condition includes at least one of: the source cell is an NES cell, the source cell is in the non-NES state or temporarily postpones entering the NES state or is about to leave the NES state, a time length of the NES state of the source cell is less than or equal to the first time length, channel quality of the source cell is greater than or equal to the fourth threshold, or the source cell is in a time length of the NES or energy saving or being unable to perform the CHO.

Optionally, the sixth condition includes at least one of: the target cell is an NES cell or is in the NES state, there is no cell that is not in the NES state, there is no target cell that is about to leave the NES, a time length that the target cell is in the NES state is greater than the fourth threshold, channel quality of the target cell is less than or equal to the second threshold, a difference between the channel quality of the target cell and the channel quality of the source cell is less than the third threshold, a time length that the channel quality of the target cell is less than or equal to the second threshold is greater than the first time length, or the target cell is in a time length of the NES or energy saving or being unable to perform the CHO.

Optionally, the seventh condition includes at least one of: a serving cell of the UE is the source cell, the UE is a UE supporting an NES capability, the UE has no transmission requirement in the time of [A1, A1+delta1], or the UE has a transmission requirement in [A2, A2+delta2].

Optionally, the eighth condition includes at least one of: the network (the source cell) sends indication information 2, or the UE receives the indication information 2 (the indication information 2 is configured to instruct the UE not to perform the CHO, or configured to prevent the UE from performing the CHO, or configured to indicate the NES information of the source cell/target cell, or configured to instruct the UE that meets the condition to temporarily postpone performing HO or not to perform the HO, or configured to trigger the UE to perform the CHO); or the UE does not receive the indication information 1 in the seventh embodiment.

Optionally, with respect to the operation 2, the UE may receive the HO configurations of multiple candidate target cells before the operation 2.

Optionally, with respect to the operation 2, the UE saves the HO configuration information configured by the network, however, the UE does not perform HO corresponding to the HO configuration information. Furthermore, the UE performs the HO (CHO-like HO) corresponding to the HO configuration information in case that the UE meets the condition.

Optionally, with respect to the operation 2, the UE saves the HO configuration information configured by the network, and performs measurement according to the configuration information. Or, the UE starts to perform measurement from receiving the HO configuration information. For example, in case that the CHO-like configuration is received, the UE performs measurement immediately, without waiting for NES conversion and then performing measurement.

In summary, in this embodiment, the terminal device may exit/terminate the cell HO according to conditions, thereby avoiding the problem of ping-pong HO of the terminal device and improving communication performance. It should be noted that this embodiment may be implemented alone, or may be implemented in combination with other embodiments.

Tenth embodiment

This embodiment provides a method for avoiding failure of indication of group HO, or a method for improving a success rate of the group HO, or a method for avoiding failure of execution of group CHO, the method includes the following operations 1 and 2.

In operation 1, a network sends HO configuration information to UE.

The operation 1 may include at least one of the following 1.1 to 1.7.

1.1. The network is a source base station.

1.2. The UE is a UE that establishes a link or has data transmission with the source base station.

1.3. The HO configuration information is information configured by RRC dedicated signaling.

1.4. The HO configuration information is area configuration information.

Optionally, the area configuration information is common (for example, it is directed to the UE, or directed to the source base station).

Optionally, the area configuration information is generated by the source base station.

Optionally, the area configuration information may include indication information of one or more areas.

Optionally, the area configuration information may be related to channel quality/path loss/distance or the like between the UE and the base station (for example, at the center or edge of the cell, in the middle or edge or center of the cell, etc.), or may be related to an orientation of the UE to the base station (for example, which beam direction, east, west, south, north, etc.).

Optionally, different groups, and/or DCI/RNTI corresponding to the groups or the like are allocated and indicated to the UE according to the area configuration information.

Exemplarily, HO/CHO may be triggered by using group signaling (such as group DCI, group MAC CE, etc.) in the central area of the cell, and the HO/CHO may be triggered by using a UE dedicated message or the group signaling + the UE dedicated message in the edge area of the cell. Or, HO/CHO may be triggered by using group signaling (such as group DCI, group MAC CE, etc.) in a beam 1 direction of the cell or an east direction of the UE, and the HO/CHO may be triggered by using a UE dedicated message or the group signaling + the UE dedicated message in other areas.

1.5. The HO configuration information includes information about number of times of repeated transmissions.

Optionally, the information about number of times of repeated transmissions is common (for example, it is directed to the UE, or directed to the source base station), or may be for UEs in different areas, where the UEs in different areas have different information about number of times of repeated transmissions.

Optionally, there are one or more information about number of times of repeated transmissions.

Optionally, the information about number of times of repeated transmissions may be related to different areas, or may be irrelevant to different areas (may be common to all areas).

Optionally, the information about number of times of repeated transmissions is generated by the source base station.

Optionally, different groups, and/or DCI/RNTI corresponding to the groups or the like are allocated and indicated to the UE according to the information about number of times of repeated transmissions.

Exemplarily, HO/CHO may be triggered by using group signaling (such as group DCI, group MAC CE, etc.) in the central area of the cell, and a number of times of not sending the group signaling repeatedly or sending the group signaling repeatedly is N1. The HO/CHO may be triggered by using group signaling (such as group DCI, group MAC CE, etc.) in the edge area of the cell, and a number of times of not sending the group signaling repeatedly or sending the group signaling repeatedly is N2. Here N1 is less than N2.

For example, HO/CHO may be triggered by using group signaling (such as group DCI, group MAC CE, etc.) in the central area of the cell, and a number of times of not sending the group signaling repeatedly or sending the group signaling repeatedly is N3. The HO/CHO may be triggered by using group signaling (such as group DCI, group MAC CE, etc.) in the middle area of the cell, and a number of times of sending the group signaling repeatedly is N4. The HO/CHO may be triggered by using group signaling (such as group DCI, group MAC CE, etc.) in the edge area of the cell, and a number of times of sending the group signaling repeatedly is N2, where N3<N4<N5.

For example, in the range of the entire cell, HO/CHO may be triggered by using group signaling (such as group DCI, group MAC CE, etc.) directed to the cell or different UE groups to all UEs in the cell, and a number of times of sending the group signaling repeatedly is N6, and N6 is greater than or equal to 1.

1.6. The HO configuration information is CHO-like configuration information. It may be understood that the HO configuration information includes HO configurations of multiple candidate target cells and a condition for performing HO by using the HO configurations of multiple candidate target cells.

1.7. The HO configuration information is CHO-like configuration information. The HO configuration information may include a condition for performing HO based on cases of the source cell, or a condition for performing CHO, or a condition for performing the HO by using the HO configurations of multiple candidate target cells.

In operation 2, the UE saves the HO configuration information configured by the network. In case that the UE receives an HO command triggered by the network, the UE performs HO corresponding to the HO configuration (CHO-like HO). The network sends the HO command/CHO command which may be UE dedicated signaling (such as dedicated RRC) or group signaling (such as group DCI, group MAC CE, group RRC, etc.). Optionally, the operation of sending, by the network, the HO command/CHO command of the cell includes at least one of the following 2.1 to 2.4.

2.1. The source base station sends the HO command/CHO command N times in a certain time period, or repeatedly sends the HO command/CHO command N times.

Optionally, the HO command/CHO command is repeatedly sent N times in the range of the cell.

Optionally, the UE may determine how many times it needs to receive the HO command/CHO command triggered by the network according to RSRP, a beam direction with the network, position of the UE in the network, path loss, a distance from the network, etc.

Optionally, in case that the UE receives the HO command/CHO command triggered by the network once, the UE may ignore or may not receive the HO command/CHO command repeatedly sent subsequently.

Optionally, in case that the UE receives the HO command/CHO command triggered by the network once, the UE starts to perform the HO/CHO.

2.2. The source base station sends the HO command/CHO command by using group signaling in a certain range, and sends the HO command/CHO command by using a dedicated message in other ranges.

Optionally, the certain range may be determined for example according to channel quality or position or path loss or beam direction, or the certain range may be determined according to an orientation (such as east, west, south, north, etc.). For example, when the channel quality is greater than a threshold 1, the HO command/CHO command is sent by using the group signaling. Otherwise, the HO command/CHO command may be triggered by using the dedicated message.

Optionally, the range may be determined according to a range of a number of UEs. For example, if the number of UEs in the cell is greater than a threshold 1, the HO command/CHO command is sent by using the group signaling. Otherwise, the HO command/CHO command may be triggered by using the dedicated message.

Optionally, "in a certain range" is determined according to a range of the channel quality or the position or the path loss or the beam direction or orientation, and a number of UEs in the range of the channel quality or the position or the path loss or the beam direction or orientation. For example, when a number of users at a certain position or in a certain direction or channel quality area is greater than threshold 2, the HO command/CHO command is sent by using the group signaling. Otherwise, the HO command/CHO command may be triggered by using the dedicated message.

Optionally, the certain range may be determined between the UE and the source base station, or may be determined between the UE and the target base station.

2.3. Execution of the HO/CHO is triggered for the UE, different numbers of times of repeated transmissions are used in different areas, to send the group signaling to trigger execution of the HO/CHO. That is, the network uses different numbers of times of repeated transmissions in different areas, to send the HO command/CHO command through the group signaling.

Optionally, the certain range may be determined for example according to channel quality or position or path loss or beam direction, or the certain range may be determined according to an orientation (such as east, west, south, north, etc.). For example, when the channel quality is greater than the threshold 1, the HO command/CHO command is sent by using the group signaling. Otherwise, the HO command/CHO command may be triggered by using the dedicated message.

Optionally, the certain range may be determined between the UE and the source base station, or may be determined between the UE and the target base station.

Exemplarily, different circles are determined with the base station as a center according to a range of channel quality between the UE and the source base station. Different numbers of repetition times are used in different circles.

Optionally, the UE may determine how many times it needs to receive the HO command/CHO command triggered by the network according to the RSRP, the beam direction with the network, the position of the UE in the network, the path loss, the distance from the network, etc.

Optionally, in case that the UE receives the HO command/CHO command triggered by the network once, the UE may ignore or may not receive the HO command/CHO command repeatedly sent subsequently.

Optionally, in case that the UE receives the HO command/CHO command triggered by the network once, the UE starts to perform the HO/CHO.

2.4. The source base station sends the group signaling to trigger the HO/CHO first, and sends the dedicated message to part of UEs according to information of interaction with the target base station, to trigger corresponding UEs to perform the HO/CHO.

Optionally, the target base station exchanges UE ID of the UE that has performed the HO with the source base station according to information of an accessed UE. The source base station determines a UE that has not successfully performed the HO/CHO or a UE that has not handed over to other cells, according to the information of interaction with the target base station. The source base station hands over the UE that has not successfully performed the CHO or the UE that has not performed the HO by using dedicated signaling (such as an existing HO command, or signaling indication of triggering execution of UE dedicated CHO).

In summary, in case that the HO/CHO is triggered by using the group signaling, a problem that part of UEs are unable to perform the HO or fail or delay to perform the HO since the part of UEs do not receive the group trigger indication, may occur. This embodiment proposes a method for avoiding failure of indication of group HO (which may also be referred to as a method for improving a success rate of the group HO, or a method for avoiding failure of execution of group CHO), which ensures performance of the system and UE as well as real-time and robustness of the HO in case that the group CHO trigger indication is used. This embodiment may be implemented in combination with other embodiments, or may be implemented alone.

Eleventh embodiment

This embodiment provides a paging enhancement method to reduce time for the network to send a paging message and achieve the NES. Specifically, the method includes the following operations 1 and 2.

In operation 1, a network configures paging configuration information to UE. Specifically, the operation 1 may include at least one of the following 1.1 to 1.4.

1.1. The network configures one or more sets of paging configuration information.

Optionally, the network configures a set of paging configuration information, which is a first paging configuration information. Correspondingly, the UE may determine a first paging position according to the first paging configuration information, to perform monitoring. The first paging position determined according to the first paging configuration information is a non-uniformly distributed paging position. From a perspective of the network, the non-uniformly distributed paging position may be that a PO exists in a duration (the PO may be continuous or discontinuous) and it becomes silent or no PO exists in another duration.

Optionally, the UE supporting an NES capability may determine the first paging position according to the first paging configuration information, to perform monitoring.

Optionally, the network configures multiple sets of paging configuration information, for a UE with non-NES capability and the UE supporting the NES capability respectively. The paging monitoring position of the UE supporting the NES capability may be determined according to the first paging configuration information. A paging monitoring position of the UE with non-NES capability may be determined according to second paging configuration information. The second paging configuration information may be determined by an existing paging monitoring configuration and/or a defined monitoring mechanism.

1.2. The network prevents the UE with non-NES capability from accessing the base station or corresponding cell, or does not allow the UE with non-NES capability to access the base station or corresponding cell.

Correspondingly, the above base station or cell performs a first paging monitoring mechanism by using the first paging configuration information.

1.3. The paging configuration information may include at least one of controlResourceSet, searchSpace, firstPDCCH-MonitoringOccasionOfPO, ssb-PositionsInBurst, defaultPagingCycle, nAndPagingFrameOffset, or Ns.

1.4. The paging configuration information further includes at least one of:

a position of a paging monitoring window in each paging cycle;
time of an ON state in each paging cycle (at least one of start, end, or duration), and/or time of an OFF state in each paging cycle (at least one of start, end, or duration);
a position of a cell-level paging monitoring window allowed by the network; or
a time of an ON state of the network or time of sending paging or time of allowing paging monitoring (at least one of start, end, or duration), and/or a time of an OFF state of the network or time of not sending paging or time of not allowing paging monitoring (at least one of start, end, or duration).

In operation 2, the UE determines a paging position according to the paging configuration information, to perform paging monitoring.

Specifically, the operation 2 includes at least one of the following 2.1 to 2.4.

2.1. The paging monitoring includes monitoring paging DCI and a paging message, or monitoring an operation of notifying, through a short message, the UE of changes of system messages or earthquake, tsunami/public early-warning information.

2.2. The operation of determining, by the UE, the paging position according to the paging configuration information, to perform paging monitoring may include one of the following operations.

In a certain duration, the UE monitors paging at all PO positions (further, the UE does not monitor beyond the certain duration).

Or, in a certain duration, the UE monitors paging according to UE ID and PO positions in the certain duration (optionally, a modulus of number of POs in the window is taken according to ID of the UE (such as the UE ID), to determine that the UE monitors at which specific PO position in the window (for example, floor (UE_ID) mod the number of POs); here the UE ID may be an existing UE ID, or may be another UE ID provided by the network. Further, the UE does not monitor beyond the certain duration).

2.4. The operation of determining, by the UE, the paging position according to the paging configuration information, to perform paging monitoring includes one of the following operations.

In a monitoring window in a paging cycle, the UE monitors paging at all PO positions. Further, the UE does not monitor beyond the window.

Or, in a monitoring window in a paging cycle, the UE monitors paging according to UE ID and PO positions in the window. Optionally, a modulus of number of POs in the window is taken according to ID of the UE (such as the UE ID), to determine that the UE monitors at which specific PO position in the window (for example, floor (UE_ID) mod the number of POs). Optionally, the UE ID may be an existing UE ID, or may be another UE ID provided by the network. Further, the UE does not monitor beyond the window.

Or, in a time of an ON state in a paging cycle, the UE monitors paging at all PO positions. Further, the UE does not monitor in a time of an OFF state.

Or, in a time of an ON state in a paging cycle, the UE monitors paging according to UE ID and PO positions in the ON state. Optionally, a modulus of number of POs in the ON state is taken according to ID of the UE (such as the UE ID), to determine that the UE monitors at which specific PO position in the window (for example, floor (UE_ID) mod the number of POs). Optionally, the UE ID may be an existing UE ID, or may be another UE ID provided by the network. Further, the UE does not monitor in the time of the OFF state.

Or, in a cell-level monitoring window, the UE monitors paging at PO positions corresponding to all paging configurations (that is, positions of all POs of paging configurations configured by the network). Further, the UE does not monitor beyond the window.

Or, in a cell-level monitoring window, the UE monitors paging according to UE ID and PO positions in the window (according to the positions of all POs of paging configurations configured by the network). Optionally, a modulus of number of POs in the window is taken according to ID of the UE (such as the UE ID), to determine that the UE monitors at which specific PO position in the window (for example, floor (UE_ID) mod the number of POs). Optionally, the UE ID may be an existing UE ID, or may be another UE ID provided by the network. Further, the UE does not monitor beyond the window.

Or, in a time of an ON state at a cell-level, the UE monitors paging at PO positions corresponding to all paging configurations (that is, positions of all POs of paging configurations configured by the network). Further, the UE does not monitor in a time of an OFF state.

Or, in a time of an ON state at a cell-level, the UE monitors paging according to UE ID and PO positions in the ON state (according to the positions of all POs of paging configurations configured by the network). Optionally, a modulus of number of POs in the ON state is taken according to ID of the UE (such as the UE ID), to determine that the UE monitors at which specific PO position in the window (for example, floor (UE_ID) mod the number of POs). Optionally, the UE ID may be an existing UE ID, or may be another UE ID provided by the network. Further, the UE does not monitor in the time of the OFF state.

In summary, the embodiment of the disclosure provides a paging enhancement method, and different paging configuration information may be configured for different terminal devices. In particular, special paging configuration information is configured for the terminal device supporting energy-saving/NES, which may reduce monitoring positions of the paging message and achieve the NES. It should be noted that the above embodiment may be implemented alone, or may be implemented together with other embodiments, which is not limited in the embodiments of the disclosure.

Twelfth embodiment

This embodiment provides a method for cell reselection or cell access control, the method includes the following operations 1 and 2.

In operation 1, a network sends fifth indication information, where the fifth indication information is configured to indicate whether at least one of the network/frequency point/cell allows a first UE to access, select or reselect them, or whether the first UE is allowed to access at least one of the network/frequency point/cell. Specifically, the operation 1 includes at least one of the following 1.1 to 1.5.

1.1. The network/frequency point/cell is at least one of a present base station, a serving base station, a current base station, an adjacent base station, an inter-system base station, a present frequency point, a serving frequency point, a current frequency point, an adjacent frequency point, an intra-frequency point, an inter-frequency point, an inter-system frequency point, a present cell, a serving cell, a current cell, an adjacent cell, an intra-frequency point cell, an inter-frequency point cell, or an inter-system cell.

1.2. The network/frequency point/cell is at least one of a network/frequency point/cell of a UE supporting the NES, or a network/frequency point/cell that allows or identifies the first UE, or a network/frequency point/cell supporting or capable of achieving the NES.

1.3. The first UE is a UE supporting or identifying the fifth indication information, or a UE supporting the NES, or a UE supporting NES technologies, or a UE of Rel-18 or a subsequent version of Rel-18.

1.4. A non-first UE may not be provided with or cannot acquire or does not apply a cell selection/reselection/access parameter. Optionally, the parameter is at least one of existing cell selection/reselection/access parameters. For example, p_Max may not be applied, or the network/frequency point/cell may not meet an S criterion (for example, not meet Srxlev>0 AND Squal>0). For example, parameters that are not acquired or configured are processed according to default values (such as 0) or abnormal values or negative infinity.

1.5. The fifth indication information may be carried in system information or a RRC message.

Optionally, the system information may be carried in at least one of MIB, SIB1, SIB2, SIB3, SIB4, SIB5, or a new SIB.

Optionally, if the fifth indication information appears, or the fifth indication information takes a value of "true", access/selection/reselection of the first UE is allowed, or access/selection/reselection of the first UE may be performed; and/or, access/selection/reselection of the non-first UE is not allowed, or access/selection/reselection of the non-first UE cannot be performed.

Optionally, if the fifth indication information does not appear, or the fifth indication information takes a value of "false", access/selection/reselection of the first UE is not allowed, or access/selection/reselection of the first UE cannot be performed, or access/selection/reselection of the non-first UE is not allowed t, or access/selection/reselection of the non-first UE cannot be performed, or access/selection/reselection of all UEs cannot be performed.

Optionally, if the fifth indication information does not appear, or the fifth indication information takes a value of "false", access/selection/reselection of the non-first UE is not allowed, or access/selection/reselection of the non-first UE cannot be performed, or access/selection/reselection of all UEs cannot be performed. Further, access/selection/reselection of the first UE is allowed, or access/selection/reselection of the first UE may be performed.

Optionally, the fifth indication information may be used together with other access control indications.

Exemplarily, the fifth indication information may be used together with a bar in the MIB (such as cellBarred) or a bar indication in the SIB1 (such as cellReservedForOtherUse, cellReservedForOperatorUse, cellReservedForFutureUse, etc.).

Exemplarily, when the bar of the MIB is set as "barred", the first UE and/or the non-first UE need to further determine, according to a first indication, whether the first UE and/or the non-first UE are barred, or whether access/selection/reselection of the first UE and/or the non-first UE are allowed. Optionally, the non-first UE is barred, or access/selection/reselection of the non-first UE is not allowed.

When the bar of the MIB is set as "barred" and the cellReservedForFutureUse is set as "true", the first UE may not be barred, or access/selection/reselection of the first UE is allowed. And/or, the non-first UE may be bared, or access/selection/reselection of the non-first UE is not allowed.

Optionally, the UE may also receive sixth indication information, where the sixth indication information is configured to indicate whether UEs supporting different NES technologies may access/select/reselect the network/frequency point/cell.

Exemplarily, sixth indication information 1 indicates whether a UE supporting an NES technology 1 from first UEs may access/select/reselect the network/frequency point/cell; sixth indication information 2 indicates whether a UE supporting an NES technology 2 from first UEs may access/select/reselect the network/frequency point/cell.

Exemplarily, the sixth indication information 1 indicates whether the UE supporting the NES technology 1 may access/select/reselect the network/frequency point/cell; the sixth indication information 2 indicates whether the UE supporting the NES technology 2 may access/select/reselect the network/frequency point/cell.

Exemplarily, if the fifth indication information indicates that the first UE cannot access/select/reselect the network/frequency point/cell, both the UE supporting the NES technology 1 and the UE supporting the NES technology 2 cannot access/select/reselect the network/frequency point/cell.

Exemplarily, if the fifth indication information indicates that the first UE cannot access/select/reselect the network/frequency point/cell, the UE supporting the NES technology 1 needs to determine whether it may access the network/frequency point/cell according to the sixth indication information 1 (for example, the sixth indication information 1 appears, or takes a value of "true"). Further, a UE that does not support the NES technology 2 cannot access the network/frequency point/cell.

Optionally, the sixth indication information and the fifth indication information may be carried in the same IE.

Optionally, the sixth indication information may be carried in system information or a RRC message. Optionally, the system information may be carried in at least one of MIB, SIB1, SIB2, SIB3, SIB4, SIB5, or a new SIB.

Optionally, the fifth indication information and/or the sixth indication information are carried in frequency point information, or carried in cell-level information.

In operation 2, the UE performs access control or selects or reselects the network/frequency point/cell according to the fifth indication information and/or the sixth indication information.

Exemplarily, the first UE performs access and is not barred/blocked, and may select or reselect the network/frequency point/cell.

Exemplarily, the non-first UE cannot perform access and is barred/blocked, and cannot select or reselect the network/frequency point/cell.

Exemplarily, UE1 supporting a first technology from the first UEs may perform access and is not barred/blocked, and may select or reselect the network/frequency point/cell.

Exemplarily, UE2 supporting the first technology from the first UEs cannot perform access and is barred/blocked, and cannot select or reselect the network/frequency point/cell.

It should be noted that the network does not send the fifth indication information, instead, sends only one or more sixth indication information. The UE performs access control, determines whether it is barred/blocked, and selects or reselects the network/frequency point/cell according to the sixth indication information, or the UE performs access control, determines whether it is barred/blocked, and selects or reselects the network/frequency point/cell according to the second indication information and an existing bar mechanism (the bar in the MIB/SIB). Usage of the sixth indication information is the same as the operation 2, which will not be elaborated here.

In summary, in the method provided in the embodiment of the disclosure, different access/selection/reselection operations may be performed for different terminal devices, to implement the NES. It should be noted that the above embodiment may be implemented alone, or may be implemented together with other embodiments, which is not limited in the embodiments of the disclosure.

Preferred implementations of the disclosure have been described in detail as above with reference to the drawings. However, the disclosure is not limited to specific details in the above implementations. Multiple simple modifications may be made to the technical solutions of the disclosure within the scope of the technical concept of the disclosure, and all these simple modifications belong to the scope of protection of the disclosure. For example, various specific technical features described in the above specific implementations may be combined in any suitable manner without conflict, and various possible combinations will not be further explained in the disclosure, to avoid unnecessary repetition. For another example, various different implementations of the disclosure may also be arbitrarily combined there-between, as long as such combination does not violate the idea of the disclosure, and should also be considered as contents disclosed in the disclosure. For another example, various embodiments described in the disclosure and/or technical features in the various embodiments may be arbitrarily combined with the related art without conflict, and technical solutions obtained after combination should also fall within the scope of protection of the disclosure.

It should also be understood that in various method embodiments of the disclosure, sizes of serial numbers of the above processes do not mean a sequence of execution, and the sequence of execution of each process should be determined by its function and internal logic, and should not constitute any limitation on implementation processes of the embodiments of the disclosure. Furthermore, in the embodiments of the disclosure, term "and/or" is only an association relationship describing associated objects, and represents that three relationships may exist. For example, A and/or B may represent three conditions: i.e., independent existence of A, existence of both A and B, and independent existence of B. Furthermore, character "/" in the disclosure usually represents that anterior and posterior associated objects form an "or" relationship.

An embodiment of the disclosure provides an apparatus for wireless communication, the apparatus is applied to a terminal device. With reference to FIG. 9, the apparatus for wireless communication includes a receiving unit 901.

The receiving unit 901 is configured to receive HO configuration information, where the HO configuration information includes an HO configuration and/or a condition that the terminal device is required to meet to perform cell HO.

Optionally, the condition is related to one or more of network status, network capability, network type and NES information.

Optionally, the condition includes:

a condition related to network status, network capability, network type and/or NES information of a source base station or a source cell; and/or

a condition related to network status, network capability, network type and/or NES information of a target base station or a target cell.

Optionally, the condition related to network status, network capability, network type and/or NES information of the source base station or the source cell includes one or more of:

the source base station or the source cell is in an OFF state;
the source base station or the source cell is in the OFF state in part of time;
the source base station or the source cell is switched from an ON state to the OFF state;
the source base station or the source cell is in an NES state;
the source base station or the source cell is about to be in the NES state;
the source base station or the source cell is switched from another state to the NES state;
the source base station or the source cell temporarily postpones leaving the NES state;
the source base station or the source cell supports energy saving or NES;
the source base station or the source cell is an NES base station or an NES cell;
the source base station or the source cell supports or uses cell DTX or cell DRX;
the source base station or the source cell is in a DTX ON state;
the source base station or the source cell is in a DTX OFF state;
the source base station or the source cell is in a DRX ON state;
the source base station or the source cell is in a DRX OFF state;
part of information of the source base station or the source cell is not sent or is carried/sent by other node(s);
the source base station or the source cell is a first type of base station or cell;
the source base station or the source cell is a first base station or a first cell;
the source base station or the source cell is a base station or cell supporting a first protocol version;
the source base station or the source cell is in a first time period; or, the cell HO is triggered in the first time period, or, a time for performing the cell HO or triggering execution of the cell HO includes the first time period, or, a time taken for handing over to the target cell includes the first time period, or, a time where the target cell is used includes the first time period; or, an energy-saving time or unavailable time of the source cell is the first time period;
the source base station or the source cell is in a second time period; or, the cell HO is triggered beyond the second time period, or, a time for performing the cell HO or triggering execution of the cell HO is beyond the second time period, or, a time taken for handing over to the target cell is beyond the second time period, or, a time where the target cell is used is beyond the second time period; or, an energy-saving time or unavailable time of the source cell is beyond the second time period;

the terminal device receives first indication information, where the first indication information is configured to instruct or trigger the terminal device to perform the cell HO; or, the first indication information is configured to instruct or trigger the terminal device to perform HO evaluation; or, the first indication information is configured to instruct the terminal device to perform or trigger HO by using the HO configuration information; or, the first indication information is configured to instruct the terminal device to perform the HO based on pre-configured configuration information of the target cell; or, the first indication information is configured to indicate a condition related to network status, network capability, network type and/or NES information;

the terminal device receives the first indication information, and a channel state between the terminal device and the source base station or the source cell meets a channel condition; and

the terminal device receives the first indication information, and a channel state between the terminal device and the target base station or the target cell meets the channel condition.

Optionally, the first indication information is determined based on state indication information of the source base station or the source cell, and the state indication information is configured to indicate any one of the NES state, the OFF state, the DTX ON state, the DTX OFF state, the DRX ON state and the DRX OFF state of the source base station or the source cell.

Or, the first indication information is determined based on any one of an NES capability, an OFF capability, a DTX ON capability, a DTX OFF capability, a DRX ON capability and a DRX OFF capability of the source base station or the source cell.

Or, the first indication information is determined based on the source base station or the source cell using any one of an NES function, an OFF function, a DTX ON function, a DTX OFF function, a DRX ON function and a DRX OFF function.

Or, the first indication information is determined based on a demand of the source base station or the source cell.

Or, the first indication information is determined based on a demand or state of the target base station or the target cell.

Or, the first indication information is determined based on a capability of the target base station or the target cell.

Optionally, the condition related to network status, network capability, network type and/or NES information of the target base station or the target cell includes one or more of:

the target base station or the target cell is in an ON state;

the target base station or the target cell is in the ON state in part of time;

the target base station or the target cell is switched from an OFF state to the ON state;

the target base station or the target cell is in a non-NES state;

the target base station or the target cell is about to be in the non-NES state;

the target base station or the target cell temporarily postpones leaving the non-NES state;

the target base station or the target cell is a non-NES base station or a non-NES cell;

the target base station or the target cell supports or uses cell DTX or cell DRX;

the target base station or the target cell is in a DTX ON state;

the target base station or the target cell is in a DTX OFF state;

the target base station or the target cell is in a DRX ON state;

the target base station or the target cell is in a DRX OFF state;

the target base station or the target cell is a second type of base station or cell;

the target base station or the target cell is a second base station or a second cell;

the target base station or the target cell is a base station or a cell supporting a second protocol version;

the target base station or the target cell is in a third time period; or, an available time of the target cell includes the third time period; or, the cell HO is triggered in the third time period, or, a time for performing the cell HO or triggering execution of the cell HO includes the third time period, or, a time taken for handing over to the target cell includes the third time period, or, a time where the target cell is used includes the third time period;

the target base station or the target cell is in a fourth time period; or, a unavailable time of the target cell includes the fourth time period; or, the cell HO is triggered beyond the fourth time period, or, a time for performing the cell HO or triggering execution of the cell HO is beyond the fourth time period, or, a time taken for handing over to the target cell is beyond the fourth time period, or, a time where the target cell is used is beyond the fourth time period;

the terminal device receives second indication information, where the second indication information is configured to instruct or trigger the terminal device to perform the cell HO; or, the second indication information is configured to instruct or trigger the terminal device to perform HO evaluation; or, the second indication information is configured to instruct the terminal device to perform or trigger HO by using the HO configuration information; or, the second indication information is configured to instruct the terminal device to perform the HO based on pre-configured configuration information of the target cell; or, the second indication information is configured to indicate a condition related to network status, network capability, network type and/or NES information;

the terminal device receives the second indication information, and a channel state between the terminal device and the target base station or the target cell meets a channel condition; and

the terminal device receives the second indication information, and a channel state between the terminal device and the source base station or the source cell meets the channel condition.

Optionally, the second indication information is determined based on state indication information of the target base station or the target cell, and the state indication information is configured to indicate any one of the non-NES state, the ON state, the DTX ON state, the DTX OFF state, the DRX ON state and the DRX OFF state of the target base station or the target cell.

Or, the second indication information is determined based on any one of a non-NES capability, an ON capability, a DTX ON capability, a DTX OFF capability, a DRX ON capability and a DRX OFF capability of the target base station or the target cell.

Or, the second indication information is determined based on the target base station or the target cell using any one of a non-NES function, an ON function, a DTX ON function, a DTX OFF function, a DRX ON function and a DRX OFF function.

Or, the second indication information is determined based on a demand of the target base station or the target cell.

Or, the second indication information is determined based on a demand of the source base station or the source cell.

Or, the second indication information is determined based on a capability of the source base station or the source cell.

Optionally, at least one of the first time period, the second time period, the third time period, or the fourth time period is determined based on one or more of:

a start time, an end time, and a duration length.

The start time and/or the end time is an absolute time, or a count value determined based on Greenwich Mean Time, or a relative time.

The duration length is determined based on one or more of a specified time length, a timer and a duration.

Optionally, the condition is for all cells, or is cell-specific.

Optionally, the condition related to network status, network capability, network type and/or NES information of the source base station or the source cell is the same for different terminal devices.

The condition related to network status, network capability, network type and/or NES information of the source base station or the source cell is the same for different source cells in any one of an OFF state, an NES state, a DTX ON state, a DTX OFF state, a DRX ON state and a DRX OFF state.

The condition related to network status, network capability, network type and/or NES information of the target base station or the target cell is different for different target cells.

The condition related to network status, network capability, network type and/or NES information of the target base station or the target cell is different for different target cells in any one of an OFF state, an NES state, a DTX ON state, a DTX OFF state, a DRX ON state and a DRX OFF state.

An available time, or a time capable of triggering HO, or a time selectable to hand over to the target cell, or a time capable of maintaining connection and/or performing transmission with the terminal device is different for different candidate target cells

The available time, or the time capable of triggering HO, or the time selectable to hand over to the target cell, or the time capable of maintaining connection and/or performing transmission with the terminal device is different for the source cell and a candidate target cell.

Optionally, the apparatus for wireless communication 900 further includes a processing unit 902, the processing unit 902 is configured to perform the cell HO, or consider that a cell HO execution condition is met, or trigger execution of HO evaluation, or allow the terminal device to leave the source base station or the source cell, in case that one or more of the following conditions are met:

a first condition, related to the source base station or the source cell;
a second condition, related to a target base station or a target cell;
a third condition, related to the terminal device; and
a fourth condition, related to information received by the terminal device.

Optionally, the first condition includes one or more of:

the condition related to network status, network capability, network type and/or NES information of the source base station or the source cell;

a time length that the source base station or the source cell is in any one of the NES state, the OFF state, the DTX ON state, the DTX OFF state, the DRX ON state and the DRX OFF state is greater than a first time length;

a time length that the source base station or the source cell uses any one of an NES function, an OFF function, a DTX ON function, a DTX OFF function, the DRX ON state and the DRX OFF state is greater than the first time length;

a first channel quality is less than or equal to a first threshold, where the first channel quality is a channel quality between the terminal device and the source base station or the source cell; and

a difference between a second channel quality and the first channel quality is greater than or equal to a second threshold, where the second channel quality is a channel quality between the terminal device and the target base station or the target cell.

Optionally, the second condition includes one or more of:

the condition related to network status, network capability, network type and/or NES information of the target base station or the target cell;

a second channel quality is greater than or equal to a third threshold, where the second channel quality is a channel quality between the terminal device and the target base station or the target cell;

a difference between the second channel quality and a first channel quality is greater than a second threshold, where the first channel quality is a channel quality between the terminal device and the source base station or the source cell;

the target base station or the target cell meets a CHO execution condition/CHO evaluation condition;

the target base station or the target cell meets the CHO execution condition/CHO evaluation condition, and the target base station or the target cell does not use any one of an NES function, an OFF function, a DTX ON function, a DTX OFF function, a DRX ON function and a DRX OFF function;

the target base station or the target cell meets the CHO execution condition/CHO evaluation condition, and the target base station or the target cell is in any one of a non-NES state, an ON state, a DTX ON state, a DTX OFF state, a DRX ON state and a DRX OFF state;

the target base station or the target cell meets the CHO execution condition/CHO evaluation condition, and the target base station or the target cell does not support any one of the NES function, the OFF function, the DTX ON function, the DTX OFF function, the DRX ON function and the DRX OFF function; and

the target base station or the target cell does not use any one of the NES function, the OFF function, the DTX ON function, the DTX OFF function, the DRX ON function and the DRX OFF function, or, the target base station or the target cell is in any one of the non-NES state, the ON state, the DTX ON state, the DTX OFF state, the DRX ON state and the DRX OFF state; the target base station or the target cell does not support any one of the NES function, the OFF function, the DTX ON function, the DTX OFF function, the DRX ON function and the DRX OFF function.

Optionally, the third condition includes:

a serving cell of the terminal device is the source cell;

the terminal device supports an NES capability;

the terminal device has no transmission demand in a first time length;

the terminal device receives an HO configuration for one or more candidate target cells;

a RLF occurs in the terminal device; and

the RLF occurs in the terminal device in case that the source base station or the source cell is in any one of an NES state, an OFF state, a DTX ON state, a DTX OFF state, a DRX ON state and a DRX OFF state.

Optionally, the fourth condition includes:
the terminal device receives third indication information, where the third indication information is configured for one or more of:

instructing or triggering the terminal device to perform HO evaluation;

instructing the terminal device to perform or trigger HO by using the HO configuration information;

instructing the terminal device to perform the HO based on pre-configured configuration information of the target cell;

indicating a network capability or network type of the source base station or the source cell;

indicating whether the source base station or the source cell uses any one of an NES function, an OFF function, a DTX ON function, a DTX OFF function, a DRX ON function and a DRX OFF function;

indicating any one of an NES state, an OFF state, a DTX ON state, a DTX OFF state, a DRX ON state and a DRX OFF state of the source base station or the source cell;

indicating an available time or non-energy-saving time or working time of the source base station or the source cell;

indicating an unavailable time or energy-saving time or closing time of the source base station or the source cell;

indicating information transmission time between the source base station or the source cell and a terminal;

indicating information transmission time between the target base station or the target cell and the terminal;

indicating an available time or non-energy-saving time or working time of the target base station or the target cell;

ndicating an unavailable time or energy-saving time or closing time of the target base station or the target cell;

indicating a condition related to network status, network capability, network type and/or NES information;

indicating a network capability or network type of the target base station or the target cell;

indicating whether the target base station or the target cell uses any one of the NES function, the OFF function, the DTX ON function, the DTX OFF function, the DRX ON function and the DRX OFF function;

indicating that the target base station or the target cell is in any one of the NES state, the OFF state, the DTX ON state, the DTX OFF state, the DRX ON state and the DRX OFF state;

instructing the terminal device to trigger CHO execution or determination;

instructing the terminal device to perform CHO based on the network status, network capability, network type and/or NES information;

instructing the terminal device to perform or trigger the CHO;

instructing a terminal device supporting an NES capability to perform or trigger the CHO;

instructing the terminal device to perform HO execution or determination;

instructing the terminal device to trigger the HO execution or determination;

instructing the terminal device to perform the HO based on the network status, network capability, network type and/or NES information; and

instructing the terminal device supporting an NES capability to perform an HO process.

Optionally, the HO configuration information includes at least one of:

HO configuration information of one or more candidate target cells;

an execution condition/evaluation condition for each of the one or more candidate target cells; or

execution conditions/evaluation conditions for all of the one or more candidate target cells.

Optionally, the processing unit 902 is configured to perform at least one of:

handing over to the target cell in case that an execution condition/evaluation condition for the target cell is met; or

handing over to the target cell in case that one or more of the first condition, the second condition, the third condition and the fourth condition are met and the execution condition/evaluation condition for the target cell is met.

The execution condition/evaluation condition includes an execution condition/evaluation condition for the target cell in the HO configuration information, or a CHO execution condition/CHO evaluation condition for the target cell in CHO configuration information.

Optionally, the HO configuration information includes one or more sets of execution conditions/evaluation conditions; or, an execution condition/evaluation condition for the target cell has one or more sets of conditions.

Optionally, the processing unit 902 is further configured to perform the cell HO or HO evaluation by using a first set of execution conditions/evaluation conditions.

Optionally, the processing unit 902 is further configured to perform at least one of:

in case that the first set of execution conditions/evaluation conditions is used, if the first set of execution conditions/evaluation conditions is met, handing over to the target cell;

in case that the first set of execution conditions/evaluation conditions is used, if one or more of a first condition, a second condition, a third condition and a fourth condition are met and the first set of execution conditions/evaluation conditions is met, handing over to the target cell;

in case that the first set of execution conditions/evaluation conditions is used, if one or more candidate target cells or all the candidate target cells do not meet the first set of execution conditions/evaluation conditions, selecting a candidate target cell with an optimal measurement result from the one or more candidate target cells, for performing the HO;

in case that the first set of execution conditions/evaluation conditions is used, if one or more candidate target cells or all the candidate target cells do not meet the first set of execution conditions/evaluation conditions, selecting the target cell from the one or more candidate target cells according to an order of measurement results of the candidate target cells, and/or, handing over to the target cell;

in case that the first set of execution conditions/evaluation conditions is used, if one or more candidate target cells or all the candidate target cells do not meet the first set of execution conditions/evaluation conditions, selecting the target cell from the one or more candidate target cells according to priorities or priority ranks of the candidate target cells, and/or, handing over to the target cell;

in case that the first set of execution conditions/evaluation conditions is used, if one or more of the first condition, the second condition, the third condition and the fourth condition are met and one or more candidate target cells or all the candidate target cells do not meet the first set of execution conditions/evaluation conditions, selecting a candidate target cell with an optimal measurement result from the one or more candidate target cells, for performing the HO;

in case that the first set of execution conditions/evaluation conditions is used, if one or more of the first condition, the second condition, the third condition and the fourth condition are met and one or more candidate target cells or all the candidate target cells do not meet the first set of execution conditions/evaluation conditions, selecting the target cell from the one or more candidate target cells according to an order of measurement results of the candidate target cells, and/or, handing over to the target cell;

in case that the first set of execution conditions/evaluation conditions is used, if one or more of the first condition, the second condition, the third condition and the fourth condition are met and one or more candidate target cells or all the candidate target cells do not meet the first set of execution conditions/evaluation conditions, selecting the target cell from the one or more candidate target cells according to priorities or priority ranks of the candidate target cells, and/or, handing over to the target cell;

in case that one set of execution conditions/evaluation conditions is configured, if the first set of execution conditions/evaluation conditions is met, handing over to the target cell;

in case that one set of execution conditions/evaluation conditions is configured, if one or more of the first condition, the second condition, the third condition and the fourth condition are met and the first set of execution conditions/evaluation conditions is met, handing over to the target cell;

in case that one set of execution conditions/evaluation conditions is configured, if one or more candidate target cells or all the candidate target cells do not meet the first set of execution conditions/evaluation conditions, selecting a candidate target cell with an optimal measurement result from the one or more candidate target cells, for performing the HO;

in case that one set of execution conditions/evaluation conditions is configured, if one or more candidate target cells or all the candidate target cells do not meet the first set of execution conditions/evaluation conditions, selecting the target cell from the one or more candidate target cells according to an order of measurement results of the candidate target cells, and/or, handing over to the target cell;

in case that one set of execution conditions/evaluation conditions is configured, if one or more candidate target cells or all the candidate target cells do not meet the first set of execution conditions/evaluation conditions, selecting the target cell from the one or more candidate target cells according to priorities or priority ranks of the candidate target cells, and/or, handing over to the target cell;

in case that one set of execution conditions/evaluation conditions is configured, if one or more of the first condition, the second condition, the third condition and the fourth condition are met and one or more candidate target cells or all the candidate target cells do not meet the first set of execution conditions/evaluation conditions, selecting a candidate target cell with an optimal measurement result from the one or more candidate target cells, for performing the HO;

in case that one set of execution conditions/evaluation conditions is configured, if one or more of the first condition, the second condition, the third condition and the fourth condition are met and one or more candidate target cells or all the candidate target cells do not meet the first set of execution conditions/evaluation conditions, select the target cell from the one or more candidate target cells according to an order of measurement results of the candidate target cells, and/or, handing over to the target cell; or

in case that one set of execution conditions/evaluation conditions is configured, if one or more of the first condition, the second condition, the third condition and the fourth condition are met and one or more candidate target cells or all the candidate target cells do not meet the first set of execution conditions/evaluation conditions, selecting the target cell from the one or more candidate target cells according to priorities or priority ranks of the candidate target cells, and/or, handing over to the target cell.

Optionally, the HO configuration information includes multiple sets of execution conditions/evaluation conditions, and/or the cell HO or HO evaluation is performed by using different execution conditions/evaluation conditions in different cases.

Optionally, the processing unit 902 is further configured to perform one or more of:

in a first case, performing the cell HO or HO evaluation by using a first set of execution conditions/evaluation conditions;

in the first case, if a first set of execution conditions/evaluation conditions corresponding to the target cell is met, handing over to the target cell;

in the first case, if one or more of a first condition, a second condition, a third condition and a fourth condition are met and the first set of execution conditions/evaluation conditions corresponding to the target cell is met, handing over to the target cell;

in the first case, if one or more candidate target cells or all the candidate target cells do not meet a CHO execution condition/CHO evaluation condition, performing the cell HO or HO evaluation by using a second set of execution conditions/evaluation conditions;

in the first case, if one or more of the first condition, the second condition, the third condition and the fourth condition are met and one or more candidate target cells or all the candidate target cells do not meet the CHO execution condition/CHO evaluation condition, performing the cell HO/HO evaluation by using the second set of execution conditions/evaluation conditions;

in the first case, if one or more candidate target cells or all the candidate target cells do not meet the CHO execution condition/CHO evaluation condition, performing any one of: selecting a candidate target cell with an optimal measurement result from the one or more candidate target cells, for performing the HO; or, selecting the target cell from the one or more candidate target cells according to an order of measurement results of the candidate target cells, and/or, handing over to the target cell; or, selecting the target cell from the one or more candidate target cells according to priorities or priority ranks of the candidate target cells, and/or, handing over to the target cell;

in the first case, if one or more of the first condition, the second condition, the third condition and the fourth condition are met and one or more candidate target cells or all the candidate target cells do not meet the CHO execution condition/CHO evaluation condition, performing any one of: selecting a candidate target cell with an optimal measurement result from the one or more candidate target cells, for performing the HO; or, selecting the target cell from the one or more candidate target cells according to an order of measurement results of the candidate target cells, and/or, handing over to the target cell; or, selecting the target cell from the one or more candidate target cells according to priorities or priority ranks of the candidate target cells, and/or, handing over to the target cell;

in the first case, if the first set of execution conditions/evaluation conditions is not met, performing the cell HO or HO evaluation by using the second set of execution conditions/evaluation conditions;

in the first case, if one or more of the first condition, the second condition, the third condition and the fourth condition are met and the first set of execution conditions/evaluation conditions is not met, performing the cell HO/HO evaluation by using the second set of execution conditions/evaluation conditions;

in the first case, if the first set of execution conditions/evaluation conditions is not met, performing any one of: selecting a candidate target cell with an optimal measurement result from the one or more candidate target cells, for performing the HO; or, selecting the target cell from the one or more candidate target cells according to an order of measurement results of the candidate target cells, and/or, handing over to the target cell; or, selecting the target cell from the one or more candidate target cells according to priorities or priority ranks of the candidate target cells, and/or, handing over to the target cell;

in the first case, if one or more of the first condition, the second condition, the third condition and the fourth condition are met and a first set of CHO execution condition/CHO evaluation condition is not met, performing any one of: selecting a candidate target cell with an optimal measurement result from the one or more candidate target cells, for performing the HO; or, selecting the target cell from the one or more candidate target cells according to an order of measurement results of the candidate target cells, and/or, handing over to the target cell; or, selecting the target cell from the one or more candidate target cells according to priorities or priority ranks of the candidate target cells, and/or, handing over to the target cell;

in a second case, performing the cell HO or HO evaluation by using a second set of execution conditions/evaluation conditions;

in the second case, if a second set of execution conditions/evaluation conditions corresponding to the target cell is met, handing over to the target cell;

in the second case, if one or more of a first condition, a second condition, a third condition and a fourth condition are met and the second set of execution conditions/evaluation conditions corresponding to the target cell is met, handing over to the target cell;

in the second case, if one or more candidate target cells or all the candidate target cells meet a CHO execution condition/CHO evaluation condition, performing the cell HO or HO evaluation by using the first set of execution conditions/evaluation conditions;

in the second case, if one or more of the first condition, the second condition, the third condition and the fourth condition are met and one or more candidate target cells or all the candidate target cells do not meet the CHO execution condition/CHO evaluation condition, performing the cell HO by using the first set of execution conditions/evaluation conditions;

in the second case, if one or more candidate target cells or all the candidate target cells do not meet the CHO execution condition/CHO evaluation condition, performing any one of: selecting a candidate target cell with an optimal measurement result from the one or more candidate target cells, for performing the HO; or, selecting the target cell from the one or more candidate target cells according to an order of measurement results of the candidate target cells, and/or, handing over to the target cell; or, selecting the target cell from the one or more candidate target cells according to priorities or priority ranks of the candidate target cells, and/or, handing over to the target cell;

in the second case, if one or more of the first condition, the second condition, the third condition and the fourth condition are met and one or more candidate target cells or all the candidate target cells do not meet the CHO execution condition/CHO evaluation condition, performing any one of: selecting a candidate target cell with an optimal measurement result from the one or more candidate target cells, for performing the HO; or, selecting the target cell from the one or more candidate target cells according to an order of measurement results of the candidate target cells, and/or, handing over to the target cell; or, selecting the target cell from the one or more candidate target cells according to priorities or priority ranks of the candidate target cells, and/or, handing over to the target cell;

in the second case, if one or more candidate target cells or all the candidate target cells meet a second set of CHO execution condition/CHO evaluation condition, performing the cell HO or HO evaluation by using the second set of execution conditions/evaluation conditions;

in the second case, if the first set of CHO execution condition/CHO evaluation condition is not met, performing the cell HO or HO evaluation by using the second set of execution conditions/evaluation conditions;

in the second case, if one or more of the first condition, the second condition, the third condition and the fourth condition are met and the first set of CHO execution condition/CHO evaluation condition is not met, performing the cell HO by using the second set of execution conditions/evaluation conditions;

in the second case, if the first set of CHO execution condition/CHO evaluation condition is not met, performing any one of: selecting a candidate target cell with an optimal measurement result from the one or more candidate target cells, for performing the HO; or, selecting the target cell from the one or more candidate target cells according to an order of measurement results of the candidate target cells, and/or, handing over to the target cell; or, selecting the target cell from the one or more candidate target cells according to priorities or priority ranks of the candidate target cells, and/or, handing over to the target cell; and

in the second case, if one or more of the first condition, the second condition, the third condition and the fourth condition are met and the first set of CHO execution condition/CHO evaluation condition is not met, performing any one of: selecting a candidate target cell with an optimal measurement result from the one or more candidate target cells, for performing the HO; or, selecting the target cell from the one or more candidate target cells according to an order of measurement results of the candidate target cells, and/or, handing over to the target cell; or, selecting the target cell from the one or more candidate target cells according to priorities or priority ranks of the candidate target cells, and/or, handing over to the target cell.

Optionally, the processing unit 902 is further configured to perform at least one of:

in case that the one or more sets of execution conditions/evaluation conditions are not configured, or in case that the one or more sets of execution conditions/evaluation conditions are not activated or enabled, if one or more candidate target cells or all the candidate target cells do not meet an execution condition/evaluation condition for the target cell, selecting a candidate target cell with an optimal measurement result from the one or more candidate target cells, for performing the HO or perform HO evaluation;

in case that the one or more sets of execution conditions/evaluation conditions are not configured, or in case that the one or more sets of execution conditions/evaluation conditions are not activated or enabled, if one or more candidate target cells or all the candidate target cells do not meet the execution condition/evaluation condition for the target cell, selecting the target cell from the one or more candidate target cells according to an order of measurement results of the candidate target cells, and/or, handing over to the target cell;

in case that the one or more sets of execution conditions/evaluation conditions are not configured, or in case that the one or more sets of execution conditions/evaluation conditions are not activated or enabled, if one or more candidate target cells or all the candidate target cells do not meet the execution condition for the target cell, selecting the target cell from the one or more candidate target cells according to priorities or priority ranks of the candidate target cells, and/or, handing over to the target cell;

in case that the one or more sets of execution conditions/evaluation conditions are not configured, or in case that the one or more sets of execution conditions/evaluation conditions are not activated or enabled, if one or more of the first condition, the second condition, the third condition and the fourth condition are met and one or more candidate target cells or all the candidate target cells do not meet the execution condition/evaluation condition for the target cell, selecting a candidate target cell with an optimal measurement result from the one or more candidate target cells, for performing the HO;

in case that the one or more sets of execution conditions/evaluation conditions are not configured, or in case that the one or more sets of execution conditions/evaluation conditions are not activated or enabled, if one or more of the first condition, the second condition, the third condition and the fourth condition are met and one or more candidate target cells or all the candidate target cells do not meet the first set of execution conditions/evaluation conditions, selecting the target cell from the one or more candidate target cells according to an order of measurement results of the candidate target cells, and/or, handing over to the target cell; or

in case that the one or more sets of execution conditions/evaluation conditions are not configured, or in case that the one or more sets of execution conditions/evaluation conditions are not activated or enabled, if one or more of the first condition, the second condition, the third condition and the fourth condition are met and one or more candidate target cells or all the candidate target cells do not meet the execution condition/evaluation condition for the target cell, selecting the target cell from the one or more candidate target cells according to priorities or priority ranks of the candidate target cells, and/or, handing over to the target cell.

Optionally, the processing unit 902 is further configured to terminate/exit the cell HO in case that one or more of the following conditions are met:

a fifth condition, related to a source base station or a source cell;
a sixth condition, related to a target base station or a target cell;
a seventh condition, related to the terminal device; and
an eighth condition, related to information received by the terminal device.

Optionally, the fifth condition includes one or more of:

the source base station or the source cell is in an ON state;
the source base station or the source cell is in the ON state in part of time;
the source base station or the source cell is switched from an OFF state to the ON state;
the source base station or the source cell is in a non-NES state;
the source base station or the source cell temporarily postpones entering an NES state;
the source base station or the source cell is about to leave the NES state;
the source base station or the source cell supports energy saving or NES;
the source base station or the source cell does not support energy saving or NES;
the source base station or the source cell is an NES base station or an NES cell;
the source base station or the source cell is a non-NES base station or a non-NES cell;
the source base station or the source cell does not support or use cell DTX or cell DRX;
the source base station or the source cell is in a DTX ON state;
the source base station or the source cell is in a DTX OFF state;
the source base station or the source cell is in a DRX ON state;
the source base station or the source cell is in a DRX OFF state;
the source base station or the source cell is a second type of base station or cell;
the source base station or the source cell is a second base station or a second cell;
the source base station or the source cell is a base station or a cell supporting a second protocol version;
a time length that the source base station or the source cell is in any one of the NES state, the OFF state, the DTX ON state, the DTX OFF state, the DRX ON state and the DRX OFF state is less than or equal to a first time length;
a time length that the source base station or the source cell uses any one of an NES function, an OFF function, a DTX ON function, a DTX OFF function, a DRX ON function and a DRX OFF function is less than or equal to the first time length;
a first channel quality is greater than or equal to a fourth threshold, where the first channel quality is a channel quality between the terminal device and the source base station or the source cell;
the source base station or the source cell is in a first time period; or, the cell HO is triggered beyond the first time period, or, a time for performing the cell HO or triggering execution of the cell HO does not include the first time period, or, a time taken for handing over to the target cell does not include the first time period, or, a time where the target cell is used does not include the first time period; or, an energy-saving time or unavailable time of the source cell does not include the first time period; and
the source base station or the source cell is in a second time period; or, the cell HO is triggered in the second time period, or, a time for performing the cell HO or triggering execution of the cell HO includes the second time period, or, a time taken for handing over to the target cell includes the second time period, or, a time where the target cell is used includes the second time period; or, an energy-saving time or unavailable time of the source cell does not include the second time period.

Optionally, the sixth condition includes one or more of:

the target base station or the target cell is in an OFF state;

the target base station or the target cell is in the OFF state in part of time;

the target base station or the target cell is switched from an ON state to the OFF state;

the target base station or the target cell is in an NES state;

the target base station or the target cell is about to be in the NES state;

the target base station or the target cell is switched from another state to the NES state;

the target base station or the target cell temporarily postpones leaving the NES state;

the target base station or the target cell supports energy saving or NES;

the target base station or the target cell is an NES base station or an NES cell;

the target base station or the target cell supports or uses cell DTX or cell DRX;

the target base station or the target cell is in a DTX ON state;

the target base station or the target cell is in a DTX OFF state;

the target base station or the target cell is in a DRX ON state;

the target base station or the target cell is in a DRX OFF state;

part of information of the target base station or the target cell is not sent or is carried/sent by other node(s);

the target base station or the target cell is a first type of base station or cell;

the target base station or the target cell is a first base station or a first cell;

the target base station or the target cell is a base station or cell supporting a first protocol version;

a time length that the target base station or the target cell is in any one of the NES state, the OFF state, the DTX ON state, the DTX OFF state, the DRX ON state and the DRX OFF state is greater than or equal to a second time length;

a time length that the target base station or the target cell uses any one of an NES function, an OFF function, a DTX ON function, a DTX OFF function, a DRX ON function and a DRX OFF function is greater than or equal to the second time length;

a second channel quality is less than or equal to a fifth threshold, where the second channel quality is a channel quality between the terminal device and the target base station or the target cell;

a time length that the second channel quality is less than or equal to the fifth threshold is greater than a third time length;

a difference between the second channel quality and a first channel quality is less than or equal to a second threshold, where the first channel quality is a channel quality between the terminal device and the source base station or the source cell;

the target base station or the target cell is in a third time period; or, an available time of the target cell includes the third time period; or, the cell HO is triggered in the third time period, or, a time for performing the cell HO or triggering execution of the cell HO includes the third time period, or, a time taken for handing over to the target cell includes the third time period, or, a time where the target cell is used includes the third time period; and

the target base station or the target cell is in a fourth time period; or, a unavailable time of the target cell includes the fourth time period; or, the cell HO is triggered beyond the fourth time period, or, a time for performing the cell HO or triggering execution of the cell HO is beyond the fourth time period, or, a time taken for handing over to the target cell is beyond the fourth time period, or, a time where the target cell is used is beyond the fourth time period.

Optionally, the seventh condition includes one or more of:

a serving cell of the terminal device is the source cell;

the terminal device supports an NES capability;

the terminal device has no data transmission demand in a first time period, where the first time period includes a time for triggering the terminal device to perform HO; or, the first time period includes a time for the terminal device to perform the HO, or a time taken for handing over to the target cell; or, the first time period includes a time period that the source base station or the source cell is in any one of an OFF state, an NES state, a DTX ON state, a DTX OFF state, a DRX ON state and a DRX OFF state; or, the first time period includes a time period that the source base station or the source cell uses any one of an NES function, an OFF function, a DTX ON function, a DTX OFF function, a DRX ON function and a DRX OFF function; or, the source base station or the source cell corresponding to the first time period supports or has any one of an NES capability, an OFF capability, a DTX ON capability, a DTX OFF capability, a DRX ON capability and a DRX OFF capability; and

the terminal device has a data transmission demand in a second time period, where the second time period includes a time period for transmission by the source base station; or, the second time period includes a time period for the terminal device and the source base station to maintain connection there-between; or, the second time period includes an available time of the source base station or the source cell; or, the second time period includes an unavailable time of the target cell; or, the second time period includes a time beyond the time for triggering the terminal device to perform the HO; or, the second time period includes a time beyond the time for the terminal device to perform the HO or a time taken for handing over to the target cell; or, the second time period includes a time period that the source base station or the source cell is in any one of an ON state, a non-NES state, a DTX ON state, a DTX OFF state, a DRX ON state and a DRX OFF state; or, the second time period includes a time period that the source base station or the source cell uses any one of an ON function, a non-NES function, an OFF function, a DTX ON function, a DTX OFF function, a DRX ON function and a DRX OFF function; or, the source base station or the source cell corresponding to the second time period supports or has any one of a non-NES capability, an ON capability, a DTX ON capability, a DTX OFF capability, a DRX ON capability and a DRX OFF capability.

Optionally, the eighth condition includes one or more of:
the terminal device does not receive third indication information, and/or the terminal device receives fourth indication information.

The third indication information is configured for one or more of:

instructing or triggering the terminal device to perform HO evaluation;
instructing the terminal device to perform or trigger HO by using first configuration information;
instructing the terminal device to perform the HO based on pre-configured configuration information of the target cell;
instructing or triggering the terminal device to leave the source cell;
indicating a network capability or network type of the source base station or the source cell;
indicating whether the source base station or the source cell uses any one of an NES function, an OFF function, a DTX ON function, a DTX OFF function, a DRX ON function and a DRX OFF function;
indicating any one of an NES state, an OFF state, a DTX ON state, a DTX OFF state, a DRX ON state and a DRX OFF state of the source base station or the source cell;
indicating an available time or non-energy-saving time or working time of the source base station or the source cell;
indicating an unavailable time or energy-saving time or closing time of the source base station or the source cell;
indicating information transmission time between the source base station or the source cell and a terminal;
indicating information transmission time between the target base station or the target cell and the terminal;
indicating an available time or non-energy-saving time or working time of the target base station or the target cell;
indicating an unavailable time or energy-saving time or closing time of the target base station or the target cell;
indicating a condition related to network status, network capability, network type and/or NES information;
indicating a network capability or network type of the target base station or the target cell;
indicating whether the target base station or the target cell uses any one of the NES function, the OFF function, the DTX ON function, the DTX OFF function, the DRX ON function and the DRX OFF function;
indicating that the target base station or the target cell is in any one of the NES state, the OFF state, the DTX ON state, the DTX OFF state, the DRX ON state and the DRX OFF state;
instructing the terminal device to trigger CHO execution or determination;
instructing the terminal device to perform CHO based on the network status, network capability, network type and/or NES information;
instructing the terminal device to perform or trigger the CHO;
instructing a terminal device supporting the NES capability to perform or trigger the CHO;
instructing the terminal device to perform HO execution or determination;
instructing the terminal device to trigger the HO execution or determination;
instructing the terminal device to perform the HO based on the network status, network capability, network type and/or NES information; and
instructing the terminal device supporting the NES capability to perform an HO process.
The fourth indication information is configured to indicate one or more of:
the network capability or network type of the source base station or the source cell;
whether the source base station or the source cell uses any one of the NES function, the OFF function, the DTX ON function, the DTX OFF function, the DRX ON function and the DRX OFF function;
any one of the NES state, the OFF state, the DTX ON state, the DTX OFF state, the DRX ON state and the DRX OFF state of the source base station or the source cell;
the network capability or network type of the target base station or the target cell;
whether the target base station or the target cell uses any one of the NES function, the OFF function, the DTX ON function, the DTX OFF function, the DRX ON function and the DRX OFF function;
any one of the NES state, the OFF state, the DTX ON state, the DTX OFF state, the DRX ON state and the DRX OFF state of the target base station or the target cell;
instructing the terminal device not to perform the CHO execution or determination;
instructing the terminal device not to trigger the CHO execution or determination;
instructing the terminal device to temporarily postpone performing/triggering the CHO;
instructing the terminal device to exit a CHO process;

instructing the terminal device not to perform the HO execution or determination;
instructing the terminal device not to trigger the HO execution or determination;
instructing the terminal device to temporarily postpone performing/triggering the HO; and
instructing the terminal device to exit the HO process.

Optionally, the processing unit 902 is further configured to: after the HO configuration information is received, perform measurement based on the HO configuration information, to obtain a measurement result; or

after the HO configuration information is received and the state of the source cell is switched to any one of the NES state, the OFF state, the DTX ON state, the DTX OFF state, the DRX ON state and the DRX OFF state, perform measurement based on the HO configuration information, to obtain the measurement result; or
in case that the HO configuration information is received and the HO is triggered, perform measurement based on the HO configuration information, to obtain the measurement result.

Optionally, the processing unit 902 is further configured to select or determine the target base station or the target cell based on one or more of:
a channel quality; a priority; a priority rank; a number of target cells that meet the condition; network status, network capability, network type and/or NES information of the target base station or the target cell; an available time of the target base station or the target cell; and identification indication of the target base station or the target cell.

Optionally, the target base station/target cell meets at least one of the following conditions, or the target base station/target cell determined from candidate target base stations/candidate target cells meets at least one of the following conditions, or the target base station/target cell is determined according to at least one of the following conditions:

the target base station or the target cell is in an ON state;
the target base station or the target cell is in the ON state in part of time;
the target base station or the target cell is switched from an OFF state to the ON state;
the target base station or the target cell supports energy saving or NES;
the target base station or the target cell is in an NES state;
the target base station or the target cell is about to be in the NES state;
the target base station or the target cell is an NES base station or an NES cell;
a time length that the candidate target cell is in the NES state is less than a sixth time length;
a time interval between a current moment and a moment when the target base station or the target cell is about to be switched to the NES state is less than a fourth time length;
the target base station or the target cell is in a non-NES state;
the target base station or the target cell is about to be in the non-NES state;
the target base station or the target cell is a non-NES base station or a non-NES cell;
a time interval between the current moment and a moment when the target base station or the target cell is about to be switched to the non-NES state is less than a fifth time length;
the target base station or the target cell supports or uses cell DTX or cell DRX;
the target base station or the target cell does not use the cell DTX or the cell DRX;
the target base station or the target cell is in a DTX ON state;
the target base station or the target cell is in a DTX OFF state;
the target base station or the target cell is in a DRX ON state;
the target base station or the target cell is in a DRX OFF state;
the target base station or the target cell is a second type of base station or cell;
the target base station or the target cell is a second base station or a second cell;
the target base station or the target cell is a base station or a cell supporting a second protocol version;
a second channel quality meets a CHO execution condition, where the second channel quality is a channel quality between the terminal device and the target base station or the target cell;
the second channel quality is greater than or equal to a sixth threshold;
the second channel quality is greater than or equal to a third channel quality, where the third channel quality is a channel quality between the terminal device and a candidate target cell in the NES state;
a difference between the second channel quality and the third channel quality is less than or equal to a seventh threshold;
a time length that the difference between the second channel quality and the third channel quality is less than or equal to the seventh threshold is greater than a seventh time length;
there are multiple target cells that meet an HO execution or evaluation condition;
there are the multiple target cells that meet the HO execution or evaluation condition, and a channel quality difference between multiple candidate target cells is less than an eighth threshold;

there are the multiple target cells that meet the HO execution or evaluation condition, and a channel quality difference between candidate target cells with a best channel quality among the multiple candidate target cells is less than the eighth threshold;

there are multiple candidate target cells that meet a channel quality condition;

there are the multiple candidate target cells that meet the channel quality condition, and a channel quality difference between the multiple candidate target cells is less than the eighth threshold;

there are the multiple candidate target cells that meet the channel quality condition, and a channel quality difference between candidate target cells with a best channel quality among the multiple candidate target cells is less than the eighth threshold;

the target base station or the target cell is a cell with a priority greater than a first priority; and

the target base station or the target cell is a cell with a non-low priority.

Optionally, the priority or priority rank of the target base station or the target cell is indicated by at least one of the following information sent by the source base station:
dedicated signaling, system information, group signaling, the HO configuration information, or CHO configuration information.

Optionally, the receiving unit 901 is further configured to receive indication information sent by the source base station, and/or, the processing unit 902 is further configured to select or determine the target base station or the target cell according to the indication information sent by the source base station.

The indication information carries an ID of the target base station or the target cell, or the indication information is configured to indicate a cell to which the terminal device is to hand over.

Optionally, the receiving unit 901 is further configured to receive first signaling sent by a source base station or a source cell through group signaling and/or a dedicated message; the first signaling includes one or more of the HO configuration information, an HO command, the first indication information, the second indication information, the third indication information and the fourth indication information.

Optionally, the processing unit 902 is further configured to perform reception based on transmission mode configuration information, where the transmission mode configuration information is configured to indicate a transmission mode of first signaling or a transmission mode of part of information of the first signaling.

Transmission modes of the first signaling corresponding to different terminal devices are the same or different; and/or, transmission modes of all or part of the information of the first signaling are the same or different; the first signaling includes one or more of the HO configuration information, an HO command, the first indication information, the second indication information, the third indication information and the fourth indication information.

Optionally, the transmission mode configuration information is determined based on any one of:
a predefinition, a network configuration, or a preset rule.

Optionally, the transmission mode of the first signaling includes at least one of:

the source base station sends the first signaling or part of the information of the first signaling through group signaling;

the source base station sends the first signaling or part of the information of the first signaling through a dedicated message;

the source base station repeatedly sends the first signaling or part of the information of the first signaling through the group signaling; or

the source base station repeatedly sends the first signaling or part of the information of the first signaling through the dedicated message.

Optionally, the transmission mode configuration information includes area configuration information and/or information about number of times of repeated transmissions.

The area configuration information is configured to indicate position information of the terminal device, or a position relationship and/or orientation relationship between the terminal device and a source base station or a source cell.

The information about number of times of repeated transmissions is configured to indicate a number of times of repeated receptions of the terminal device, or a number of times that information of the source base station or the source cell is repeatedly sent, or a number of times that the source base station repeatedly sends the first signaling or part of the information of the first signaling.

Optionally, different area configuration information corresponds to different transmission modes.

Optionally, different area configuration information corresponding to different transmission modes includes one or more of:

for a first area, the source base station or the source cell sends the first signaling or part of the information of the first signaling to the terminal device through group signaling;

for a second area, the source base station or the source cell sends the first signaling or part of the information of the first signaling to the terminal device through a dedicated message or through the group signaling and the dedicated message;

in case that the terminal device is in the first area or the area configuration information indicates that the terminal device is in the first area, the source base station or the source cell sends the first signaling or part of the information of the first signaling to the terminal device through the group signaling; and

in case that the terminal device is in the second area or the area configuration information indicates that the terminal device is in the second area, the source base station or the source cell sends the first signaling or part of the information of the first signaling to the terminal device through the dedicated message or through the group signaling and the dedicated message.

Optionally, the area configuration information is determined based on one or more of:

a channel quality, path loss information, distance information and/or beam information between the terminal device and the source base station or the source cell; and/or

a channel quality, path loss information, distance information and/or beam information between the terminal device and the target base station or the target cell.

Optionally, the information about number of times of repeated transmissions is the same for different terminal devices.

Or, the information about number of times of repeated transmissions is different for different terminal devices.

Or, the information about number of times of repeated transmissions is different for terminal device(s) in different areas.

Optionally, the HO configuration information or transmission mode configuration information is further configured to indicate one or more of:

a group to which the terminal device belongs;

DCI of the group to which the terminal device belongs; and

RNTI of the group to which the terminal device belongs.

Optionally, the transmission mode configuration information includes area configuration information and information about number of times of repeated transmissions.

The area configuration information is associated with the group to which the terminal device belongs, and/or the information about number of times of repeated transmissions is associated with the group to which the terminal device belongs.

Optionally, the receiving unit 901 is further configured to receive the first signaling or part of the information of the first signaling based on the area configuration information and/or the information about number of times of repeated transmissions.

Optionally, the receiving unit 901 is further configured to receive the first signaling or part of the information of the first signaling based on a transmission mode corresponding to the area configuration information.

In case that the area configuration information indicates that the terminal device is in a first area, the first signaling or part of the information of the first signaling is sent through group signaling.

In case that the area configuration information indicates that the terminal device is in a second area, the first signaling or part of the information of the first signaling is sent through a dedicated message or through the group signaling and the dedicated message.

Optionally, the receiving unit 901 is further configured to perform at least one of:

in case that the transmission mode configuration information includes the information about number of times of repeated transmissions, receiving the first signaling or part of the information of the first signaling according to the information about number of times of repeated transmissions;

in case that the transmission mode configuration information includes the information about number of times of repeated transmissions, receiving the first signaling or part of the information of the first signaling according to the information about number of times of repeated transmissions and the area configuration information and based on a transmission mode corresponding to the area configuration information and a number of times indicated by the information about number of times of repeated transmissions; or

in case that the transmission mode configuration information includes the information about number of times of repeated transmissions, determining a number of times of receptions according to a channel state between the terminal device and the source base station or the source cell, where the number of times of receptions is less than or equal to the number of times indicated by the information about number of times of repeated transmissions.

Optionally, the processing unit 902 is further configured to: after the first signaling or part of the information of the first signaling is received once, ignore the first signaling or part of the information of the first signaling repeatedly sent by the source base station or the source cell.

Optionally, the processing unit 902 is further configured to: after the first signaling or part of the information of the first signaling is received once, respond to the first signaling or part of the information of the first signaling.

Optionally, the cell HO includes at least one of: HO, CHO, HO based on the HO configuration information, or pre-configured multi-candidate-target-cell HO.

An embodiment of the disclosure further provides an apparatus for wireless communication, the apparatus is applied to a terminal device. With reference to FIG. 9, the apparatus for wireless communication includes a processing unit 902.

The processing unit 902 is configured to perform at least one of cell access, access permission, cell selection, or cell reselection according to fifth indication information.

Optionally, the fifth indication information is configured to indicate whether one or more of a network, frequency point and cell allow a first terminal device to access/select/reselect, or whether the first terminal device is allowed to access one or more of the network, frequency point and cell.

Optionally, the apparatus for wireless communication further includes a receiving unit 901, the receiving unit 901 is configured to receive sixth indication information associated with an energy-saving technology, where the sixth indication information is configured to indicate whether one or more of a network, frequency point and cell allow a terminal device supporting the energy-saving technology associated with the sixth indication information to access/select/reselect, or whether the terminal device supporting the energy-saving technology associated with the sixth indication information is allowed to access one or more of the network/frequency point/cell.

Optionally, there are one or more sixth indication information, and/or, different sixth indication information is associated with different energy-saving technologies.

Optionally, the network, frequency point and cell are one or more of:

a network, frequency point and cell supporting energy-saving/NES;
a network, frequency point and cell allowing or identifying a first terminal device;
a network, frequency point and cell configured to implement energy-saving/NES;
any network, frequency point and cell;
a network, frequency point and cell not allowing a non-first terminal device; and
a network, frequency point and cell that the non-first terminal device is controlled to access or select.

Optionally, the network, frequency point and cell include one or more of:
the source base station, a serving base station, a current base station, an adjacent base station, a candidate target base station, a target base station, an inter-system base station, a present frequency point, a serving frequency point, a current frequency point, an adjacent frequency point, an intra-frequency point, an inter-frequency point, an inter-system frequency point, the source cell, a serving cell, a current cell, an adjacent cell, a candidate target cell, a target cell, an intra-frequency point cell, an inter-frequency point cell, and an inter-system cell.

Optionally, a first terminal device is allowed to access one or more of the network, frequency point and cell.

The first terminal device is allowed to select one or more of the network, frequency point and cell.

The first terminal device is allowed to reselect one or more of the network, frequency point and cell.

A non-first terminal device is not allowed to access one or more of the network, frequency point and cell.

The non-first terminal device is not allowed to select one or more of the network, frequency point and cell.

The non-first terminal device is not allowed to reselect one or more of the network, frequency point and cell.

Optionally, the processing unit 902 is configured to perform at least one of cell access, access permission, cell selection, or cell reselection based on the fifth indication information and/or the sixth indication information.

Optionally, the processing unit 902 is further configured to perform at least one of: in case that the fifth indication information indicates that one or more of the network, frequency point and cell allow a first terminal device to access/select/reselect, or that the first terminal device is allowed to access one or more of the network, frequency point and cell, if the terminal device is the first terminal device, allowing the terminal device to perform access/selection/reselection based on one or more of the network, frequency point and cell; and/or, if the terminal device is a non-first terminal device, not allowing the terminal device to select one or more of the network, frequency point and cell to perform access/selection/reselection;

in case that the fifth indication information indicates that one or more of the network, frequency point and cell do not allow a non-first terminal device to access/select/reselect, or that the non-first terminal device is not allowed to access one or more of the network, frequency point and cell, if the terminal device is the first terminal device, allowing the terminal device to perform access/selection/reselection based on one or more of the network, frequency point and cell; and/or, if the terminal device is the non-first terminal device, not allowing the terminal device to select one or more of the network, frequency point and cell to perform access/selection/reselection;

in case that the sixth indication information indicates that one or more of the network, frequency point and cell allow a terminal device supporting an energy-saving technology associated with the sixth indication information to access/select/reselect, or that the terminal device supporting the energy-saving technology associated with the sixth indication information is allowed to access one or more of the network, frequency point and cell, if the terminal device supports the energy-saving technology associated with the sixth indication information, allowing the terminal device to perform access/selection/reselection based on one or more of the network, frequency point and cell; and/or, if the terminal device does not support the energy-saving technology associated with the sixth indication information, not allowing the terminal device to select one or more of the network, frequency point and cell to perform access/selection/reselection;

in case that the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device supports the energy-saving technology associated with the sixth indication information, allowing the terminal device to perform access/selection/reselection based on one or more of the network, frequency point and cell; and/or, if the terminal device does not support the energy-saving technology associated with the sixth indication information, not allowing the terminal device to select one or more of the network, frequency point and cell to perform access/selection/reselection;

in case that the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is a terminal device supporting the energy-saving technology associated with the sixth indication information among first terminal devices, allowing the terminal device to perform access/selection/reselection based on one or more of the network, frequency point and cell; and/or, if the terminal device is a terminal device not supporting the energy-saving technology associated with the sixth indication information among the first terminal devices, not allowing the terminal device to select one or more of the network, frequency point and cell to perform access/selection/reselection;

in case that the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device is a terminal device supporting the energy-saving technology associated with the sixth indication information among first terminal devices, allowing the terminal device to perform access/selection/reselection based on one or more of the network, frequency point and cell; and/or, if the terminal device is a terminal device not supporting the energy-saving technology associated with the sixth indication information among the first terminal devices, not allowing the terminal device to select one or more of the network, frequency point and cell to perform access/selection/reselection;

in case that the fifth indication information indicates that one or more of the network, frequency point and cell allow a first terminal device to access/select/reselect, or that the first terminal device is allowed to access one or more of the network, frequency point and cell, and the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is the first terminal device and supports the energy-saving technology associated with the sixth indication information, allowing the terminal device to perform access/selection/reselection based on one or more of the network, frequency point and cell; and/or, if the terminal device is a non-first terminal device, and/or the terminal device does not support the energy-saving technology associated with the sixth indication information, not allowing the terminal device to select one or more of the network, frequency point and cell to perform access/selection/reselection;

in case that the fifth indication information indicates that one or more of the network, frequency point and cell allow a first terminal device to access/select/reselect, or that the first terminal device is allowed to access one or more of the network, frequency point and cell, and the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device is the first terminal device and supports the energy-saving technology associated with the sixth indication information, allowing the terminal device to perform access/selection/reselection based on one or more of the network, frequency point and cell; and/or, if the terminal device is a non-first terminal device, and/or the terminal device does not support the energy-saving technology associated with the sixth indication information, not allowing the terminal device to select one or more of the network, frequency point and cell to perform access/selection/reselection;

in case that the fifth indication information indicates that one or more of the network, frequency point and cell do not allow a non-first terminal device to access/select/reselect, or that the first terminal device is not allowed to access one or more of the network, frequency point and cell, and the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is the first terminal device and supports the energy-saving technology associated with the sixth indication information, allowing the terminal device to perform access/selection/reselection based on one or more of the network, frequency point and cell; and/or, if the terminal device is the non-first terminal device, and/or the terminal device does not support the energy-saving technology associated with the sixth indication information, not allowing the terminal device to select one or more of the network, frequency point and cell to perform access/selection/reselection;

in case that the fifth indication information indicates that one or more of the network, frequency point and cell do not allow a non-first terminal device to access/select/reselect, or that the first terminal device is not allowed to access one or more of the network, frequency point and cell, and the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device is the first terminal device and supports the energy-saving technology associated with the sixth indication information, allowing the terminal device to perform access/selection/reselection based on one or more of the network, frequency point and cell; and/or, if the terminal device is the non-first terminal device, and/or the terminal device does not support the energy-saving technology associated with the sixth indication information, not allowing the terminal device to select one or more of the network, frequency point and cell to perform access/selection/reselection;

in case that the fifth indication information indicates that one or more of the network, frequency point and cell do not allow the first terminal device to access/select/reselect, or that the first terminal device is not allowed to access one or more of the network, frequency point and cell, and the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is the first terminal device, not allowing the terminal device to select one or more of the network, frequency point and cell to perform access/selection/reselection; and/or, if the terminal device is the non-first terminal device and the terminal device supports the energy-saving technology associated with the sixth indication information, allowing the terminal device to perform access/selection/reselection based on one or more of the network, frequency point and cell; and/or, if the terminal device is the non-first terminal device and the terminal device does not support the energy-saving technology associated with the sixth indication information, not allowing the terminal device to select one or more of the network, frequency point and cell to perform access/selection/reselection; or

in case that the fifth indication information indicates that one or more of the network, frequency point and cell do not allow the first terminal device to access/select/reselect, or that the first terminal device is not allowed to access one or more of the network, frequency point and cell, and the sixth indication information indicates that one or more of the network, frequency point and cell do not allow a terminal device supporting the energy-saving technology associated with the sixth indication information to access/select/reselect, or that the terminal device supporting the energy-saving technology associated with the sixth indication information is not allowed to access one or more of the network, frequency point and cell, if the terminal device is the first terminal device, not allowing the terminal device to select one or more of the network, frequency point and cell to perform access/selection/reselection; and/or, if the terminal device is the non-first terminal device and the terminal device does not support the energy-saving technology associated with the sixth indication information, allowing the terminal device to perform access/selection/reselection based on one or more of the network, frequency point and cell; and/or, if the terminal device is the non-first terminal device and the terminal device supports the energy-saving technology associated with the sixth indication information, not allowing the terminal device to select one or more of the network, frequency point and cell to perform access/selection/reselection.

Optionally, in case that the terminal device is another terminal device except the first terminal device, the terminal device is not configured with/does not acquire/does not apply parameters for cell access/selection/reselection.

Optionally, the fifth indication information and/or sixth indication information are carried through system information or RRC signaling.

An embodiment of the disclosure further provides an apparatus for wireless communication, the apparatus is applied to a terminal device. With reference to FIG. 9, the apparatus for wireless communication includes a receiving unit 901.

The receiving unit 901 is configured to receive first paging configuration information, where the first paging configuration information is used by a first terminal device to determine a first paging position.

Optionally, the first paging configuration information includes one or more of:

a position of a paging monitoring window;
a continuous monitoring time period;
a non-monitoring time period;
a position of the paging monitoring window in a first cycle;
a continuous monitoring time period in the first cycle; and
a non-monitoring time period in the first cycle.

The first cycle includes a cycle related to the terminal device, or a cycle related to a cell, or a cycle related to a base station.

Optionally, the receiving unit 901 is further configured to receive second paging configuration information, where the second paging configuration information is used by a second terminal device to determine a second paging position.

Optionally, the second paging configuration information includes one or more of:

a position of a paging monitoring window;
a continuous monitoring time period;
a non-monitoring time period;
a position of the paging monitoring window in a second cycle;
a continuous monitoring time period in the second cycle; and
a non-monitoring time period in the second cycle.

The second cycle includes a cycle related to the terminal device, or a cycle related to a cell, or a cycle related to a base station.

Optionally, the processing unit 902 is configured to: in case that the terminal device is the first terminal device, determine the first paging position based on the first paging configuration information, and monitor a paging message at the first paging position.

Optionally, in case that the terminal device is a second terminal device, the terminal device is denied to access the base station. Or, in case that the terminal device is the second terminal device, the processing unit 902 is further configured to determine a second paging position based on the second paging configuration information, and monitor a paging message at the second paging position.

Optionally, the processing unit 902 is configured to perform any one of:

monitoring the paging message at all or part of first paging positions in a continuous monitoring time period, where the continuous monitoring time period includes a time period during which the terminal device is capable of monitoring the paging message;
monitoring the paging message at all or part of first paging positions in a paging monitoring window of each first cycle; or
monitoring the paging message at all or part of first paging positions in a continuous monitoring time period of each first cycle.

Optionally, the part of the first paging positions are determined based on ID information of the terminal device and/or a preset rule.

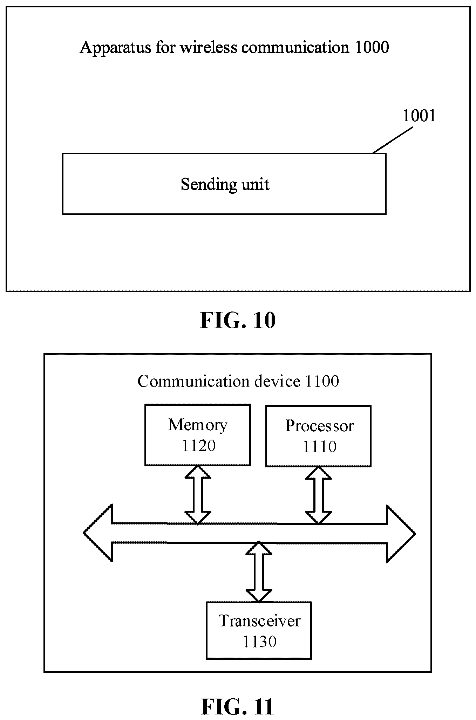

An embodiment of the disclosure provides an apparatus for wireless communication, the apparatus is applied to a base station. With reference to FIG. 10, the apparatus for wireless communication may include a sending unit 1001.

The sending unit 1001 is configured to send HO configuration information, where the HO configuration information includes an HO configuration and/or a condition that a terminal device is required to meet to perform cell HO.

Optionally, the condition is related to one or more of network status, network capability, network type and NES information.

Optionally, the condition includes:

a condition related to network status, network capability, network type and/or NES information of the source base station or the source cell; and/or

a condition related to network status, network capability, network type and/or NES information of a target base station or a target cell.

Optionally, the condition related to network status, network capability, network type and/or NES information of the source base station or the source cell includes one or more of:

the source base station or the source cell is in an OFF state;

the source base station or the source cell is in the OFF state in part of time;

the source base station or the source cell is switched from an ON state to the OFF state;

[01573] the source base station or the source cell is in an NES state;

the source base station or the source cell is about to be in the NES state;

[he source base station or the source cell is switched from another state to the NES state;

the source base station or the source cell temporarily postpones leaving the NES state;

the source base station or the source cell supports energy saving or NES;

the source base station or the source cell is an NES base station or an NES cell;

the source base station or the source cell supports or uses cell DTX or cell DRX;

the source base station or the source cell is in a DTX ON state;

the source base station or the source cell is in a DTX OFF state;

the source base station or the source cell is in a DRX ON state;

the source base station or the source cell is in a DRX OFF state;

part of information of the source base station or the source cell is not sent or is carried/sent by other node(s);

the source base station or the source cell is a first type of base station or cell;

the source base station or the source cell is a first base station or a first cell;

the source base station or the source cell is a base station or cell supporting a first protocol version;

the source base station or the source cell is in a first time period; or, the cell HO is triggered in the first time period, or, a time for performing the cell HO or triggering execution of the cell HO includes the first time period, or, a time taken for handing over to the target cell includes the first time period, or, a time where the target cell is used includes the first time period; or, an energy-saving time or unavailable time of the source cell is the first time period;

the source base station or the source cell is in a second time period; or, the cell HO is triggered beyond the second time period, or, a time for performing the cell HO or triggering execution of the cell HO is beyond the second time period, or, a time taken for handing over to the target cell is beyond the second time period, or, a time where the target cell is used is beyond the second time period; or, an energy-saving time or unavailable time of the source cell is beyond the second time period;

the terminal device receives first indication information, where the first indication information is configured to instruct or trigger the terminal device to perform the cell HO; or, the first indication information is configured to instruct or trigger the terminal device to perform HO evaluation; or, the first indication information is configured to instruct the terminal device to perform or trigger HO by using the HO configuration information; or, the first indication information is configured to instruct the terminal device to perform the HO based on pre-configured configuration information of the target cell; or, the first indication information is configured to indicate a condition related to network status, network capability, network type and/or NES information;

the terminal device receives the first indication information, and a channel state between the terminal device and the source base station or the source cell meets a channel condition; and

the terminal device receives the first indication information, and a channel state between the terminal device and the target base station or the target cell meets the channel condition.

Optionally, the first indication information is determined based on state indication information of the source base station or the source cell, and the state indication information is configured to indicate any one of the NES state, the OFF state, the DTX ON state, the DTX OFF state, the DRX ON state and the DRX OFF state of the source base station or the source cell.

Or, the first indication information is determined based on any one of an NES capability, an OFF capability, a DTX ON capability, a DTX OFF capability, a DRX ON capability and a DRX OFF capability of the source base station or the source cell.

Or, the first indication information is determined based on the source base station or the source cell using any one of an NES function, an OFF function, a DTX ON function, a DTX OFF function, a DRX ON function and a DRX OFF function.

Or, the first indication information is determined based on a demand of the source base station or the source cell.

Or, the first indication information is determined based on a demand or state of the target base station or the target cell.

Or, the first indication information is determined based on a capability of the target base station or the target cell.

Optionally, the condition related to network status, network capability, network type and/or NES information of the target base station or the target cell includes one or more of:

the target base station or the target cell is in an ON state;

the target base station or the target cell is in the ON state in part of time;

the target base station or the target cell is switched from an OFF state to the ON state;

the target base station or the target cell is in a non-NES state;

the target base station or the target cell is about to be in the non-NES state;

the target base station or the target cell temporarily postpones leaving the non-NES state;

the target base station or the target cell is a non-NES base station or a non-NES cell;

the target base station or the target cell supports or uses cell DTX or cell DRX;

the target base station or the target cell is in a DTX ON state;

the target base station or the target cell is in a DTX OFF state;

the target base station or the target cell is in a DRX ON state;

the target base station or the target cell is in a DRX OFF state;

the target base station or the target cell is a second type of base station or cell;

the target base station or the target cell is a second base station or a second cell;

the target base station or the target cell is a base station or a cell supporting a second protocol version;

the target base station or the target cell is in a third time period; or, an available time of the target cell includes the third time period; or, the cell HO is triggered in the third time period, or, a time for performing the cell HO or triggering execution of the cell HO includes the third time period, or, a time taken for handing over to the target cell includes the third time period, or, a time where the target cell is used includes the third time period;

[the target base station or the target cell is in a fourth time period; or, a unavailable time of the target cell includes the fourth time period; or, the cell HO is triggered beyond the fourth time period, or, a time for performing the cell HO or triggering execution of the cell HO is beyond the fourth time period, or, a time taken for handing over to the target cell is beyond the fourth time period, or, a time where the target cell is used is beyond the fourth time period;

the terminal device receives second indication information, where the second indication information is configured to instruct or trigger the terminal device to perform the cell HO; or, the second indication information is configured to instruct or trigger the terminal device to perform HO evaluation; or, the second indication information is configured to instruct the terminal device to perform or trigger HO by using the HO configuration information; or, the second indication information is configured to instruct the terminal device to perform the HO based on pre-configured configuration information of the target cell; or, the second indication information is configured to indicate a condition related to network status, network capability, network type and/or NES information;

the terminal device receives the second indication information, and a channel state between the terminal device and the target base station or the target cell meets a channel condition; and

the terminal device receives the second indication information, and a channel state between the terminal device and the source base station or the source cell meets the channel condition.

Optionally, the second indication information is determined based on state indication information of the target base station or the target cell, and the state indication information is configured to indicate any one of the non-NES state, the ON state, the DTX ON state, the DTX OFF state, the DRX ON state and the DRX OFF state of the target base station or the target cell.

Or, the second indication information is determined based on any one of a non-NES capability, an ON capability, a DTX ON capability, a DTX OFF capability, a DRX ON capability and a DRX OFF capability of the target base station or the target cell.

Or, the second indication information is determined based on the target base station or the target cell using any one of a non-NES function, an ON function, a DTX ON function, a DTX OFF function, a DRX ON function and a DRX OFF function.

Or, the second indication information is determined based on a demand of the target base station or the target cell.

Or, the second indication information is determined based on a demand of the source base station or the source cell.

Or, the second indication information is determined based on a capability of the source base station or the source cell.

Optionally, at least one of the first time period, the second time period, the third time period, or the fourth time period is determined based on one or more of: a start time, an end time, and a duration length.

The start time and/or the end time is an absolute time, or a count value determined based on Greenwich Mean Time.

The duration length is determined based on one or more of a specified time length, a timer and a duration.

Optionally, the condition is for all cells, or is cell-specific.

Optionally, the condition related to network status, network capability, network type and/or NES information of the source base station or the source cell is the same for different terminal devices.

The condition related to network status, network capability, network type and/or NES information of the source base station or the source cell is the same for different source cells in any one of an OFF state, an NES state, a DTX ON state, a DTX OFF state, a DRX ON state and a DRX OFF state.

The condition related to network status, network capability, network type and/or NES information of the target base station or the target cell is different for different target cells.

The condition related to network status, network capability, network type and/or NES information of the target base station or the target cell is different for different target cells in any one of an OFF state, an NES state, a DTX ON state, a DTX OFF state, a DRX ON state and a DRX OFF state.

An available time, or a time capable of triggering HO, or a time selectable to hand over to the target cell, or a time capable of maintaining connection and/or performing transmission with the terminal device is different for different candidate target cells.

The available time, or the time capable of triggering HO, or the time selectable to hand over to the target cell, or the time capable of maintaining connection and/or performing transmission with the terminal device is different for the source cell and a candidate target cell.

Optionally, the HO configuration information further includes at least one of:

HO configuration information of one or more candidate target cells, and/or
an execution condition/evaluation condition for each of the one or more candidate target cells; or
execution conditions/evaluation conditions for all of the one or more candidate target cells.

Optionally, the HO configuration information includes one or more sets of execution conditions/evaluation conditions; or, an execution condition/evaluation condition for the target cell has one or more sets of conditions, and the terminal device performs the cell HO or HO evaluation by using different execution conditions/evaluation conditions in different cases.

Optionally, the sending unit 1001 is further configured to send first signaling to the terminal device through group signaling and/or a dedicated message, where the first signaling includes one or more of the HO configuration information, an HO command, the first indication information, the second indication information, the third indication information and the fourth indication information.

Optionally, the sending unit 1001 is further configured to send transmission mode configuration information to the terminal device, where the transmission mode configuration information is configured to indicate a transmission mode of first signaling or part of information of the first signaling.

Transmission modes of the first signaling corresponding to different terminal devices are different.

The first signaling includes one or more of the HO configuration information, an HO command, the first indication information, the second indication information, the third indication information and the fourth indication information.

Optionally, the transmission mode of the first signaling includes at least one of:

the source base station sends the first signaling or part of the information of the first signaling through group signaling;
the source base station sends the first signaling or part of the information of the first signaling through a dedicated message;
the source base station repeatedly sends the first signaling or part of the information of the first signaling through the group signaling; or
the source base station repeatedly sends the first signaling or part of the information of the first signaling through the dedicated message.

Optionally, the transmission mode configuration information includes area configuration information and/or information about number of times of repeated transmissions.

The area configuration information is configured to indicate position information of the terminal device, or a position relationship and/or orientation relationship between the terminal device and the source base station or the source cell.

The information about number of times of repeated transmissions is configured to indicate a number of times of repeated receptions of the terminal device, or a number of times that information of the source base station is repeatedly sent, or a number of times that the source base station repeatedly sends the first signaling or part of the information of the first signaling.

Optionally, different area configuration information corresponds to different transmission modes.

Optionally, different area configuration information corresponding to different transmission modes includes:

different area configuration information corresponding to different transmission modes includes one or more of:
for a first area, the source base station or the source cell sends the first signaling or part of the information of the first signaling to the terminal device through group signaling;
for a second area, the source base station or the source cell sends the first signaling or part of the information of the first signaling to the terminal device through a dedicated message or through the group signaling and the dedicated message;
in case that the terminal device is in the first area or the area configuration information indicates that the terminal device is in the first area, the source base station or the source cell sends the first signaling or part of the information of the first signaling to the terminal device through the group signaling; and
in case that the terminal device is in the second area or the area configuration information indicates that the terminal device is in the second area, the source base station or the source cell sends the first signaling or part of the information of the first signaling to the terminal device through the dedicated message or through the group signaling and the dedicated message.

Optionally, the area configuration information is determined based on one or more of:

a channel quality, path loss information, distance information and/or beam information between the terminal device and the source base station or the source cell; and/or
a channel quality, path loss information, distance information and/or beam information between the terminal device and the target base station or the target cell.

Optionally, the information about number of times of repeated transmissions is the same for different terminal devices; or, the information about number of times of repeated transmissions is different for different terminal devices; or, the information about number of times of repeated transmissions is different for terminal device(s) in different areas.

Optionally, the HO configuration information or transmission mode configuration information is further configured to indicate one or more of:

a group to which the terminal device belongs;
DCI of the group to which the terminal device belongs; and
RNTI of the group to which the terminal device belongs.

Optionally, the transmission mode configuration information includes area configuration information and information about number of times of repeated transmissions. The area configuration information is associated with the group to which the terminal device belongs, and/or the information about number of times of repeated transmissions is associated with the group to which the terminal device belongs.

Optionally, the sending unit 1001 is further configured to send the first signaling or part of the information of the first signaling based on the area configuration information and/or the information about number of times of repeated transmissions.

Optionally, the sending unit 1001 is further configured to perform at least one of:
sending the first signaling or part of the information of the first signaling based on a transmission mode corresponding to the area configuration information.

In case that the area configuration information indicates that the terminal device is in a first area, the source base station or the source cell sends the first signaling or part of the information of the first signaling to the terminal device through group signaling.

In case that the area configuration information indicates that the terminal device is in a second area, the source base station or the source cell sends the first signaling or part of the information of the first signaling to the terminal device through a dedicated message or through the group signaling and the dedicated message.

Optionally, the sending unit 1001 is further configured to perform at least one of:

in case that the transmission mode configuration information includes the information about number of times of repeated transmissions, send the first signaling or part of the information of the first signaling according to the information about number of times of repeated transmissions; or

in case that the transmission mode configuration information includes the information about number of times of repeated transmissions, sending the first signaling or part of the information of the first signaling according to the information about number of times of repeated transmissions and the area configuration information and based on a transmission mode corresponding to the area configuration information and a number of times indicated by the information about number of times of repeated transmissions.

Optionally, the apparatus for wireless communication further includes a determination unit, the determination unit is configured to determine a terminal device that has not performed the cell HO successfully, and/or a terminal device connected to the source cell, and/or a terminal device that has not handed over.

The sending unit 1001 is further configured to: send, through the dedicated message, an HO command or a CHO command to the terminal device that has not performed the cell HO successfully, and/or the terminal device connected to the source cell, and/or the terminal device that has not handed over, or instruct the terminal device to perform HO through the dedicated message; or, send, through the group signaling transmitted repeatedly, the HO command or the CHO command to the terminal device that has not performed the cell HO successfully, and/or the terminal device connected to the source cell, and/or the terminal device that has not handed over, or instruct the terminal device to perform the HO through the group signaling transmitted repeatedly.

Optionally, the terminal device that has not performed the cell HO successfully, and/or the terminal device connected to the source cell, and/or the terminal device that has not handed over are determined by the source base station or the source cell according to seventh indication information sent by a target base station or a target cell. The seventh indication information is configured to indicate a terminal device that has handed over successfully, or a terminal device that establishes connection with the target base station or the target cell, or a terminal device that has handed over to the target base station or the target cell.

Optionally, the cell HO includes CHO and/or CHO-based HO.

An embodiment of the disclosure provides an apparatus for wireless communication, the apparatus is applied to a base station. With reference to FIG. 10, the apparatus for wireless communication may include a sending unit 1001.

The sending unit 1001 is configured to send fifth indication information to a terminal device, where the fifth indication information is used by the terminal device to perform at least one of cell access, access permission, cell selection, or cell reselection.

Optionally, the fifth indication information is configured to indicate whether one or more of a network, frequency point and cell allow a first terminal device to access/select/reselect, or whether the first terminal device is allowed to access one or more of the network, frequency point and cell.

Optionally, the sending unit 1001 is further configured to send sixth indication information associated with an energy-saving technology, where the sixth indication information is configured to indicate whether one or more of a network, frequency point and cell allow a terminal device supporting the energy-saving technology associated with the sixth indication information to access/select/reselect, or whether the terminal device supporting the energy-saving technology associated with the sixth indication information is allowed to access one or more of the network/frequency point/cell.

Optionally, there are one or more sixth indication information; and/or, different sixth indication information is associated with different energy-saving technologies.

Optionally, the network, frequency point and cell are one or more of:

a network, frequency point and cell supporting energy-saving/NES;
a network, frequency point and cell allowing or identifying a first terminal device;
a network, frequency point and cell configured to implement energy-saving/NES;
any network, frequency point and cell;
a network, frequency point and cell not allowing a non-first terminal device; and
a network, frequency point and cell that the non-first terminal device is controlled to access or select.

Optionally, the network, frequency point and cell include one or more of:
the source base station, a serving base station, a current base station, an adjacent base station, a candidate target base station, a target base station, an inter-system base station, a present frequency point, a serving frequency point, a current frequency point, an adjacent frequency point, an intra-frequency point, an inter-frequency point, an inter-system frequency point, the source cell, a serving cell, a current cell, an adjacent cell, a candidate target cell, a target cell, an intra-frequency point cell, an inter-frequency point cell, and an inter-system cell.

Optionally, the apparatus for wireless communication may further include a processing unit, the processing unit is configured to perform at least one of:

allowing a first terminal device to access one or more of the network, frequency point and cell;
allowing the first terminal device to select one or more of the network, frequency point and cell;
allowing the first terminal device to reselect one or more of the network, frequency point and cell;
not allowing a non-first terminal device to access one or more of the network, frequency point and cell;
not allowing the non-first terminal device to select one or more of the network, frequency point and cell; or
not allowing the non-first terminal device to reselect one or more of the network, frequency point and cell.

Optionally, the processing unit is configured to not configure parameters for cell access/selection/reselection to a non-first terminal device.

Optionally, the fifth indication information and/or the sixth indication information are carried through system information or RRC signaling.

An embodiment of the disclosure provides an apparatus for wireless communication, the apparatus is applied to a base station. With reference to FIG. 10, the apparatus for wireless communication may include a sending unit 1001.

The sending unit 1001 is configured to send first paging configuration information, where the first paging configuration information is used by a first terminal device to determine a first paging position.

Optionally, the first paging configuration information includes one or more of:

a position of a paging monitoring window;
a continuous monitoring time period;
a non-monitoring time period;
a position of the paging monitoring window in a first cycle;
a continuous monitoring time period in the first cycle; and
a non-monitoring time period in the first cycle.

The first cycle includes a cycle related to the terminal device, or a cycle related to a cell, or a cycle related to the base station.

Optionally, the sending unit 1001 is further configured to send second paging configuration information, where the second paging configuration information is used by a second terminal device to determine a second paging position.

Optionally, the second paging configuration information includes one or more of:

a position of a paging monitoring window;
a continuous monitoring time period;
a non-monitoring time period;
a position of the paging monitoring window in a second cycle;
a continuous monitoring time period in the second cycle; and
a non-monitoring time period in the second cycle.

The second cycle includes a cycle related to the terminal device, or a cycle related to a cell, or a cycle related to the base station.

Optionally, the sending unit 1001 is further configured to send a paging message to the first terminal device at the first paging position, where the first paging position is determined based on the first paging configuration information.

Optionally, the above apparatus for wireless communication further includes a processing unit, the processing unit is configured to deny a second terminal device to access the base station.

Or, the sending unit 1001 is further configured to send a paging message to the second terminal device at a second paging position, where the second paging position is determined based on the second paging configuration information. :

FIG. 11 is a schematic structural diagram of a communication device 1100 provided in an embodiment of the disclosure. The communication device may be a terminal device or a base station. The communication device 1100 shown in FIG. 11 includes a processor 1110, and the processor 1110 may call and run a computer program from a memory, to implement the methods in the embodiments of the disclosure.

Optionally, as shown in FIG. 11, the communication device 1100 may further include a memory 1120. The processor 1110 may call and run the computer program from the memory 1120, to implement the methods in the embodiments of the disclosure.

The memory 1120 may be an independent device independent of the processor 1110, or may be integrated into the processor 1110.

Optionally, as shown in FIG. 11, the communication device 1100 may further include a transceiver 1130, and the processor 1110 may control the transceiver 1130 to communicate with other devices. Specifically, the processor 1110 may control the transceiver 1130 to send information or data to other devices, or to receive information or data sent by other devices.

The transceiver 1130 may include a transmitter and a receiver. The transceiver 1130 may further include antenna, and there may be one or more the antennas.

Optionally, the communication device 1100 may specifically be the base station/source base station/target base station in the embodiments of the disclosure, and the communication device 1100 may be configured to implement corresponding flows implemented by the base station/source base station/target base station in each method in the embodiments of the disclosure, which will not be elaborated here for the sake of brevity.

Optionally, the communication device 1100 may specifically be the mobile terminal/terminal device in the embodiments of the disclosure, and the communication device 1100 may be configured to implement corresponding flows implemented by the mobile terminal/terminal device in each method in the embodiments of the disclosure, which will not be elaborated here for the sake of brevity.

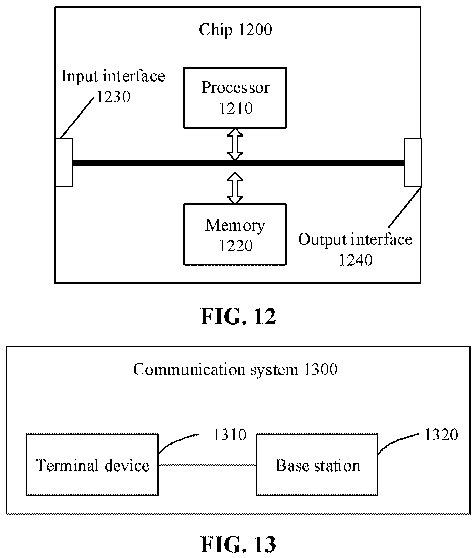

FIG. 12 is a schematic structural diagram of a chip according to an embodiment of the disclosure. The chip 1200 shown in FIG. 12 includes a processor 1210, and the processor 1210 may call and run a computer program from a memory, to implement the methods in the embodiments of the disclosure.

Optionally, as shown in FIG. 12, the chip 1200 may further include a memory 1220. The processor 1210 may call and run the computer program from the memory 1220, to implement the methods in the embodiments of the disclosure.

The memory 1220 may be an independent device independent of the processor 1210, or may be integrated into the processor 1210.

Optionally, the chip 1200 may further include an input interface 1230. The processor 1210 may control the input interface 1230 to communicate with other devices or chips, and specifically, the processor 1210 may control the input interface 1230 to acquire information or data sent by other devices or chips.

Optionally, the chip 1200 may further include an output interface 1240. The processor 1210 may control the output interface 1240 to communicate with other devices or chips, and specifically, the processor 1210 may control the output interface 1240 to output information or data to other devices or chips.

Optionally, the chip may be applied to the base station/source base station/target base station in the embodiments of the disclosure, and the chip may be configured to implement corresponding flows implemented by the base station/source base station/target base station in each method in the embodiments of the disclosure, which will not be elaborated here for the sake of brevity.

Optionally, the chip may be applied to the mobile terminal/terminal device in the embodiments of the disclosure, and the chip may be configured to implement corresponding flows implemented by the mobile terminal/terminal device in each method in the embodiments of the disclosure, which will not be elaborated here for the sake of brevity.

It should be understood that the chip mentioned in the embodiment of the disclosure may also be referred to as a system-level chip, a system chip, a chip system or a system on chip, etc.

An embodiment of the disclosure further provides a computer storage medium, the computer storage medium is configured to store one or more programs. The one or more programs may be executed by one or more processors, to implement the methods in the embodiments of the disclosure.

FIG. 13 is a schematic block diagram of a communication system 1300 provided in an embodiment of the disclosure. As shown in FIG. 13, the communication system 1300 includes a terminal device 1310 and a base station 1320.

The terminal device 1310 may be configured to implement corresponding functions implemented by the terminal device in the above methods, and the base station 1320 may be configured to implement corresponding functions implemented by the base station/source base station/target base station in the above methods, which will not be elaborated here for the sake of brevity.

It should be understood that the processor in the embodiment of the disclosure may be an integrated circuit chip with a signal processing capability. During implementation, each step in the above method embodiments may be completed by an integrated logical circuit in a form of hardware in the processor or an instruction in a form of software. The above processor may be a general purpose processor, a Digital Signal Processor (DSP), an Application Specific Integrated Circuit (ASIC), a Field Programmable Gate Array (FPGA) or other programmable logical devices, a discrete gate or transistor logical device, and a discrete hardware component. Each method, step and logical block diagram disclosed in the embodiments of the disclosure may be implemented or performed. The general purpose processor may be a microprocessor, or the processor may be any conventional processor, etc. Steps in the methods disclosed in combination with the embodiments of the disclosure may be directly embodied to be performed and completed by a hardware decoding processor, or performed and completed by a combination of hardware in the decoding processor and a software module. The software module may be located in a mature storage medium in this field such as a Random Access Memory (RAM), a flash memory, a Read-Only Memory (ROM), a Programmable ROM (PROM) or Electrically Erasable PROM (EEPROM), a register, etc. The storage medium is located in a memory, and the processor reads information in the memory, and completes the steps in the above methods in combination with the hardware thereof.

It may be understood that the memory in the embodiment of the disclosure may be a volatile memory or a non-volatile memory, or may include both the volatile and non-volatile memories. The non-volatile memory may be a ROM, a PROM, an Erasable PROM (EPROM), an EEPROM or a flash memory. The volatile memory may be a RAM, and is used as an external high-speed cache. Through an exemplary rather than limiting description, many forms of RAMs are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It should be noted that the memory in the system and method described in the disclosure is intended to include, but is not limited to these memories and any other suitable types of memories.

It should be understood that the above memory is an exemplary rather than limiting description. For example, the memory in the embodiment of the disclosure may also be an SRAM, a DRAM, an SDRAM, a DDR SDRAM, an ESDRAM, an SLDRAM, a DR RAM, etc. That is, the memory in the embodiment of the disclosure is intended to include, but is not limited to these memories and any other suitable types of memories.

An embodiment of the disclosure further provides a computer-readable storage medium, the computer-readable storage medium is configured to store a computer program.

Optionally, the computer-readable storage medium may be applied to the base station/source base station/target base station in the embodiments of the disclosure, and the computer program enables a computer to perform corresponding flows implemented by the base station/source base station/target base station in each method in the embodiments of the disclosure, which will not be elaborated here for the sake of brevity.

Optionally, the computer-readable storage medium may be applied to the mobile terminal/terminal device in the embodiments of the disclosure, and the computer program enables a computer to perform corresponding flows implemented by the mobile terminal/terminal device in each method in the embodiments of the disclosure, which will not be elaborated here for the sake of brevity.

An embodiment of the disclosure further provides a computer program product, the computer program product includes computer program instructions.

Optionally, the computer program product may be applied to the base station/source base station/target base station in the embodiments of the disclosure, and the computer program instructions enable a computer to perform corresponding flows implemented by the base station/source base station/target base station in each method in the embodiments of the disclosure, which will not be elaborated here for the sake of brevity.

Optionally, the computer program product may be applied to the mobile terminal/terminal device in the embodiments of the disclosure, and the computer program instructions enable a computer to perform corresponding flows implemented by the mobile terminal/terminal device in each method in the embodiments of the disclosure, which will not be elaborated here for the sake of brevity.

An embodiment of the disclosure further provides a computer program.

Optionally, the computer program may be applied to the base station/source base station/target base station in the embodiments of the disclosure, and when the computer program is executed in a computer, the computer program enables the computer to perform corresponding flows implemented by the base station/source base station/target base station in each method in the embodiments of the disclosure, which will not be elaborated here for the sake of brevity.

Optionally, the computer program may be applied to the mobile terminal/terminal device in the embodiments of the disclosure, and when the computer program is executed in a computer, the computer program enables the computer to perform corresponding flows implemented by the mobile terminal/terminal device in each method in the embodiments of the disclosure, which will not be elaborated here for the sake of brevity.

It may be appreciated by those of ordinary skill in the art that the units and algorithm steps of each example described in combination with the embodiments disclosed in the disclosure may be implemented by electronic hardware or a combination of computer software and the electronic hardware. Whether these functions are performed in a hardware or software manner, depends on specific applications and design constraints of the technical solutions. Professionals may implement the described functions by using different methods for each specific application, however, such implementation should not be considered as going beyond the scope of the disclosure.

It may be clearly understood by those skilled in the art that specific operation processes of the above system, apparatus and unit may refer to corresponding processes in the foregoing method embodiments and will not be elaborated here, for convenient and brief descriptions.

In several embodiments provided in the disclosure, it should be understood that the disclosed system, apparatus and method may be implemented in other manners. For example, the above apparatus embodiments are schematic only. For example, division of the units is only logic function division, and other division manners may be adopted in an actual implementation. For example, multiple units or components may be combined or integrated into another system, or some features may be ignored or may not be performed. In addition, coupling or direct coupling or communication connection between displayed or discussed components may be indirect coupling or communication connection of the apparatus or the units implemented through some interfaces, and may be electrical, mechanical or adopt other forms.

The units described as separate components may be or may not be physically separated, and components displayed as units may be or may not be physical units, that is, they may be located at the same place, or may be distributed to multiple network units. Part or all of the units may be selected to implement the purpose of the solutions in the embodiments according to actual requirements.

Furthermore, each functional unit in each embodiment of the disclosure may be integrated into a processing unit, or each unit may physically exist independently, or two or more than two units may be integrated into a unit.

When the function is implemented in a form of software functional unit and is sold or used as an independent product, the function may be stored in a computer-readable storage medium. Based on such understanding, the technical solutions of the disclosure substantially or parts making contributions to the related art or part of the technical solutions may be embodied in a form of software product, and the computer software product is stored in a storage medium, and includes several instructions configured to enable a computer device (which may be a personal computer, a server, a network device, etc.) to perform all or part of steps of the method described in each embodiment of the disclosure. The foregoing storage medium includes various media capable of storing program codes, such as a U disk, a mobile hard disk, a ROM, a RAM, a magnetic disk, or an optical disk, etc.

The above descriptions are only specific implementations of the disclosure, however, the scope of protection of the disclosure is not limited thereto. Variation or replacement easily conceived by any technician familiar with this technical field within the technical scope disclosed in the disclosure, should fall within the scope of protection of the disclosure. Therefore, the scope of protection of the disclosure shall be subject to the scope of protection of the claims.

**Claims**

1.  A method for wireless communication, comprising:
    receiving, by a terminal device, handover, HO, configuration information, wherein the HO configuration information comprises an HO configuration and/or a condition that the terminal device is required to meet to perform cell HO.

2.  The method of claim 1, wherein the condition is related to one or more of network status, network capability, network type and network energy saving, NES, information.

3.  The method of claim 1 or 2, wherein the condition comprises:

    a condition related to network status, network capability, network type and/or NES information of a source base station or a source cell; and/or
    a condition related to network status, network capability, network type and/or NES information of a target base station or a target cell.

4.  The method of claim 3, wherein the condition related to network status, network capability, network type and/or NES information of the source base station or the source cell comprises one or more of:

    the source base station or the source cell is in an OFF state;
    the source base station or the source cell is in the OFF state in part of time;
    the source base station or the source cell is switched from an ON state to the OFF state;
    the source base station or the source cell is in an NES state;
    the source base station or the source cell is about to be in the NES state;
    the source base station or the source cell is switched from another state to the NES state;
    the source base station or the source cell temporarily postpones leaving the NES state;
    the source base station or the source cell supports energy saving or NES;
    the source base station or the source cell is an NES base station or an NES cell;
    the source base station or the source cell supports or uses cell discontinuous transmission, DTX, or cell discontinuous reception, DRX;
    the source base station or the source cell is in a DTX ON state;
    the source base station or the source cell is in a DTX OFF state;
    the source base station or the source cell is in a DRX ON state;
    the source base station or the source cell is in a DRX OFF state;
    part of information of the source base station or the source cell is not sent or is carried/sent by other node(s);
    the source base station or the source cell is a first type of base station or cell;
    the source base station or the source cell is a first base station or a first cell;
    the source base station or the source cell is a base station or cell supporting a first protocol version;
    the source base station or the source cell is in a first time period; or, the cell HO is triggered in the first time period, or, a time for performing the cell HO or triggering execution of the cell HO comprises the first time period, or, a time taken for handing over to the target cell comprises the first time period, or, a time where the target cell is used comprises the first time period; or, an energy-saving time or unavailable time of the source cell is the first time period;

the source base station or the source cell is in a second time period; or, the cell HO is triggered beyond the second time period, or, a time for performing the cell HO or triggering execution of the cell HO is beyond the second time period, or, a time taken for handing over to the target cell is beyond the second time period, or, a time where the target cell is used is beyond the second time period; or, an energy-saving time or unavailable time of the source cell is beyond the second time period;

the terminal device receives first indication information, wherein the first indication information is configured to instruct or trigger the terminal device to perform the cell HO; or, the first indication information is configured to instruct or trigger the terminal device to perform HO evaluation; or, the first indication information is configured to instruct the terminal device to perform or trigger HO by using the HO configuration information; or, the first indication information is configured to instruct the terminal device to perform the HO based on pre-configured configuration information of the target cell; or, the first indication information is configured to indicate the condition related to network status, network capability, network type and/or NES information;

the terminal device receives the first indication information, and a channel state between the terminal device and the source base station or the source cell meets a channel condition; and

the terminal device receives the first indication information, and a channel state between the terminal device and the target base station or the target cell meets the channel condition.

5. The method of claim 4, wherein the first indication information is determined based on state indication information of the source base station or the source cell, and the state indication information is configured to indicate any one of the NES state, the OFF state, the DTX ON state, the DTX OFF state, the DRX ON state and the DRX OFF state of the source base station or the source cell; or

the first indication information is determined based on any one of an NES capability, an OFF capability, a DTX ON capability, a DTX OFF capability, a DRX ON capability and a DRX OFF capability of the source base station or the source cell; or

the first indication information is determined based on the source base station or the source cell using any one of an NES function, an OFF function, a DTX ON function, a DTX OFF function, a DRX ON function and a DRX OFF function; or

the first indication information is determined based on a demand of the source base station or the source cell; or

the first indication information is determined based on a demand or state of the target base station or the target cell; or

the first indication information is determined based on a capability of the target base station or the target cell.

6. The method of any one of claims 3 to 5, wherein the condition related to network status, network capability, network type and/or NES information of the target base station or the target cell comprises one or more of:

the target base station or the target cell is in an ON state;
the target base station or the target cell is in the ON state in part of time;
the target base station or the target cell is switched from an OFF state to the ON state;
the target base station or the target cell is in a non-NES state;
the target base station or the target cell is about to be in the non-NES state;
the target base station or the target cell temporarily postpones leaving the non-NES state;
the target base station or the target cell is a non-NES base station or a non-NES cell;
the target base station or the target cell supports or uses cell DTX or cell DRX;
the target base station or the target cell is in a DTX ON state;
the target base station or the target cell is in a DTX OFF state;
the target base station or the target cell is in a DRX ON state;
the target base station or the target cell is in a DRX OFF state;
the target base station or the target cell is a second type of base station or cell;
the target base station or the target cell is a second base station or a second cell;
the target base station or the target cell is a base station or a cell supporting a second protocol version;
the target base station or the target cell is in a third time period; or, an available time of the target cell comprises the third time period; or, the cell HO is triggered in the third time period, or, a time for performing the cell HO or triggering execution of the cell HO comprises the third time period, or, a time taken for handing over to the target cell comprises the third time period, or, a time where the target cell is used comprises the third time period; the target base station or the target cell is in a fourth time period; or, a unavailable time of the target cell comprises the fourth time period; or, the cell HO is triggered beyond the fourth time period, or, a time for performing the cell HO or triggering execution of the cell HO is beyond the fourth time period, or, a time taken for handing over to the target cell is beyond the fourth time period, or, a time where the target cell is used is beyond the fourth time period; the terminal device receives second indication information, wherein the second indication information is configured to instruct or trigger the terminal device to perform the cell HO; or, the second indication information is configured to instruct or trigger the terminal device to perform HO evaluation; or, the second indication information is configured to instruct the terminal device to perform or trigger HO by using the HO configuration information; or, the second indication information is configured to instruct the terminal device to perform the HO based on pre-configured configuration information of the target cell; or, the second indication information is configured to indicate the condition related to network status, network capability, network type and/or NES information;

the terminal device receives the second indication information, and a channel state between the terminal device and the target base station or the target cell meets a channel condition; and

the terminal device receives the second indication information, and a channel state between the terminal device and the source base station or the source cell meets the channel condition.

7. The method of claim 6, wherein the second indication information is determined based on state indication information of the target base station or the target cell, and the state indication information is configured to indicate any one of the non-NES state, the ON state, the DTX ON state, the DTX OFF state, the DRX ON state and the DRX OFF state of the target base station or the target cell; or

the second indication information is determined based on any one of a non-NES capability, an ON capability, a DTX ON capability, a DTX OFF capability, a DRX ON capability and a DRX OFF capability of the target base station or the target cell; or

the second indication information is determined based on the target base station or the target cell using any one of a non-NES function, an ON function, a DTX ON function, a DTX OFF function, a DRX ON function and a DRX OFF function; or

the second indication information is determined based on a demand of the target base station or the target cell; or

the second indication information is determined based on a demand of the source base station or the source cell; or

the second indication information is determined based on a capability of the source base station or the source cell.

8. The method of any one of claims 4 to 7, wherein at least one of the first time period, the second time period, the third time period, or the fourth time period is determined based on one or more of:

a start time, an end time, and a duration length,

wherein the start time and/or the end time is an absolute time, or a count value determined based on Greenwich Mean Time, or a relative time;

the duration length is determined based on one or more of a specified time length, a timer and a duration.

9. The method of any one of claims 2 to 8, wherein the condition is for all cells, or is cell-specific.

10. The method of any one of claims 2 to 9, comprising any one of:

the condition related to network status, network capability, network type and/or NES information of the source base station or the source cell is the same for different terminal devices;

the condition related to network status, network capability, network type and/or NES information of the source base station or the source cell is the same for different source cells in any one of an OFF state, an NES state, a DTX ON state, a DTX OFF state, a DRX ON state and a DRX OFF state;

the condition related to network status, network capability, network type and/or NES information of the target base station or the target cell is different for different target cells;

the condition related to network status, network capability, network type and/or NES information of the target base station or the target cell is different for different target cells in any one of an OFF state, an NES state, a DTX ON state, a DTX OFF state, a DRX ON state and a DRX OFF state;

an available time, or a time capable of triggering HO, or a time selectable to hand over to the target cell, or a time capable of maintaining connection and/or performing transmission with the terminal device is different for different candidate target cells; or

the available time, or the time capable of triggering HO, or the time selectable to hand over to the target cell, or the time capable of maintaining connection and/or performing transmission with the terminal device is different for the source cell and a candidate target cell.

11. The method of any one of claims 1 to 10, further comprising:

performing, by the terminal device, the cell HO, or considering that a cell HO execution condition is met, or triggering execution of HO evaluation, or leaving, by the terminal device, the source base station or the source cell, in case that one or more of the following conditions are met:

a first condition, related to the source base station or the source cell;
a second condition, related to a target base station or a target cell;
a third condition, related to the terminal device; and
a fourth condition, related to information received by the terminal device.

12. The method of claim 11, wherein the first condition comprises one or more of:

the condition related to network status, network capability, network type and/or NES information of the source base station or the source cell;
a time length that the source base station or the source cell is in any one of the NES state, the OFF state, the DTX ON state, the DTX OFF state, the DRX ON state and the DRX OFF state is greater than a first time length;
a time length that the source base station or the source cell uses any one of an NES function, an OFF function, a DTX ON function, a DTX OFF function, the DRX ON state and the DRX OFF state is greater than the first time length;
a first channel quality is less than or equal to a first threshold, the first channel quality being a channel quality between the terminal device and the source base station or the source cell; and
a difference between a second channel quality and the first channel quality is greater than or equal to a second threshold, the second channel quality being a channel quality between the terminal device and the target base station or the target cell.

13. The method of claim 11 or 12, wherein the second condition comprises one or more of:

the condition related to network status, network capability, network type and/or NES information of the target base station or the target cell;
a second channel quality is greater than or equal to a third threshold, the second channel quality being a channel quality between the terminal device and the target base station or the target cell;
a difference between the second channel quality and a first channel quality is greater than a second threshold, the first channel quality being a channel quality between the terminal device and the source base station or the source cell;
the target base station or the target cell meets a Conditional Handover, CHO, execution condition/CHO evaluation condition;
the target base station or the target cell meets the CHO execution condition/CHO evaluation condition, and the target base station or the target cell does not use any one of an NES function, an OFF function, a DTX ON function, a DTX OFF function, a DRX ON function and a DRX OFF function;
the target base station or the target cell meets the CHO execution condition/CHO evaluation condition, and the target base station or the target cell is in any one of a non-NES state, an ON state, a DTX ON state, a DTX OFF state, a DRX ON state and a DRX OFF state;
the target base station or the target cell meets the CHO execution condition/CHO evaluation condition, and the target base station or the target cell does not support any one of the NES function, the OFF function, the DTX ON function, the DTX OFF function, the DRX ON function and the DRX OFF function; and
the target base station or the target cell does not use any one of the NES function, the OFF function, the DTX ON function, the DTX OFF function, the DRX ON function and the DRX OFF function, or, the target base station or the target cell is in any one of the non-NES state, the ON state, the DTX ON state, the DTX OFF state, the DRX ON state and the DRX OFF state; the target base station or the target cell does not support any one of the NES function, the OFF function, the DTX ON function, the DTX OFF function, the DRX ON function and the DRX OFF function.

14. The method of any one of claims 11 to 13, wherein the third condition comprises:

a serving cell of the terminal device is the source cell;

the terminal device supports an NES capability;

the terminal device has no transmission demand in a first time length;

the terminal device receives an HO configuration for one or more candidate target cells;

a Radio Link Failure, RLF, occurs in the terminal device; and

the RLF occurs in the terminal device in case that the source base station or the source cell is in any one of an NES state, an OFF state, a DTX ON state, a DTX OFF state, a DRX ON state and a DRX OFF state.

**15.** The method of any one of claims 10 to 14, wherein the fourth condition comprises:

the terminal device receives third indication information, the third indication information being configured for one or more of:

instructing or triggering the terminal device to perform HO evaluation;

instructing the terminal device to perform or trigger HO by using the HO configuration information;

instructing the terminal device to perform the HO based on pre-configured configuration information of the target cell;

indicating a network capability or network type of the source base station or the source cell;

indicating whether the source base station or the source cell uses any one of an NES function, an OFF function, a DTX ON function, a DTX OFF function, a DRX ON function and a DRX OFF function;

indicating any one of an NES state, an OFF state, a DTX ON state, a DTX OFF state, a DRX ON state and a DRX OFF state of the source base station or the source cell;

indicating an available time or non-energy-saving time or working time of the source base station or the source cell;

indicating an unavailable time or energy-saving time or closing time of the source base station or the source cell;

indicating an information transmission time between the source base station or the source cell and a terminal;

indicating an information transmission time between the target base station or the target cell and the terminal;

indicating an available time or non-energy-saving time or working time of the target base station or the target cell;

indicating an unavailable time or energy-saving time or closing time of the target base station or the target cell;

indicating a condition related to network status, network capability, network type and/or NES information;

indicating a network capability or network type of the target base station or the target cell;

indicating whether the target base station or the target cell uses any one of the NES function, the OFF function, the DTX ON function, the DTX OFF function, the DRX ON function and the DRX OFF function;

indicating that the target base station or the target cell is in any one of the NES state, the OFF state, the DTX ON state, the DTX OFF state, the DRX ON state and the DRX OFF state;

instructing the terminal device to trigger CHO execution or determination;

instructing the terminal device to perform CHO based on the network status, network capability, network type and/or NES information;

instructing the terminal device to perform or trigger the CHO;

instructing a terminal device supporting an NES capability to perform or trigger the CHO;

instructing the terminal device to perform HO execution or determination;

instructing the terminal device to trigger the HO execution or determination;

instructing the terminal device to perform the HO based on the network status, network capability, network type and/or NES information; and

instructing the terminal device supporting the NES capability to perform an HO process.

**16.** The method of any one of claims 1 to 15, wherein the HO configuration information comprises at least one of:

HO configuration information of one or more candidate target cells;

an execution condition/evaluation condition for each of the one or more candidate target cells; or

execution conditions/evaluation conditions for all of the one or more candidate target cells.

**17.** The method of any one of claims 10 to 16, further comprising at least one of:

handing over, by the terminal device, to the target cell in case that an execution condition/evaluation condition for the target cell is met; or

handing over, by the terminal device, to the target cell in case that one or more of the first condition, the second condition, the third condition and the fourth condition are met and the execution condition/evaluation condition for the target cell is met,

wherein the execution condition/evaluation condition comprises an execution condition/evaluation condition for the target cell in the HO configuration information, or a CHO execution condition/CHO evaluation condition for the target cell in CHO configuration information.

18. The method of any one of claims 1 to 10, wherein the HO configuration information comprises one or more sets of execution conditions/evaluation conditions; or, an execution condition/evaluation condition for the target cell has one or more sets of conditions.

19. The method of claim 18, further comprising:

performing, by the terminal device, the cell HO or HO evaluation by using a first set of execution conditions/evaluation conditions.

20. The method of claim 19, wherein performing, by the terminal device, the cell HO or HO evaluation by using the first set of execution conditions/evaluation conditions comprises at least one of:

in case that the first set of execution conditions/evaluation conditions is used, if the first set of execution conditions/evaluation conditions is met, handing over, by the terminal device, to the target cell;
in case that the first set of execution conditions/evaluation conditions is used, if one or more of a first condition, a second condition, a third condition and a fourth condition are met and the first set of execution conditions/evaluation conditions is met, handing over, by the terminal device, to the target cell;
in case that the first set of execution conditions/evaluation conditions is used, if one or more candidate target cells or all the candidate target cells do not meet the first set of execution conditions/evaluation conditions, selecting, by the terminal device, a candidate target cell with an optimal measurement result from the one or more candidate target cells, for performing the HO;
in case that the first set of execution conditions/evaluation conditions is used, if one or more candidate target cells or all the candidate target cells do not meet the first set of execution conditions/evaluation conditions, selecting, by the terminal device, the target cell from the one or more candidate target cells according to an order of measurement results of the candidate target cells, and/or, handing over to the target cell;
in case that the first set of execution conditions/evaluation conditions is used, if one or more candidate target cells or all the candidate target cells do not meet the first set of execution conditions/evaluation conditions, selecting, by the terminal device, the target cell from the one or more candidate target cells according to priorities or priority ranks of the candidate target cells, and/or, handing over to the target cell;
in case that the first set of execution conditions/evaluation conditions is used, if one or more of the first condition, the second condition, the third condition and the fourth condition are met and one or more candidate target cells or all the candidate target cells do not meet the first set of execution conditions/evaluation conditions, selecting, by the terminal device, a candidate target cell with an optimal measurement result from the one or more candidate target cells, for performing the HO;
in case that the first set of execution conditions/evaluation conditions is used, if one or more of the first condition, the second condition, the third condition and the fourth condition are met and one or more candidate target cells or all the candidate target cells do not meet the first set of execution conditions/evaluation conditions, selecting, by the terminal device, the target cell from the one or more candidate target cells according to an order of measurement results of the candidate target cells, and/or, handing over to the target cell;
in case that the first set of execution conditions/evaluation conditions is used, if one or more of the first condition, the second condition, the third condition and the fourth condition are met and one or more candidate target cells or all the candidate target cells do not meet the first set of execution conditions/evaluation conditions, selecting, by the terminal device, the target cell from the one or more candidate target cells according to priorities or priority ranks of the candidate target cells, and/or, handing over to the target cell;
in case that one set of execution conditions/evaluation conditions is configured, if the first set of execution conditions/evaluation conditions is met, handing over, by the terminal device, to the target cell;
in case that one set of execution conditions/evaluation conditions is configured, if one or more of the first condition, the second condition, the third condition and the fourth condition are met and the first set of execution conditions/evaluation conditions is met, handing over, by the terminal device, to the target cell;
in case that one set of execution conditions/evaluation conditions is configured, if one or more candidate target cells or all the candidate target cells do not meet the first set of execution conditions/evaluation conditions, selecting, by the terminal device, a candidate target cell with an optimal measurement result from the one or more candidate target cells, for performing the HO;
in case that one set of execution conditions/evaluation conditions is configured, if one or more candidate target cells or all the candidate target cells do not meet the first set of execution conditions/evaluation conditions, selecting, by the terminal device, the target cell from the one or more candidate target cells according to an order of measurement results of the candidate target cells, and/or, handing over to the target cell;

in case that one set of execution conditions/evaluation conditions is configured, if one or more candidate target cells or all the candidate target cells do not meet the first set of execution conditions/evaluation conditions, selecting, by the terminal device, the target cell from the one or more candidate target cells according to priorities or priority ranks of the candidate target cells, and/or, handing over to the target cell;

in case that one set of execution conditions/evaluation conditions is configured, if one or more of the first condition, the second condition, the third condition and the fourth condition are met and one or more candidate target cells or all the candidate target cells do not meet the first set of execution conditions/evaluation conditions, selecting, by the terminal device, a candidate target cell with an optimal measurement result from the one or more candidate target cells, for performing the HO;

in case that one set of execution conditions/evaluation conditions is configured, if one or more of the first condition, the second condition, the third condition and the fourth condition are met and one or more candidate target cells or all the candidate target cells do not meet the first set of execution conditions/evaluation conditions, selecting, by the terminal device, the target cell from the one or more candidate target cells according to an order of measurement results of the candidate target cells, and/or, handing over to the target cell; or

in case that one set of execution conditions/evaluation conditions is configured, if one or more of the first condition, the second condition, the third condition and the fourth condition are met and one or more candidate target cells or all the candidate target cells do not meet the first set of execution conditions/evaluation conditions, selecting, by the terminal device, the target cell from the one or more candidate target cells according to priorities or priority ranks of the candidate target cells, and/or, handing over to the target cell.

21. The method of claim 18, wherein the HO configuration information comprises a plurality of sets of execution conditions/evaluation conditions, and/or the cell HO or HO evaluation is performed by using different execution conditions/evaluation conditions in different cases.

22. The method of claim 21, wherein performing the cell HO or HO evaluation by using different execution conditions/evaluation conditions in different cases comprises one or more of:

in a first case, performing the cell HO or HO evaluation by using a first set of execution conditions/evaluation conditions;

in the first case, if a first set of execution conditions/evaluation conditions corresponding to the target cell is met, handing over, by the terminal device, to the target cell;

in the first case, if one or more of a first condition, a second condition, a third condition and a fourth condition are met and the first set of execution conditions/evaluation conditions corresponding to the target cell is met, handing over, by the terminal device, to the target cell;

in the first case, if one or more candidate target cells or all the candidate target cells do not meet a CHO execution condition/CHO evaluation condition, performing the cell HO or HO evaluation by using a second set of execution conditions/evaluation conditions;

in the first case, if one or more of the first condition, the second condition, the third condition and the fourth condition are met and one or more candidate target cells or all the candidate target cells do not meet the CHO execution condition/CHO evaluation condition, performing the cell HO/HO evaluation by using the second set of execution conditions/evaluation conditions;

in the first case, if one or more candidate target cells or all the candidate target cells do not meet the CHO execution condition/CHO evaluation condition, performing, by the terminal device, any one of: selecting, by the terminal device, a candidate target cell with an optimal measurement result from the one or more candidate target cells, for performing the HO; or, selecting, by the terminal device, the target cell from the one or more candidate target cells according to an order of measurement results of the candidate target cells, and/or, handing over to the target cell; or, selecting, by the terminal device, the target cell from the one or more candidate target cells according to priorities or priority ranks of the candidate target cells, and/or, handing over to the target cell;

in the first case, if one or more of the first condition, the second condition, the third condition and the fourth condition are met and one or more candidate target cells or all the candidate target cells do not meet the CHO execution condition/CHO evaluation condition, performing, by the terminal device, any one of: selecting, by the terminal device, a candidate target cell with an optimal measurement result from the one or more candidate target cells, for performing the HO; or, selecting, by the terminal device, the target cell from the one or more candidate target cells according to an order of measurement results of the candidate target cells, and/or, handing over to the target cell; or, selecting, by the terminal device, the target cell from the one or more candidate target cells according to priorities or priority ranks of the candidate target cells, and/or, handing over to the target cell;

in the first case, if the first set of execution conditions/evaluation conditions is not met, performing the cell HO or HO evaluation by using the second set of execution conditions/evaluation conditions;

in the first case, if one or more of the first condition, the second condition, the third condition and the fourth condition are met and the first set of execution conditions/evaluation conditions is not met, performing the cell HO/HO evaluation by using the second set of execution conditions/evaluation conditions;

in the first case, if the first set of execution conditions/evaluation conditions is not met, performing, by the terminal device, any one of: selecting, by the terminal device, a candidate target cell with an optimal measurement result from the one or more candidate target cells, for performing the HO; or, selecting, by the terminal device, the target cell from the one or more candidate target cells according to an order of measurement results of the candidate target cells, and/or, handing over to the target cell; or, selecting, by the terminal device, the target cell from the one or more candidate target cells according to priorities or priority ranks of the candidate target cells, and/or, handing over to the target cell;

in the first case, if one or more of the first condition, the second condition, the third condition and the fourth condition are met and a first set of CHO execution condition/CHO evaluation condition is not met, performing, by the terminal device, any one of: selecting, by the terminal device, a candidate target cell with an optimal measurement result from the one or more candidate target cells, for performing the HO; or, selecting, by the terminal device, the target cell from the one or more candidate target cells according to an order of measurement results of the candidate target cells, and/or, handing over to the target cell; or, selecting, by the terminal device, the target cell from the one or more candidate target cells according to priorities or priority ranks of the candidate target cells, and/or, handing over to the target cell;

in a second case, performing the cell HO or HO evaluation by using a second set of execution conditions/evaluation conditions;

in the second case, if a second set of execution conditions/evaluation conditions corresponding to the target cell is met, handing over, by the terminal device, to the target cell;

in the second case, if one or more of a first condition, a second condition, a third condition and a fourth condition are met and the second set of execution conditions/evaluation conditions corresponding to the target cell is met, handing over, by the terminal device, to the target cell;

in the second case, if one or more candidate target cells or all the candidate target cells meet a CHO execution condition/CHO evaluation condition, performing the cell HO or HO evaluation by using the first set of execution conditions/evaluation conditions;

in the second case, if one or more of the first condition, the second condition, the third condition and the fourth condition are met and one or more candidate target cells or all the candidate target cells do not meet the CHO execution condition/CHO evaluation condition, performing the cell HO by using the first set of execution conditions/evaluation conditions;

in the second case, if one or more candidate target cells or all the candidate target cells do not meet the CHO execution condition/CHO evaluation condition, performing, by the terminal device, any one of: selecting, by the terminal device, a candidate target cell with an optimal measurement result from the one or more candidate target cells, for performing the HO; or, selecting, by the terminal device, the target cell from the one or more candidate target cells according to an order of measurement results of the candidate target cells, and/or, handing over to the target cell; or, selecting, by the terminal device, the target cell from the one or more candidate target cells according to priorities or priority ranks of the candidate target cells, and/or, handing over to the target cell;

in the second case, if one or more of the first condition, the second condition, the third condition and the fourth condition are met and one or more candidate target cells or all the candidate target cells do not meet the CHO execution condition/CHO evaluation condition, performing, by the terminal device, any one of: selecting, by the terminal device, a candidate target cell with an optimal measurement result from the one or more candidate target cells, for performing the HO; or, selecting, by the terminal device, the target cell from the one or more candidate target cells according to an order of measurement results of the candidate target cells, and/or, handing over to the target cell; or, selecting, by the terminal device, the target cell from the one or more candidate target cells according to priorities or priority ranks of the candidate target cells, and/or, handing over to the target cell;

in the second case, if one or more candidate target cells or all the candidate target cells meet a second set of CHO execution condition/CHO evaluation condition, performing the cell HO or HO evaluation by using the second set of execution conditions/evaluation conditions;

in the second case, if the first set of CHO execution condition/CHO evaluation condition is not met, performing the cell HO or HO evaluation by using the second set of execution conditions/evaluation conditions;

in the second case, if one or more of the first condition, the second condition, the third condition and the fourth condition are met and the first set of CHO execution condition/CHO evaluation condition is not met, performing the cell HO by using the second set of execution conditions/evaluation conditions;

in the second case, if the first set of CHO execution condition/CHO evaluation condition is not met, performing, by the terminal device, any one of: selecting, by the terminal device, a candidate target cell with an optimal measurement result from the one or more candidate target cells, for performing the HO; or, selecting, by the terminal device, the target cell from the one or more candidate target cells according to an order of measurement results of the candidate target cells, and/or, handing over to the target cell; or, selecting, by the terminal device, the target cell from the one or more candidate target cells according to priorities or priority ranks of the candidate target cells, and/or, handing over to the target cell; and

in the second case, if one or more of the first condition, the second condition, the third condition and the fourth condition are met and the first set of CHO execution condition/CHO evaluation condition is not met, performing, by the terminal device, any one of: selecting, by the terminal device, a candidate target cell with an optimal measurement result from the one or more candidate target cells, for performing the HO; or, selecting, by the terminal device, the target cell from the one or more candidate target cells according to an order of measurement results of the candidate target cells, and/or, handing over to the target cell; or, selecting, by the terminal device, the target cell from the one or more candidate target cells according to priorities or priority ranks of the candidate target cells, and/or, handing over to the target cell.

23. The method of any one of claims 1 to 22, further comprising at least one of:

in case that the one or more sets of execution conditions/evaluation conditions are not configured, or in case that the one or more sets of execution conditions/evaluation conditions are not activated or enabled, if one or more candidate target cells or all the candidate target cells do not meet an execution condition/evaluation condition for the target cell, selecting, by the terminal device, a candidate target cell with an optimal measurement result from the one or more candidate target cells, for performing the HO or perform HO evaluation;

in case that the one or more sets of execution conditions/evaluation conditions are not configured, or in case that the one or more sets of execution conditions/evaluation conditions are not activated or enabled, if one or more candidate target cells or all the candidate target cells do not meet the execution condition/evaluation condition for the target cell, selecting, by the terminal device, the target cell from the one or more candidate target cells according to an order of measurement results of the candidate target cells, and/or, handing over to the target cell;

in case that the one or more sets of execution conditions/evaluation conditions are not configured, or in case that the one or more sets of execution conditions/evaluation conditions are not activated or enabled, if one or more candidate target cells or all the candidate target cells do not meet the execution condition for the target cell, selecting, by the terminal device, the target cell from the one or more candidate target cells according to priorities or priority ranks of the candidate target cells, and/or, handing over to the target cell;

in case that the one or more sets of execution conditions/evaluation conditions are not configured, or in case that the one or more sets of execution conditions/evaluation conditions are not activated or enabled, if one or more of the first condition, the second condition, the third condition and the fourth condition are met and one or more candidate target cells or all the candidate target cells do not meet the execution condition/evaluation condition for the target cell, selecting, by the terminal device, a candidate target cell with an optimal measurement result from the one or more candidate target cells, for performing the HO;

in case that the one or more sets of execution conditions/evaluation conditions are not configured, or in case that the one or more sets of execution conditions/evaluation conditions are not activated or enabled, if one or more of the first condition, the second condition, the third condition and the fourth condition are met and one or more candidate target cells or all the candidate target cells do not meet the first set of execution conditions/evaluation conditions, selecting, by the terminal device, the target cell from the one or more candidate target cells according to an order of measurement results of the candidate target cells, and/or, handing over to the target cell; or

in case that the one or more sets of execution conditions/evaluation conditions are not configured, or in case that the one or more sets of execution conditions/evaluation conditions are not activated or enabled, if one or more of the first condition, the second condition, the third condition and the fourth condition are met and one or more candidate target cells or all the candidate target cells do not meet the execution condition/evaluation condition for the target cell, selecting, by the terminal device, the target cell from the one or more candidate target cells according to priorities or priority ranks of the candidate target cells, and/or, handing over to the target cell.

24. The method of any one of claims 1 to 23, further comprising:
terminating/exiting, by the terminal device, the cell HO in case that one or more of the following conditions are met:

a fifth condition, related to a source base station or a source cell;
a sixth condition, related to a target base station or a target cell;
a seventh condition, related to the terminal device; and
an eighth condition, related to information received by the terminal device.

**25.** The method of claim 24, wherein the fifth condition comprises one or more of:

the source base station or the source cell is in an ON state;
the source base station or the source cell is in the ON state in part of time;
the source base station or the source cell is switched from an OFF state to the ON state;
the source base station or the source cell is in a non-NES state;
the source base station or the source cell temporarily postpones entering an NES state;
the source base station or the source cell is about to leave the NES state;
the source base station or the source cell supports energy saving or NES;
the source base station or the source cell does not support energy saving or NES;
the source base station or the source cell is an NES base station or an NES cell;
the source base station or the source cell is a non-NES base station or a non-NES cell;
the source base station or the source cell does not support or use cell DTX or cell DRX;
the source base station or the source cell is in a DTX ON state;
the source base station or the source cell is in a DTX OFF state;
the source base station or the source cell is in a DRX ON state;
the source base station or the source cell is in a DRX OFF state;
the source base station or the source cell is a second type of base station or cell;
the source base station or the source cell is a second base station or a second cell;
the source base station or the source cell is a base station or a cell supporting a second protocol version;
a time length that the source base station or the source cell is in any one of the NES state, the OFF state, the DTX ON state, the DTX OFF state, the DRX ON state and the DRX OFF state is less than or equal to a first time length;
a time length that the source base station or the source cell uses any one of an NES function, an OFF function, a DTX ON function, a DTX OFF function, a DRX ON function and a DRX OFF function is less than or equal to the first time length;
a first channel quality is greater than or equal to a fourth threshold, the first channel quality being a channel quality between the terminal device and the source base station or the source cell;
the source base station or the source cell is in a first time period; or, the cell HO is triggered beyond the first time period, or, a time for performing the cell HO or triggering execution of the cell HO does not comprise the first time period, or, a time taken for handing over to the target cell does not comprise the first time period, or, a time where the target cell is used does not comprise the first time period; or, an energy-saving time or unavailable time of the source cell does not comprise the first time period; and
the source base station or the source cell is in a second time period; or, the cell HO is triggered in the second time period, or, a time for performing the cell HO or triggering execution of the cell HO comprises the second time period, or, a time taken for handing over to the target cell comprises the second time period, or, a time where the target cell is used comprises the second time period; or, an energy-saving time or unavailable time of the source cell does not comprise the second time period.

**26.** The method of claim 24 or 25, wherein the sixth condition comprises one or more of:

the target base station or the target cell is in an OFF state;
the target base station or the target cell is in the OFF state in part of time;
the target base station or the target cell is switched from an ON state to the OFF state;
the target base station or the target cell is in an NES state;
the target base station or the target cell is about to be in the NES state;
the target base station or the target cell is switched from another state to the NES state;
the target base station or the target cell temporarily postpones leaving the NES state;
the target base station or the target cell supports energy saving or NES;
the target base station or the target cell is an NES base station or an NES cell;
the target base station or the target cell supports or uses cell DTX or cell DRX;
the target base station or the target cell is in a DTX ON state;
the target base station or the target cell is in a DTX OFF state;
the target base station or the target cell is in a DRX ON state;
the target base station or the target cell is in a DRX OFF state;
part of information of the target base station or the target cell is not sent or is carried/sent by other node(s);
the target base station or the target cell is a first type of base station or cell;
the target base station or the target cell is a first base station or a first cell;
the target base station or the target cell is a base station or cell supporting a first protocol version;

a time length that the target base station or the target cell is in any one of the NES state, the OFF state, the DTX ON state, the DTX OFF state, the DRX ON state and the DRX OFF state is greater than or equal to a second time length;

a time length that the target base station or the target cell uses any one of an NES function, an OFF function, a DTX ON function, a DTX OFF function, a DRX ON function and a DRX OFF function is greater than or equal to the second time length;

a second channel quality is less than or equal to a fifth threshold, the second channel quality being a channel quality between the terminal device and the target base station or the target cell;

a time length that the second channel quality is less than or equal to the fifth threshold is greater than a third time length;

a difference between the second channel quality and a first channel quality is less than or equal to a second threshold, the first channel quality being a channel quality between the terminal device and the source base station or the source cell;

the target base station or the target cell is in a third time period; or, an available time of the target cell comprises the third time period; or, the cell HO is triggered in the third time period, or, a time for performing the cell HO or triggering execution of the cell HO comprises the third time period, or, a time taken for handing over to the target cell comprises the third time period, or, a time where the target cell is used comprises the third time period; and

the target base station or the target cell is in a fourth time period; or, a unavailable time of the target cell comprises the fourth time period; or, the cell HO is triggered beyond the fourth time period, or, a time for performing the cell HO or triggering execution of the cell HO is beyond the fourth time period, or, a time taken for handing over to the target cell is beyond the fourth time period, or, a time where the target cell is used is beyond the fourth time period.

27. The method of any one of claims 24 to 26, wherein the seventh condition comprises one or more of:

a serving cell of the terminal device is the source cell;

the terminal device supports an NES capability;

the terminal device has no data transmission demand in a first time period, wherein the first time period comprises a time for triggering the terminal device to perform HO; or, the first time period comprises a time for the terminal device to perform the HO, or a time taken for handing over to the target cell; or, the first time period comprises a time period that the source base station or the source cell is in any one of an OFF state, an NES state, a DTX ON state, a DTX OFF state, a DRX ON state and a DRX OFF state; or, the first time period comprises a time period that the source base station or the source cell uses any one of an NES function, an OFF function, a DTX ON function, a DTX OFF function, a DRX ON function and a DRX OFF function; or, the source base station or the source cell corresponding to the first time period supports or has any one of an NES capability, an OFF capability, a DTX ON capability, a DTX OFF capability, a DRX ON capability and a DRX OFF capability; and

the terminal device has a data transmission demand in a second time period, wherein the second time period comprises a time period for transmission by the source base station; or, the second time period comprises a time period for the terminal device and the source base station to maintain connection there-between; or, the second time period comprises an available time of the source base station or the source cell; or, the second time period comprises an unavailable time of the target cell; or, the second time period comprises a time beyond the time for triggering the terminal device to perform the HO; or, the second time period comprises a time beyond the time for the terminal device to perform the HO or a time taken for handing over to the target cell; or, the second time period comprises a time period that the source base station or the source cell is in any one of an ON state, a non-NES state, a DTX ON state, a DTX OFF state, a DRX ON state and a DRX OFF state; or, the second time period comprises a time period that the source base station or the source cell uses any one of an ON function, a non-NES function, an OFF function, a DTX ON function, a DTX OFF function, a DRX ON function and a DRX OFF function; or, the source base station or the source cell corresponding to the second time period supports or has any one of a non-NES capability, an ON capability, a DTX ON capability, a DTX OFF capability, a DRX ON capability and a DRX OFF capability.

28. The method of any one of claims 24 to 27, wherein the eighth condition comprises one or more of:

the terminal device does not receive third indication information, and/or the terminal device receives fourth indication information,

wherein the third indication information is configured for one or more of:

instructing or triggering the terminal device to perform HO evaluation;
instructing the terminal device to perform or trigger HO by using first configuration information;

instructing the terminal device to perform the HO based on pre-configured configuration information of the target cell;

instructing or triggering the terminal device to leave the source cell;

indicating a network capability or network type of the source base station or the source cell;

indicating whether the source base station or the source cell uses any one of an NES function, an OFF function, a DTX ON function, a DTX OFF function, a DRX ON function and a DRX OFF function;

indicating any one of an NES state, an OFF state, a DTX ON state, a DTX OFF state, a DRX ON state and a DRX OFF state of the source base station or the source cell;

indicating an available time or non-energy-saving time or working time of the source base station or the source cell;

indicating an unavailable time or energy-saving time or closing time of the source base station or the source cell;

indicating an information transmission time between the source base station or the source cell and a terminal;

indicating an information transmission time between the target base station or the target cell and the terminal;

indicating an available time or non-energy-saving time or working time of the target base station or the target cell;

indicating an unavailable time or energy-saving time or closing time of the target base station or the target cell;

indicating a condition related to network status, network capability, network type and/or NES information;

indicating a network capability or network type of the target base station or the target cell;

indicating whether the target base station or the target cell uses any one of the NES function, the OFF function, the DTX ON function, the DTX OFF function, the DRX ON function and the DRX OFF function;

indicating that the target base station or the target cell is in any one of the NES state, the OFF state, the DTX ON state, the DTX OFF state, the DRX ON state and the DRX OFF state;

instructing the terminal device to trigger CHO execution or determination;

instructing the terminal device to perform CHO based on the network status, network capability, network type and/or NES information;

instructing the terminal device to perform or trigger the CHO;

instructing a terminal device supporting an NES capability to perform or trigger the CHO;

instructing the terminal device to perform HO execution or determination;

instructing the terminal device to trigger the HO execution or determination;

instructing the terminal device to perform the HO based on the network status, network capability, network type and/or NES information; and

instructing the terminal device supporting the NES capability to perform an HO process,

the fourth indication information is configured to indicate one or more of:

the network capability or network type of the source base station or the source cell;

whether the source base station or the source cell uses any one of the NES function, the OFF function, the DTX ON function, the DTX OFF function, the DRX ON function and the DRX OFF function;

any one of the NES state, the OFF state, the DTX ON state, the DTX OFF state, the DRX ON state and the DRX OFF state of the source base station or the source cell;

the network capability or network type of the target base station or the target cell;

whether the target base station or the target cell uses any one of the NES function, the OFF function, the DTX ON function, the DTX OFF function, the DRX ON function and the DRX OFF function;

any one of the NES state, the OFF state, the DTX ON state, the DTX OFF state, the DRX ON state and the DRX OFF state of the target base station or the target cell;

instructing the terminal device not to perform the CHO execution or determination;

instructing the terminal device not to trigger the CHO execution or determination;

instructing the terminal device to temporarily postpone performing/triggering the CHO;

instructing the terminal device to exit a CHO process;

instructing the terminal device not to perform the HO execution or determination;

instructing the terminal device not to trigger the HO execution or determination;

instructing the terminal device to temporarily postpone performing/triggering the HO; and

instructing the terminal device to exit the HO process.

**29.** The method of any one of claims 10 to 28, further comprising: before performing, by the terminal device, the cell HO,

after receiving the HO configuration information, performing, by the terminal device, measurement based on the HO configuration information, to obtain a measurement result;

or,

after receiving the HO configuration information and the state of the source cell is switched to any one of the NES state, the OFF state, the DTX ON state, the DTX OFF state, the DRX ON state and the DRX OFF state, performing, by the terminal device, measurement based on the HO configuration information, to obtain the measurement result;

or,

in case of receiving the HO configuration information and triggering the HO, performing, by the terminal device, measurement based on the HO configuration information, to obtain the measurement result.

30. The method of any one of claims 1 to 29, further comprising:
selecting or determining, by the terminal device, the target base station or the target cell based on one or more of:
a channel quality; a priority; a priority rank; a number of target cells that meet the condition; network status, network capability, network type and/or NES information of the target base station or the target cell; an available time of the target base station or the target cell; and identification indication of the target base station or the target cell.

31. The method of any one of claims 1 to 30, wherein the target base station/target cell meets at least one of the following conditions, or the target base station/target cell determined from candidate target base stations/candidate target cells meets at least one of the following conditions, or the method comprises: determining the target base station/target cell according to at least one of the following conditions:

the target base station or the target cell is in an ON state;
the target base station or the target cell is in the ON state in part of time;
the target base station or the target cell is switched from an OFF state to the ON state;
the target base station or the target cell supports energy saving or NES;
the target base station or the target cell is in an NES state;
the target base station or the target cell is about to be in the NES state;
the target base station or the target cell is an NES base station or an NES cell;
a time length that the candidate target cell is in the NES state is less than a sixth time length;
a time interval between a current moment and a moment when the target base station or the target cell is about to be switched to the NES state is less than a fourth time length;
the target base station or the target cell is in a non-NES state;
the target base station or the target cell is about to be in the non-NES state;
the target base station or the target cell is a non-NES base station or a non-NES cell;
a time interval between the current moment and a moment when the target base station or the target cell is about to be switched to the non-NES state is less than a fifth time length;
the target base station or the target cell supports or uses cell DTX or cell DRX;
the target base station or the target cell does not use the cell DTX or the cell DRX;
the target base station or the target cell is in a DTX ON state;
the target base station or the target cell is in a DTX OFF state;
the target base station or the target cell is in a DRX ON state;
the target base station or the target cell is in a DRX OFF state;
the target base station or the target cell is a second type of base station or cell;
the target base station or the target cell is a second base station or a second cell;
the target base station or the target cell is a base station or a cell supporting a second protocol version;
a second channel quality meets a CHO execution condition, the second channel quality being a channel quality between the terminal device and the target base station or the target cell;
the second channel quality is greater than or equal to a sixth threshold;
the second channel quality is greater than or equal to a third channel quality, the third channel quality being a channel quality between the terminal device and a candidate target cell in the NES state;
a difference between the second channel quality and the third channel quality is less than or equal to a seventh threshold;
a time length that the difference between the second channel quality and the third channel quality is less than or equal to the seventh threshold is greater than a seventh time length;
there are a plurality of target cells that meet an HO execution or evaluation condition;
there are the plurality of target cells that meet the HO execution or evaluation condition, and a channel quality difference between a plurality of candidate target cells is less than an eighth threshold;
there are the plurality of target cells that meet the HO execution or evaluation condition, and a channel quality difference between candidate target cells with a best channel quality among the plurality of candidate target cells is less than the eighth threshold;
there are a plurality of candidate target cells that meet a channel quality condition;
there are the plurality of candidate target cells that meet the channel quality condition, and a channel quality difference between the plurality of candidate target cells is less than the eighth threshold;
there are the plurality of candidate target cells that meet the channel quality condition, and a channel quality difference between candidate target cells with a best channel quality among the plurality of candidate target cells is less than the eighth threshold;
the target base station or the target cell is a cell with a priority greater than a first priority;
the target base station or the target cell is a cell with a non-low priority; and
the target base station or the target cell is a cell with a highest priority.

32. The method of claim 30 or 31, wherein the priority or priority rank of the target base station or the target cell is indicated by at least one of the following information sent by the source base station:
dedicated signaling, system information, group signaling, the HO configuration information, or CHO configuration information.

33. The method of any one of claims 1 to 31, further comprising:

receiving, by the terminal device, indication information sent by the source base station, and/or, selecting or determining, by the terminal device, the target base station or the target cell according to the indication information sent by the source base station,
wherein the indication information carries an identifier, ID, of the target base station or the target cell, or the indication information is configured to indicate a cell to which the terminal device is to hand over.

34. The method of any one of claims 1 to 33, wherein the terminal device receives first signaling sent by a source base station or a source cell through group signaling and/or a dedicated message, wherein the first signaling comprises one or more of the HO configuration information, an HO command, the first indication information, the second indication information, the third indication information and the fourth indication information.

35. The method of any one of claims 1 to 34, further comprising:

performing, by the terminal device, reception based on transmission mode configuration information, wherein the transmission mode configuration information is configured to indicate a transmission mode of first signaling or a transmission mode of part of information of the first signaling,
wherein transmission modes of the first signaling corresponding to different terminal devices are the same or different; and/or, transmission modes of all or part of the information of the first signaling are the same or different;
the first signaling comprises one or more of the HO configuration information, an HO command, the first indication information, the second indication information, the third indication information and the fourth indication information.

36. The method of claim 35, wherein the transmission mode configuration information is determined based on any one of:
a predefinition, a network configuration, or a preset rule.

37. The method of claim 35 or 36, wherein the transmission mode of the first signaling comprises at least one of:

the source base station sends the first signaling or part of the information of the first signaling through group signaling;
the source base station sends the first signaling or part of the information of the first signaling through a dedicated message;
the source base station repeatedly sends the first signaling or part of the information of the first signaling through the group signaling; or
the source base station repeatedly sends the first signaling or part of the information of the first signaling through the dedicated message.

38. The method of any one of claims 35 to 37, wherein the transmission mode configuration information comprises area configuration information and/or information about number of times of repeated transmissions;

the area configuration information is configured to indicate position information of the terminal device, or a position relationship and/or orientation relationship between the terminal device and a source base station or a source cell;

the information about number of times of repeated transmissions is configured to indicate a number of times of repeated receptions of the terminal device, or a number of times that information of the source base station or the source cell is repeatedly sent, or a number of times that the source base station repeatedly sends the first signaling or part of the information of the first signaling.

39. The method of claim 38, wherein different area configuration information corresponds to different transmission modes.

40. The method of claim 39, wherein different area configuration information corresponding to different transmission modes comprises one or more of:

for a first area, the source base station or the source cell sends the first signaling or part of the information of the first signaling to the terminal device through group signaling;

for a second area, the source base station or the source cell sends the first signaling or part of the information of the first signaling to the terminal device through a dedicated message or through the group signaling and the dedicated message;

in case that the terminal device is in the first area or the area configuration information indicates that the terminal device is in the first area, the source base station or the source cell sends the first signaling or part of the information of the first signaling to the terminal device through the group signaling; and

in case that the terminal device is in the second area or the area configuration information indicates that the terminal device is in the second area, the source base station or the source cell sends the first signaling or part of the information of the first signaling to the terminal device through the dedicated message or through the group signaling and the dedicated message.

41. The method of any one of claims 38 to 40, wherein the area configuration information is determined based on one or more of:

a channel quality, path loss information, distance information and/or beam information between the terminal device and the source base station or the source cell; and/or

a channel quality, path loss information, distance information and/or beam information between the terminal device and the target base station or the target cell.

42. The method of any one of claims 38 to 41, wherein the information about number of times of repeated transmissions is the same for different terminal devices;

or,

the information about number of times of repeated transmissions is different for different terminal devices;

or,

the information about number of times of repeated transmissions is different for terminal device(s) in different areas.

43. The method of any one of claims 1 to 42, wherein the HO configuration information or transmission mode configuration information is further configured to indicate one or more of:

a group to which the terminal device belongs;

Downlink Control Information, DCI, of the group to which the terminal device belongs; and

Radio Network Temporary Identifier, RNTI, of the group to which the terminal device belongs.

44. The method of claim 43, wherein the transmission mode configuration information comprises area configuration information and information about number of times of repeated transmissions,

wherein the area configuration information is associated with the group to which the terminal device belongs, and/or the information about number of times of repeated transmissions is associated with the group to which the terminal device belongs.

45. The method of any one of claims 38 to 44, further comprising:

receiving, by the terminal device, the first signaling or part of the information of the first signaling based on the area configuration information and/or the information about number of times of repeated transmissions.

46. The method of claim 45, wherein receiving, by the terminal device, the first signaling or part of the information of the first signaling based on the area configuration information comprises:

receiving, by the terminal device, the first signaling or part of the information of the first signaling based on a transmission mode corresponding to the area configuration information,
wherein in case that the area configuration information indicates that the terminal device is in a first area, the first signaling or part of the information of the first signaling is sent through group signaling;
in case that the area configuration information indicates that the terminal device is in a second area, the first signaling or part of the information of the first signaling is sent through a dedicated message or through the group signaling and the dedicated message.

47. The method of claim 45 or 46, further comprising one of:

in case that the transmission mode configuration information comprises the information about number of times of repeated transmissions, receiving, by the terminal device, the first signaling or part of the information of the first signaling according to the information about number of times of repeated transmissions;
in case that the transmission mode configuration information comprises the information about number of times of repeated transmissions, receiving, by the terminal device, the first signaling or part of the information of the first signaling according to the information about number of times of repeated transmissions and the area configuration information and based on a transmission mode corresponding to the area configuration information and a number of times indicated by the information about number of times of repeated transmissions; or
in case that the transmission mode configuration information comprises the information about number of times of repeated transmissions, determining, by the terminal device, a number of times of receptions according to a channel state between the terminal device and the source base station or the source cell, wherein the number of times of receptions is less than or equal to the number of times indicated by the information about number of times of repeated transmissions.

48. The method of any one of claims 34 to 47, further comprising:
after receiving the first signaling or part of the information of the first signaling once, ignoring, by the terminal device, the first signaling or part of the information of the first signaling repeatedly sent by the source base station or the source cell.

49. The method of any one of claims 34 to 48, further comprising:
after receiving the first signaling or part of the information of the first signaling once, responding, by the terminal device, to the first signaling or part of the information of the first signaling.

50. The method of any one of claims 1 to 49, wherein the cell HO comprises at least one of: HO, CHO, HO based on the HO configuration information, or pre-configured multi-candidate-target-cell HO.

51. A method for wireless communication, comprising:
performing, by a terminal device, at least one of cell access, access permission, cell selection, or cell reselection according to fifth indication information.

52. The method of claim 51, wherein the fifth indication information is configured to indicate whether one or more of a network, frequency point and cell allow a first terminal device to access/select/reselect, or whether the first terminal device is allowed to access one or more of the network, frequency point and cell.

53. The method of claim 51 or 52, further comprising:
receiving, by the terminal device, sixth indication information associated with an energy-saving technology, wherein the sixth indication information is configured to indicate whether one or more of a network, frequency point and cell allow a terminal device supporting the energy-saving technology associated with the sixth indication information to access/select/reselect, or whether the terminal device supporting the energy-saving technology associated with the sixth indication information is allowed to access one or more of the network/frequency point/cell.

54. The method of claim 53, further comprising at least one of:

there are one or more sixth indication information; or
different sixth indication information is associated with different energy-saving technologies.

55. The method of any one of claims 52 to 54, wherein the network, frequency point and cell are one or more of:

a network, frequency point and cell supporting energy-saving/network energy saving, NES;
a network, frequency point and cell allowing or identifying a first terminal device;
a network, frequency point and cell configured to implement energy-saving/NES;
any network, frequency point and cell;
a network, frequency point and cell not allowing a non-first terminal device; and
a network, frequency point and cell that the non-first terminal device is controlled to access or select.

56. The method of any one of claims 52 to 55, wherein the network, frequency point and cell comprise one or more of:
a source base station, a serving base station, a current base station, an adjacent base station, a candidate target base station, a target base station, an inter-system base station, a present frequency point, a serving frequency point, a current frequency point, an adjacent frequency point, an intra-frequency point, an inter-frequency point, an inter-system frequency point, the source cell, a serving cell, a current cell, an adjacent cell, a candidate target cell, a target cell, an intra-frequency point cell, an inter-frequency point cell, and an inter-system cell.

57. The method of any one of claims 51 to 56, comprising any one of:

a first terminal device is allowed to access one or more of the network, frequency point and cell;
the first terminal device is allowed to select one or more of the network, frequency point and cell;
the first terminal device is allowed to reselect one or more of the network, frequency point and cell;
a non-first terminal device is not allowed to access one or more of the network, frequency point and cell;
the non-first terminal device is not allowed to select one or more of the network, frequency point and cell; or
the non-first terminal device is not allowed to reselect one or more of the network, frequency point and cell.

58. The method of any one of claims 51 to 57, further comprising:
performing, by the terminal device, at least one of cell access, access permission, cell selection, or cell reselection based on the fifth indication information and/or the sixth indication information.

59. The method of claim 58, wherein performing, by the terminal device, at least one of cell access, access permission, cell selection, or cell reselection based on the fifth indication information and/or the sixth indication information comprises any one of:

in case that the fifth indication information indicates that one or more of the network, frequency point and cell allow a first terminal device to access/select/reselect, or that the first terminal device is allowed to access one or more of the network, frequency point and cell, if the terminal device is the first terminal device, performing, by the terminal device, access/selection/reselection based on one or more of the network, frequency point and cell; and/or, if the terminal device is a non-first terminal device, not selecting, by the terminal device, one or more of the network, frequency point and cell to perform access/selection/reselection;
in case that the fifth indication information indicates that one or more of the network, frequency point and cell do not allow a non-first terminal device to access/select/reselect, or that the non-first terminal device is not allowed to access one or more of the network, frequency point and cell, if the terminal device is the first terminal device, performing, by the terminal device, access/selection/reselection based on one or more of the network, frequency point and cell; and/or, if the terminal device is the non-first terminal device, not selecting, by the terminal device, one or more of the network, frequency point and cell to perform access/selection/reselection;
in case that the sixth indication information indicates that one or more of the network, frequency point and cell allow a terminal device supporting an energy-saving technology associated with the sixth indication information to access/select/reselect, or that the terminal device supporting the energy-saving technology associated with the sixth indication information is allowed to access one or more of the network, frequency point and cell, if the terminal device supports the energy-saving technology associated with the sixth indication information, performing, by the terminal device, access/selection/reselection based on one or more of the network, frequency point and cell; and/or, if the terminal device does not support the energy-saving technology associated with the sixth indication information, not selecting, by the terminal device, one or more of the network, frequency point and cell to perform access/selection/reselection;
in case that the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device supports the energy-saving technology associated with the sixth indication information, performing, by the terminal device, access/selection/reselection based on one or more of the network, frequency point and cell; and/or, if the terminal device does not support the energy-saving technology associated with the sixth indication information, not selecting, by the terminal device, one or more of the network, frequency point and cell to perform access/selection/reselection;

in case that the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is a terminal device supporting the energy-saving technology associated with the sixth indication information among first terminal devices, performing, by the terminal device, access/selection/reselection based on one or more of the network, frequency point and cell; and/or, if the terminal device is a terminal device not supporting the energy-saving technology associated with the sixth indication information among the first terminal devices, not selecting, by the terminal device, one or more of the network, frequency point and cell to perform access/selection/reselection;

in case that the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device is a terminal device supporting the energy-saving technology associated with the sixth indication information among first terminal devices, performing, by the terminal device, access/selection/reselection based on one or more of the network, frequency point and cell; and/or, if the terminal device is a terminal device not supporting the energy-saving technology associated with the sixth indication information among the first terminal devices, not selecting, by the terminal device, one or more of the network, frequency point and cell to perform access/selection/reselection;

in case that the fifth indication information indicates that one or more of the network, frequency point and cell allow a first terminal device to access/select/reselect, or that the first terminal device is allowed to access one or more of the network, frequency point and cell, and the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is the first terminal device and supports the energy-saving technology associated with the sixth indication information, performing, by the terminal device, access/selection/reselection based on one or more of the network, frequency point and cell; and/or, if the terminal device is a non-first terminal device, and/or the terminal device does not support the energy-saving technology associated with the sixth indication information, not selecting, by the terminal device, one or more of the network, frequency point and cell to perform access/selection/reselection;

in case that the fifth indication information indicates that one or more of the network, frequency point and cell allow a first terminal device to access/select/reselect, or that the first terminal device is allowed to access one or more of the network, frequency point and cell, and the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device is the first terminal device and supports the energy-saving technology associated with the sixth indication information, performing, by the terminal device, access/selection/reselection based on one or more of the network, frequency point and cell; and/or, if the terminal device is a non-first terminal device, and/or the terminal device does not support the energy-saving technology associated with the sixth indication information, not selecting, by the terminal device, one or more of the network, frequency point and cell to perform access/selection/reselection;

in case that the fifth indication information indicates that one or more of the network, frequency point and cell do not allow a non-first terminal device to access/select/reselect, or that the first terminal device is not allowed to access one or more of the network, frequency point and cell, and the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is the first terminal device and supports the energy-saving technology associated with the sixth indication information, performing, by the terminal device, access/selection/reselection based on one or more of the network, frequency point and cell; and/or, if the terminal device is the non-first terminal device, and/or the terminal device does not support the energy-saving technology associated with the sixth indication information, not selecting, by the terminal device, one or more of the network, frequency point and cell to perform access/selection/reselection;

in case that the fifth indication information indicates that one or more of the network, frequency point and cell do not allow a non-first terminal device to access/select/reselect, or that the non-first terminal device is not allowed to access one or more of the network, frequency point and cell, and the sixth indication information indicates that one or more of the network, frequency point and cell do not allow a terminal device not supporting the energy-saving technology associated with the sixth indication information to access/select/reselect, or that the terminal device not supporting the energy-saving technology associated with the sixth indication information is not allowed to access one or more of the network, frequency point and cell, if the terminal device is the first terminal device and supports the energy-saving technology associated with the sixth indication information, performing, by the terminal device, access/selection/reselection based on one or more of the network, frequency point and cell; and/or, if the terminal device is the non-first terminal device, and/or the terminal device does not support the energy-saving technology associated with the sixth indication information, not selecting, by the terminal device, one or more of the network, frequency point and cell to perform access/selection/reselection;

in case that the fifth indication information indicates that one or more of the network, frequency point and cell do not allow the first terminal device to access/select/reselect, or that the first terminal device is not allowed to access one or more of the network, frequency point and cell, and the sixth indication information indicates that one or more of the network, frequency point and cell allow a terminal device supporting the energy-saving technology associated with the sixth indication information to access/select/reselect, or that the terminal device supporting the energy-saving technology associated with the sixth indication information is allowed to access one or more of the network, frequency point and cell, if the terminal device is the first terminal device, not selecting, by the terminal device, one or more of the network, frequency point and cell to perform access/selection/reselection; and/or, if the terminal device is the non-first terminal device and the terminal device supports the energy-saving technology associated with the sixth indication information, performing, by the terminal device, access/selection/reselection based on one or more of the network, frequency point and cell; and/or, if the terminal device is the non-first terminal device and the terminal device does not support the energy-saving technology associated with the sixth indication information, not selecting, by the terminal device, one or more of the network, frequency point and cell to perform access/selection/reselection; or

in case that the fifth indication information indicates that one or more of the network, frequency point and cell do not allow the first terminal device to access/select/reselect, or that the first terminal device is not allowed to access one or more of the network, frequency point and cell, and the sixth indication information indicates that one or more of the network, frequency point and cell do not allow a terminal device supporting the energy-saving technology associated with the sixth indication information to access/select/reselect, or that the terminal device supporting the energy-saving technology associated with the sixth indication information is not allowed to access one or more of the network, frequency point and cell, if the terminal device is the first terminal device, not selecting, by the terminal device, one or more of the network, frequency point and cell to perform access/selection/reselection; and/or, if the terminal device is the non-first terminal device and the terminal device does not support the energy-saving technology associated with the sixth indication information, performing, by the terminal device, access/selection/reselection based on one or more of the network, frequency point and cell; and/or, if the terminal device is the non-first terminal device and the terminal device supports the energy-saving technology associated with the sixth indication information, not selecting, by the terminal device, one or more of the network, frequency point and cell to perform access/selection/reselection.

60. The method of any one of claims 51 to 59, wherein in case that the terminal device is another terminal device except the first terminal device, the terminal device is not configured with/does not acquire/does not apply parameters for cell access/selection/reselection.

61. The method of any one of claims 51 to 60, wherein the fifth indication information and/or sixth indication information are carried through system information or radio resource control, RRC, signaling.

62. A method for wireless communication, comprising:
receiving, by a terminal device, first paging configuration information, wherein the first paging configuration information is used by a first terminal device to determine a first paging position.

63. The method of claim 62, wherein the first paging configuration information comprises one or more of:

> a position of a paging monitoring window;
> a continuous monitoring time period;
> a non-monitoring time period;
> a position of the paging monitoring window in a first cycle;
> a continuous monitoring time period in the first cycle; and
> a non-monitoring time period in the first cycle,
> wherein the first cycle comprises a cycle related to the terminal device, or a cycle related to a cell, or a cycle related to a base station.

64. The method of claim 62 or 63, further comprising:
receiving, by the terminal device, second paging configuration information, wherein the second paging configuration information is used by a second terminal device to determine a second paging position.

65. The method of claim 64, wherein the second paging configuration information comprises one or more of:

> a position of a paging monitoring window;
> a continuous monitoring time period;
> a non-monitoring time period;
> a position of the paging monitoring window in a second cycle;
> a continuous monitoring time period in the second cycle; and
> a non-monitoring time period in the second cycle,
> wherein the second cycle comprises a cycle related to the terminal device, or a cycle related to a cell, or a cycle related to a base station.

66. The method of any one of claims 62 to 65, further comprising:
in case that the terminal device is the first terminal device, determining, by the terminal device, the first paging position based on the first paging configuration information, and monitoring, by the terminal device, a paging message at the first paging position.

67. The method of any one of claims 62 to 66, further comprising:

> in case that the terminal device is a second terminal device, the terminal device being denied to access the base station;
> or,
> in case that the terminal device is the second terminal device, determining, by the terminal device, a second paging position based on the second paging configuration information, and monitoring, by the terminal device, a paging message at the second paging position.

68. The method of claim 66 or 67, wherein monitoring the paging message at the first paging position comprises any one of:

> monitoring, by the terminal device, the paging message at all or part of first paging positions in a paging monitoring window;
> monitoring, by the terminal device, the paging message at all or part of first paging positions in a continuous monitoring time period, wherein the continuous monitoring time period comprises a time period during which the terminal device is capable of monitoring the paging message;
> monitoring, by the terminal device, the paging message at all or part of first paging positions in a paging monitoring window of each first cycle; or
> monitoring, by the terminal device, the paging message at all or part of first paging positions in a continuous monitoring time period of each first cycle.

69. The method of claim 62, wherein the part of the first paging positions are determined based on identification, ID, information of the terminal device and/or a preset rule.

70. A method for wireless communication, comprising:
sending, by a source base station or a source cell, handover, HO, configuration information, wherein the HO configuration information comprises an HO configuration and/or a condition that a terminal device is required to meet to perform cell HO.

71. The method of claim 70, wherein the condition is related to one or more of network status, network capability, network type and network energy saving, NES, information.

72. The method of claim 70 or 71, wherein the condition comprises:
a condition related to network status, network capability, network type and/or NES information of the source base station or the source cell; and/or, a condition related to network status, network capability, network type and/or NES information of a target base station or a target cell.

73. The method of claim 72, wherein the condition related to network status, network capability, network type and/or NES information of the source base station or the source cell comprises one or more of:

the source base station or the source cell is in an OFF state;
the source base station or the source cell is in the OFF state in part of time;
the source base station or the source cell is switched from an ON state to the OFF state;
the source base station or the source cell is in an NES state;
the source base station or the source cell is about to be in the NES state;
the source base station or the source cell is switched from another state to the NES state;
the source base station or the source cell temporarily postpones leaving the NES state;
the source base station or the source cell supports energy saving or NES;
the source base station or the source cell is an NES base station or an NES cell;
the source base station or the source cell supports or uses cell discontinuous transmission, DTX, or cell discontinuous reception, DRX;
the source base station or the source cell is in a DTX ON state;
the source base station or the source cell is in a DTX OFF state;
the source base station or the source cell is in a DRX ON state;
the source base station or the source cell is in a DRX OFF state;
part of information of the source base station or the source cell is not sent or is carried/sent by other node(s);
the source base station or the source cell is a first type of base station or cell;
the source base station or the source cell is a first base station or a first cell;
the source base station or the source cell is a base station or cell supporting a first protocol version;
the source base station or the source cell is in a first time period; or, the cell HO is triggered in the first time period, or, a time for performing the cell HO or triggering execution of the cell HO comprises the first time period, or, a time taken for handing over to the target cell comprises the first time period, or, a time where the target cell is used comprises the first time period; or, an energy-saving time or unavailable time of the source cell is the first time period;
the source base station or the source cell is in a second time period; or, the cell HO is triggered beyond the second time period, or, a time for performing the cell HO or triggering execution of the cell HO is beyond the second time period, or, a time taken for handing over to the target cell is beyond the second time period, or, a time where the target cell is used is beyond the second time period; or, an energy-saving time or unavailable time of the source cell is beyond the second time period;
the terminal device receives first indication information, wherein the first indication information is configured to instruct or trigger the terminal device to perform the cell HO; or, the first indication information is configured to instruct or trigger the terminal device to perform HO evaluation; or, the first indication information is configured to instruct the terminal device to perform or trigger HO by using the HO configuration information; or, the first indication information is configured to instruct the terminal device to perform the HO based on pre-configured configuration information of the target cell; or, the first indication information is configured to indicate a condition related to network status, network capability, network type and/or NES information;
the terminal device receives the first indication information, and a channel state between the terminal device and the source base station or the source cell meets a channel condition; and
the terminal device receives the first indication information, and a channel state between the terminal device and the target base station or the target cell meets the channel condition.

74. The method of claim 73, wherein the first indication information is determined based on state indication information of the source base station or the source cell, and the state indication information is configured to indicate any one of the NES state, the OFF state, the DTX ON state, the DTX OFF state, the DRX ON state and the DRX OFF state of the source base station or the source cell; or

> the first indication information is determined based on any one of an NES capability, an OFF capability, a DTX ON capability, a DTX OFF capability, a DRX ON capability and a DRX OFF capability of the source base station or the source cell; or
> the first indication information is determined based on the source base station or the source cell using any one of an NES function, an OFF function, a DTX ON function, a DTX OFF function, a DRX ON function and a DRX OFF function; or
> the first indication information is determined based on a demand of the source base station or the source cell; or
> the first indication information is determined based on a demand or state of the target base station or the target cell; or
> the first indication information is determined based on a capability of the target base station or the target cell.

75. The method of any one of claims 72 to 74, wherein the condition related to network status, network capability, network type and/or NES information of the target base station or the target cell comprises one or more of:

> the target base station or the target cell is in an ON state;
> the target base station or the target cell is in the ON state in part of time;
> the target base station or the target cell is switched from an OFF state to the ON state;
> the target base station or the target cell is in a non-NES state;
> the target base station or the target cell is about to be in the non-NES state;
> the target base station or the target cell temporarily postpones leaving the non-NES state;
> the target base station or the target cell is a non-NES base station or a non-NES cell;
> the target base station or the target cell supports or uses cell discontinuous transmission, DTX, or cell discontinuous reception, DRX;
> the target base station or the target cell is in a DTX ON state;
> the target base station or the target cell is in a DTX OFF state;
> the target base station or the target cell is in a DRX ON state;
> the target base station or the target cell is in a DRX OFF state;
> the target base station or the target cell is a second type of base station or cell;
> the target base station or the target cell is a second base station or a second cell;
> the target base station or the target cell is a base station or a cell supporting a second protocol version;
> the target base station or the target cell is in a third time period; or, an available time of the target cell comprises the third time period; or, the cell HO is triggered in the third time period, or, a time for performing the cell HO or triggering execution of the cell HO comprises the third time period, or, a time taken for handing over to the target cell comprises the third time period, or, a time where the target cell is used comprises the third time period;
> the target base station or the target cell is in a fourth time period; or, a unavailable time of the target cell comprises the fourth time period; or, the cell HO is triggered beyond the fourth time period, or, a time for performing the cell HO or triggering execution of the cell HO is beyond the fourth time period, or, a time taken for handing over to the target cell is beyond the fourth time period, or, a time where the target cell is used is beyond the fourth time period;
> the terminal device receives second indication information, wherein the second indication information is configured to instruct or trigger the terminal device to perform the cell HO; or, the second indication information is configured to instruct or trigger the terminal device to perform HO evaluation; or, the second indication information is configured to instruct the terminal device to perform or trigger HO by using the HO configuration information; or, the second indication information is configured to instruct the terminal device to perform the HO based on pre-configured configuration information of the target cell; or, the second indication information is configured to indicate a condition related to network status, network capability, network type and/or NES information;
> the terminal device receives the second indication information, and a channel state between the terminal device and the target base station or the target cell meets a channel condition; and
> the terminal device receives the second indication information, and a channel state between the terminal device and the source base station or the source cell meets the channel condition.

76. The method of claim 75, wherein the second indication information is determined based on state indication information of the target base station or the target cell, and the state indication information is configured to indicate any one of the non-NES state, the ON state, the DTX ON state, the DTX OFF state, the DRX ON state and the DRX OFF state of the target base station or the target cell; or

the second indication information is determined based on any one of a non-NES capability, an ON capability, a DTX ON capability, a DTX OFF capability, a DRX ON capability and a DRX OFF capability of the target base station or the target cell; or

the second indication information is determined based on the target base station or the target cell using any one of a non-NES function, an ON function, a DTX ON function, a DTX OFF function, a DRX ON function and a DRX OFF function; or

the second indication information is determined based on a demand of the target base station or the target cell; or

the second indication information is determined based on a demand of the source base station or the source cell; or

the second indication information is determined based on a capability of the source base station or the source cell.

77. The method of any one of claims 63 to 76, wherein at least one of the first time period, the second time period, the third time period, or the fourth time period is determined based on one or more of:

a start time, an end time, and a duration length,
wherein the start time and/or the end time is an absolute time, or a count value determined based on Greenwich Mean Time;
the duration length is determined based on one or more of a specified time length, a timer and a duration.

78. The method of any one of claims 71 to 78, wherein the condition is for all cells, or is cell-specific.

79. The method of any one of claims 71 to 78, comprising any one of:

the condition related to network status, network capability, network type and/or NES information of the source base station or the source cell is the same for different terminal devices;
the condition related to network status, network capability, network type and/or NES information of the source base station or the source cell is the same for different source cells in any one of an OFF state, an NES state, a DTX ON state, a DTX OFF state, a DRX ON state and a DRX OFF state;
the condition related to network status, network capability, network type and/or NES information of the target base station or the target cell is different for different target cells;
the condition related to network status, network capability, network type and/or NES information of the target base station or the target cell is different for different target cells in any one of an OFF state, an NES state, a DTX ON state, a DTX OFF state, a DRX ON state and a DRX OFF state;
an available time, or a time capable of triggering HO, or a time selectable to hand over to the target cell, or a time capable of maintaining connection and/or performing transmission with the terminal device is different for different candidate target cells; or
the available time, or the time capable of triggering HO, or the time selectable to hand over to the target cell, or the time capable of maintaining connection and/or performing transmission with the terminal device is different for the source cell and a candidate target cell.

80. The method of any one of claims 70 to 79, wherein the HO configuration information further comprises at least one of:

HO configuration information of one or more candidate target cells, and/or
an execution condition/evaluation condition for each of the one or more candidate target cells; or
execution conditions/evaluation conditions for all of the one or more candidate target cells.

81. The method of any one of claims 70 to 80, wherein the HO configuration information comprises one or more sets of execution conditions/evaluation conditions; or, an execution condition/evaluation condition for the target cell has one or more sets of conditions, and the terminal device performs the cell HO or HO evaluation by using different execution conditions/evaluation conditions in different cases.

82. The method of any one of claims 70 to 81, further comprising:
sending, by the source base station or the source cell, first signaling to the terminal device through group signaling and/or a dedicated message, wherein the first signaling comprises one or more of the HO configuration information, an HO command, the first indication information, the second indication information, the third indication information and the fourth indication information.

83. The method of any one of claims 70 to 82, further comprising:

sending, by the source base station or the source cell, transmission mode configuration information to the terminal device, wherein the transmission mode configuration information is configured to indicate a transmission mode of first signaling or part of information of the first signaling,

wherein transmission modes of the first signaling corresponding to different terminal devices are different;

the first signaling comprises one or more of the HO configuration information, an HO command, the first indication information, the second indication information, the third indication information and the fourth indication information.

84. The method of claim 83, wherein the transmission mode of the first signaling comprises at least one of:

the source base station sends the first signaling or part of the information of the first signaling through group signaling;

the source base station sends the first signaling or part of the information of the first signaling through a dedicated message;

the source base station repeatedly sends the first signaling or part of the information of the first signaling through the group signaling; or

the source base station repeatedly sends the first signaling or part of the information of the first signaling through the dedicated message.

85. The method of claim 83 or 84, wherein the transmission mode configuration information comprises area configuration information and/or information about number of times of repeated transmissions;

the area configuration information is configured to indicate position information of the terminal device, or a position relationship and/or orientation relationship between the terminal device and the source base station or the source cell;

the information about number of times of repeated transmissions is configured to indicate a number of times of repeated receptions of the terminal device, or a number of times that information of the source base station is repeatedly sent, or a number of times that the source base station repeatedly sends the first signaling or part of the information of the first signaling.

86. The method of claim 85, wherein different area configuration information corresponds to different transmission modes.

87. The method of claim 86, wherein different area configuration information corresponding to different transmission modes comprises:
different area configuration information corresponding to different transmission modes comprises one or more of:

for a first area, the source base station or the source cell sends the first signaling or part of the information of the first signaling to the terminal device through group signaling;

for a second area, the source base station or the source cell sends the first signaling or part of the information of the first signaling to the terminal device through a dedicated message or through the group signaling and the dedicated message;

in case that the terminal device is in the first area or the area configuration information indicates that the terminal device is in the first area, the source base station or the source cell sends the first signaling or part of the information of the first signaling to the terminal device through the group signaling; and

in case that the terminal device is in the second area or the area configuration information indicates that the terminal device is in the second area, the source base station or the source cell sends the first signaling or part of the information of the first signaling to the terminal device through the dedicated message or through the group signaling and the dedicated message.

88. The method of any one of claims 85 to 87, wherein the area configuration information is determined based on one or more of:

a channel quality, path loss information, distance information and/or beam information between the terminal device and the source base station or the source cell; and/or

a channel quality, path loss information, distance information and/or beam information between the terminal device and the target base station or the target cell.

**89.** The method of any one of claims 85 to 88, wherein the information about number of times of repeated transmissions is the same for different terminal devices;
or,

the information about number of times of repeated transmissions is different for different terminal devices;
or,
the information about number of times of repeated transmissions is different for terminal device(s) in different areas.

**90.** The method of any one of claims 70 to 89, wherein the HO configuration information or transmission mode configuration information is further configured to indicate one or more of:

a group to which the terminal device belongs;
Downlink Control Information, DCI, of the group to which the terminal device belongs; and
Radio Network Temporary Identifier, RNTI, of the group to which the terminal device belongs.

**91.** The method of claim 90, wherein the transmission mode configuration information comprises area configuration information and information about number of times of repeated transmissions,
wherein the area configuration information is associated with the group to which the terminal device belongs, and/or the information about number of times of repeated transmissions is associated with the group to which the terminal device belongs.

**92.** The method of any one of claims 85 to 91, wherein the source base station or the source cell sends the first signaling or part of the information of the first signaling based on the area configuration information and/or the information about number of times of repeated transmissions.

**93.** The method of claim 92, wherein sending, by the source base station or the source cell, the first signaling or part of the information of the first signaling based on the area configuration information comprises:

sending, by the source base station or the source cell, the first signaling or part of the information of the first signaling based on a transmission mode corresponding to the area configuration information,
wherein in case that the area configuration information indicates that the terminal device is in a first area, the source base station or the source cell sends the first signaling or part of the information of the first signaling to the terminal device through group signaling;
in case that the area configuration information indicates that the terminal device is in a second area, the source base station or the source cell sends the first signaling or part of the information of the first signaling to the terminal device through a dedicated message or through the group signaling and the dedicated message.

**94.** The method of claim 92 or 93, wherein sending, by the source base station or the source cell, the first signaling or part of the information of the first signaling based on the information about number of times of repeated transmissions comprises at least one of:

in case that the transmission mode configuration information comprises the information about number of times of repeated transmissions, sending, by the source base station or the source cell, the first signaling or part of the information of the first signaling according to the information about number of times of repeated transmissions; or
in case that the transmission mode configuration information comprises the information about number of times of repeated transmissions, sending, by the source base station or the source cell, the first signaling or part of the information of the first signaling according to the information about number of times of repeated transmissions and the area configuration information and based on a transmission mode corresponding to the area configuration information and a number of times indicated by the information about number of times of repeated transmissions.

**95.** The method of any one of claims 82 to 94, further comprising: after the source base station or the source cell sends the first signaling or part of information of the first signaling to the terminal device through the group signaling,

determining, by the source base station or the source cell, a terminal device that has not performed the cell HO successfully, and/or a terminal device connected to the source cell, and/or a terminal device that has not handed over;
sending, by the source base station or the source cell through the dedicated message, an HO command or a Conditional Handover, CHO, command to the terminal device that has not performed the cell HO successfully, and/or the terminal device connected to the source cell, and/or the terminal device that has not handed over, or instructing, by the source base station or the source cell, the terminal device to perform HO through the dedicated message; or

sending, by the source base station or the source cell through the group signaling transmitted repeatedly, the HO command or the CHO command to the terminal device that has not performed the cell HO successfully, and/or the terminal device connected to the source cell, and/or the terminal device that has not handed over, or instructing, by the source base station or the source cell, the terminal device to perform the HO through the group signaling transmitted repeatedly.

96. The method of claim 95, wherein the terminal device that has not performed the cell HO successfully, and/or the terminal device connected to the source cell, and/or the terminal device that has not handed over are determined by the source base station or the source cell according to seventh indication information sent by a target base station or a target cell, the seventh indication information being configured to indicate a terminal device that has handed over successfully, or a terminal device that establishes connection with the target base station or the target cell, or a terminal device that has handed over to the target base station or the target cell.

97. The method of any one of claims 70 to 96, wherein the cell HO comprises Conditional Handover, CHO, and/or CHO-based HO.

98. A method for wireless communication, comprising:
sending, by a base station, fifth indication information to a terminal device, wherein the fifth indication information is used by the terminal device to perform at least one of cell access, access permission, cell selection, or cell reselection.

99. The method of claim 98, wherein:
the fifth indication information is configured to indicate whether one or more of a network, frequency point and cell allow a first terminal device to access/select/reselect, or whether the first terminal device is allowed to access one or more of the network, frequency point and cell.

100.
The method of claim 98 or 99, further comprising:
sending, by the base station, sixth indication information associated with an energy-saving technology, wherein the sixth indication information is configured to indicate whether one or more of a network, frequency point and cell allow a terminal device supporting the energy-saving technology associated with the sixth indication information to access/select/reselect, or whether the terminal device supporting the energy-saving technology associated with the sixth indication information is allowed to access one or more of the network/frequency point/cell.

101.
The method of claim 100, further comprising at least one of:

there are one or more sixth indication information; or
different sixth indication information is associated with different energy-saving technologies.

102.
The method of any one of claims 98 to 101, wherein the network, frequency point and cell are one or more of:

a network, frequency point and cell supporting energy-saving/network energy saving, NES;
a network, frequency point and cell allowing or identifying a first terminal device;
a network, frequency point and cell configured to implement energy-saving/NES;
any network, frequency point and cell;
a network, frequency point and cell not allowing a non-first terminal device; and
a network, frequency point and cell that the non-first terminal device is controlled to access or select.

103.
The method of any one of claims 98 to 102, wherein the network, frequency point and cell comprise one or more of:
the source base station, a serving base station, a current base station, an adjacent base station, a candidate target base station, a target base station, an inter-system base station, a present frequency point, a serving frequency point, a current frequency point, an adjacent frequency point, an intra-frequency point, an inter-frequency point, an inter-system frequency point, the source cell, a serving cell, a current cell, an adjacent cell, a candidate target cell, a target cell, an intra-frequency point cell, an inter-frequency point cell, and an inter-system cell.

**104.**

The method of any one of claims 98 to 103, comprising any one of:

allowing a first terminal device to access one or more of the network, frequency point and cell;
allowing the first terminal device to select one or more of the network, frequency point and cell;
allowing the first terminal device to reselect one or more of the network, frequency point and cell;
not allowing a non-first terminal device to access one or more of the network, frequency point and cell;
not allowing the non-first terminal device to select one or more of the network, frequency point and cell; or
not allowing the non-first terminal device to reselect one or more of the network, frequency point and cell.

**105.**

The method of any one of claims 98 to 104, wherein the base station does not configure parameters for cell access/selection/reselection to a non-first terminal device.

**106.**

The method of any one of claims 98 to 105, wherein the fifth indication information and/or the sixth indication information are carried through system information or radio resource control, RRC, signaling.

**107.**

A method for wireless communication, comprising:
sending, by a base station, first paging configuration information, wherein the first paging configuration information is used by a first terminal device to determine a first paging position.

**108.**

The method of claim 107, wherein the first paging configuration information comprises one or more of:

a position of a paging monitoring window;
a continuous monitoring time period;
a non-monitoring time period;
a position of the paging monitoring window in a first cycle;
a continuous monitoring time period in the first cycle; and
a non-monitoring time period in the first cycle,
wherein the first cycle comprises a cycle related to the terminal device, or a cycle related to a cell, or a cycle related to the base station.

**109.**

The method of claim 107 or 108, wherein the base station sends second paging configuration information, wherein the second paging configuration information is used by a second terminal device to determine a second paging position.

**110.**

The method of claim 109, wherein the second paging configuration information comprises one or more of:

a position of a paging monitoring window;
a continuous monitoring time period;
a non-monitoring time period;
a position of the paging monitoring window in a second cycle;
a continuous monitoring time period in the second cycle; and
a non-monitoring time period in the second cycle,
wherein the second cycle comprises a cycle related to the terminal device, or a cycle related to a cell, or a cycle related to the base station.

**111.** The method of any one of claims 107 to 110, further comprising:
sending, by the base station, a paging message to the first terminal device at the first paging position, wherein the first paging position is determined based on the first paging configuration information.

**112.**

The method of any one of claims 107 to 111, further comprising:

> denying, by the base station, a second terminal device to access;
> or,
> sending, by the base station, a paging message to the second terminal device at a second paging position, wherein the second paging position is determined based on the second paging configuration information.

**113.**

An apparatus for wireless communication, applied to a terminal device, comprising:
a receiving unit, configured to receive handover, HO, configuration information, wherein the HO configuration information comprises an HO configuration and/or a condition that a terminal device is required to meet to perform cell HO.

**114.**

An apparatus for wireless communication, applied to a terminal device, comprising:
a processing unit, configured to perform at least one of cell access, access permission, cell selection, or cell reselection according to fifth indication information.

**115.**

An apparatus for wireless communication, applied to a terminal device, comprising:
a receiving unit, configured to receive first paging configuration information, wherein the first paging configuration information is used by a first terminal device to determine a first paging position.

**116.**

An apparatus for wireless communication, applied to a base station, comprising:
a sending unit, configured to send handover, HO, configuration information, wherein the HO configuration information comprises an HO configuration and/or a condition that a terminal device is required to meet to perform cell HO.

**117.**

An apparatus for wireless communication, applied to a base station, comprising:
a sending unit, configured to send fifth indication information to a terminal device, wherein the fifth indication information is used by the terminal device to perform at least one of cell access, access permission, cell selection, or cell reselection.

**118.**

An apparatus for wireless communication, applied to a base station, comprising:
a sending unit, configured to send first paging configuration information, wherein the first paging configuration information is used by a first terminal device to determine a first paging position.

**119.**

A terminal device, comprising a memory, a processor and a transceiver,
wherein the transceiver is configured to implement communication with a base station, the memory has stored thereon a computer program executable on the processor, and the method of any one of claims 1 to 50 or any one of claims 51 to 61 or any one of claims 62 to 69 is implemented when the processor executes the program in combination with the transceiver.

**120.**

A base station, comprising a memory, a processor and a transceiver,
wherein the transceiver is configured to implement communication with a terminal device, the memory has stored thereon a computer program executable on the processor, and the method of any one of claims 70 to 97 or any one of claims 98 to 106 or any one of claims 107 to 112 is implemented when the processor executes the program in combination with the transceiver.

**121.**

A computer storage medium, having stored thereon one or more programs, wherein the one or more programs are executable by one or more processors, to implement the method of any one of claims 1 to 50 or any one of claims 51 to 61 or any one of claims 62 to 69.

**122.**

A computer storage medium, having stored thereon one or more programs, wherein the one or more programs are executable by one or more processors, to implement the method of any one of claims 70 to 97 or any one of claims 98 to 106 or any one of claims 107 to 112.

**123.**

A chip, comprising: a processor, configured to call and run a computer program from a memory, to enable a device mounted with the chip to perform the method of any one of claims 1 to 50 or any one of claims 51 to 61 or any one of claims 62 to 69.

**124.**

A chip, comprising: a processor, configured to call and run a computer program from a memory, to enable a device mounted with the chip to perform the method of any one of claims 70 to 97 or any one of claims 98 to 106 or any one of claims 107 to 112.

**125.**

A computer program product, comprising a computer storage medium that has stored thereon a computer program, the computer program comprising instructions executable by at least one processor, wherein the method of any one of claims 1 to 50 or any one of claims 51 to 61 or any one of claims 62 to 69 is implemented when the instructions are executed by the at least one processor.

**126.**

A computer program product, comprising a computer storage medium that has stored thereon a computer program, the computer program comprising instructions executable by at least one processor, wherein the method of any one of claims 70 to 97 or any one of claims 98 to 106 or any one of claims 107 to 112 is implemented when the instructions are executed by the at least one processor.

**127.**

A computer program, enabling a computer to perform the method of any one of claims 1 to 50 or any one of claims 51 to 61 or any one of claims 62 to 69.

**128.**

A computer program, enabling a computer to perform the method of any one of claims 70 to 97 or any one of claims 98 to 106 or any one of claims 107 to 112.

100

130

110

120

110

## FIG. 1

| Terminal device | Source base station | Target base station |

Operation 1: Configure measurement and report

Operation 2: Prepare for CHO

Operation 3: Send a CHO command

Operation 4: Access the target cell when the CHO condition is met

## FIG. 2

| Terminal device | | Source base station |
| --- | --- | --- |

Operations 110 and 120: HO configuration information, including an HO configuration and/or a condition that the terminal device is required to meet to perform cell HO

**FIG. 3**

**FIG. 4**

**FIG. 5**

NO
EP 4 661 499 A1

Area A      Area B

**FIG. 6**

First paging position

**FIG. 7**

f

Monitorable position

Non-
monitorable
position

Monitorable position

Non-
monitorable
position

|←——DRX cycle 1——*—— DRX cycle 1 ——*——DRX cycle 1——→|

t

f

|←———DRX cycle 2———*———DRX cycle 2———*———DRX cycle 2———→|

t

First paging
position

**FIG. 8**

Apparatus for wireless communication 900

901

Receiving unit

902

Processing unit

**FIG. 9**

Apparatus for wireless communication 1000

1001

Sending unit

**FIG. 10**

Communication device 1100

Memory
1120

Processor
1110

Transceiver
1130

**FIG. 11**

Chip 1200

Input interface
1230

Processor
1210

Memory
1220

Output interface
1240

**FIG. 12**

Communication system 1300

1310

Terminal device

1320

Base station

**FIG. 13**

## INTERNATIONAL SEARCH REPORT

| International application No. |
| --- |
| **PCT/CN2023/074022** |

**A.    CLASSIFICATION OF SUBJECT MATTER**

H04W 36/08(2009.01)i

According to International Patent Classification (IPC) or to both national classification and IPC

**B.    FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI; 3GPP: 选择, 重选, 切换, 配置, 触发, 网络能量节省, 源基站, 源小区, 目标基站, 目标小区, 寻呼, 寻呼位置, 监听窗, 时间段, 周期, selection, reselection, switch, handover, HO, CHO, configuration, trigger, NES, paging, position, window, occasion, period

**C.    DOCUMENTS CONSIDERED TO BE RELEVANT**

| Category* | Citation of document, with indication, where appropriate, of the relevant passages | Relevant to claim No. |
| --- | --- | --- |
| X | OPPO. "Discussion on Networkenergy Savings" *3GPP TSG-RAN WG2 #119bis-e, R2-2210019*, 30 September 2022 (2022-09-30), section 2 | 1-61, 70-106, 113, 114, 116, 117, 119-128 |
| X | OPPO. "Discussion on Cell Selection/reselection" *3GPP TSG-RAN WG2 #120 R2-2211955*, 04 November 2022 (2022-11-04), section 2 | 1-61, 70-106, 113, 114, 116, 117, 119-128 |
| X | WO 2022193134 A1 (GUANGDONG OPPO MOBILE TELECOMMUNICATIONS CORP., LTD.) 22 September 2022 (2022-09-22) description, page 4, line 42-page 13, line 4, and figures 2-7 | 62-69, 107-112, 115, 118-128 |
| A | CN 113271633 A (HUAWEI TECHNOLOGIES CO., LTD.) 17 August 2021 (2021-08-17) entire document | 1-128 |
| A | NOKIA et al. "Common Channel Updates for NES" *3GPP TSG-RAN WG2 Meeting #120 R2-2211966*, 04 November 2022 (2022-11-04), entire document | 1-128 |

☐ Further documents are listed in the continuation of Box C.　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 October 2023** | **23 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/074022**

| Patent document cited in search report | | | Publication date (day/month/year) | Patent family member(s) | Publication date (day/month/year) |
|---|---|---|---|---|---|
| WO | 2022193134 | A1 | 22 September 2022 | None | |
| CN | 113271633 | A | 17 August 2021 | None | |

Form PCT/ISA/210 (patent family annex) (July 2022)